(19) Europäisches Patentamt
European Patent Office
Office européen des brevets

(11) EP 3 715 398 A1

# (12) EUROPÄISCHE PATENTANMELDUNG

(43) Veröffentlichungstag:
**30.09.2020 Patentblatt 2020/40**

(21) Anmeldenummer: **19206679.3**

(22) Anmeldetag: **31.10.2019**

(51) Int Cl.:
***C08G 18/10*** (2006.01) ***C08G 18/16*** (2006.01)
***C08G 18/18*** (2006.01) ***C08G 18/20*** (2006.01)
***C08G 18/24*** (2006.01) ***C08G 18/28*** (2006.01)
***C08G 18/42*** (2006.01) ***C08G 18/48*** (2006.01)
***C08G 18/71*** (2006.01) ***C08G 18/75*** (2006.01)
***C08G 18/76*** (2006.01) ***C08G 18/79*** (2006.01)
***C09J 175/08*** (2006.01) *C08G 101/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.03.2019 EP 19165363**

(71) Anmelder: **PolyU GmbH**
**45141 Essen (DE)**

(72) Erfinder:
- **LANGERBEINS, Klaus**
  **45141 Essen (DE)**
- **SENZLOBER, Michael**
  **45141 Essen (DE)**

(74) Vertreter: **von Renesse, Dorothea et al**
**König-Szynka-Tilmann-von Renesse**
**Patentanwälte Partnerschaft mbB**
**Mönchenwerther Str. 11**
**40545 Düsseldorf (DE)**

## (54) METALL-SILOXAN-SILANOL(-AT)-VERBINDUNG ALS GELKATALYSATOR

(57) Die Erfindung bezieht sich auf die Verwendung mindestens einer Metall-Siloxan-Silanol(-at)-Verbindung zur selektiven Katalyse der Gelreaktion in einem System für die Herstellung von Polyurethanen, bevorzugt von ungeschäumten Polyurethanen, Weich- oder Hartschäumen und/oder im erfindungsgemäßen Zwei-Komponenten (2K)-System sowie Verfahren zur Herstellung geschäumter oder ungeschäumter Polyurethane, insbesondere Weich- oder Hartschäume sowie die Verwendung in CASE-Bereich (Beschichtungen, Klebstoffe, Dichtungen und Elastomere), Möbeln, Matratzen, Autositzen, Dichtungs- oder Akustikmaterialien, zur Isolation von Fernwärmerohren, Tanks und Pipelines sowie zur Herstellung aller Arten von Kühlmöbeln. In einem weiteren Aspekt bezieht sich die Erfindung auf ungeschäumte Polyurethane, Weich- und/oder Hartschäume jeweils hergestellt durch die erfindungsgemäße Verwendung mindestens einer Metall-Siloxan-Silanol(-at)-Verbindung zur selektiven Katalyse der Gelreaktion.

EP 3 715 398 A1

## Beschreibung

Die vorliegende Erfindung betrifft das Gebiet der Herstellung von Polyurethanen, insbesondere durch Zwei-Komponenten (2K)-Systeme, vorzugsweise die Herstellung ungeschäumter Polyurethane und/oder von Hart- und Weichschaumstoffen (PU-Schäume), und deren Anwendung in CASE-Bereichen (Beschichtungen, Klebstoffe, Dichtungen und Elastomere). Die Erfindung betrifft insbesondere die Verwendung eines Gelkatalysators in der Herstellung von Polyurethanen sowie ferner dessen Zusammensetzung und Verfahren zur Herstellung von Polyurethanen.

Eine der wichtigsten chemischen Reaktionen, die bei der Herstellung von Polyurethanen, insbesondere von Hart- und Weichschaumstoffen, Beschichtungen, Klebstoffen, Dichtungsmaterialien und Elastomeren (CASE), relevant sind, ist die Reaktion einer Isocyanat-haltigen Komponente mit einer Verbindung, die aktiven Wasserstoff enthält, wie bspw. es in Polyolen und/oder Wasser der Fall ist. Je nach Reaktionsverlauf und Katalysatorwahl kann die so genannte Gelreaktion (1) katalysiert werden. Die Urethan-Verknüpfung durch Reaktion einer Isocyanat-haltigen Komponente mit einer Isocyanatreaktiven Komponente (z. B. hydroxyfunktionalisiertes Polymer oder Polyol) erlaubt die Bildung von Polyurethanen.

$$\text{R-NCO} + \textbf{H}\text{O-R'} \rightarrow \text{R-N}\textbf{H}\text{-CO-OR'} \qquad \text{(Gelreaktion) (1)}$$

Die Reaktion einer Isocyanat-haltigen Komponente mit Wasser führt demgegenüber zur Bildung einer instabilen Carbamidsäure, die zu einem primären Amin und $CO_2$ zerfällt (2).

$$\text{R-NCO} + \textbf{H}\text{-OH} \rightarrow [\text{R-N}\textbf{H}\text{-CO-OH}] \rightarrow \text{R-NH2} + CO_2\uparrow \qquad \text{(Blasreaktion) (2)}$$

$$\text{R'-NH2} + \text{R-NCO} \rightarrow \text{R'-NH-CO-NH-R} \qquad (3)$$

Das gebildete primäre Amin reagiert mit einer Isocyanat-haltigen Komponente zu symmetrischen Harnstoffderivaten.

Diese Reaktion (2) wird als Blasreaktion bezeichnet. Das sich bildende $CO_2$ übernimmt hierbei die Funktion eines Treibgases, z. B. in der Herstellung von Polyurethanschaumstoffen bzw. Polyurethanschäumen.

Im Falle der Herstellung ungeschäumter Polyurethane ist diese Reaktion unerwünscht. Für den Fachmann ist es generell wünschenswert, Reaktionen und deren Verlauf kontrollieren zu können. Dies gilt grundsätzlich auch bei der Herstellung von Hart- und Weichschaumstoffen. Auch dort kann es vorteilhaft sein, die Blasreaktionen zu kontrollieren, sodass bspw. keine oder keine übermäßige oder unerwünschte Schäumung des Materials stattfindet.

Dem Fachmann sind vor allem organische Zinn-Komplexe, insbesondere Dibutylzinndilaurat (DBTL) sowie tertiäre Amine, insbesondere Triethylendiamin (DABCO (=TEDA)) Katalysatoren in der Polyurethan-Herstellung bekannt.

Ungewünschte Blasreaktionen können auch aufgrund der Restfeuchte in den Edukten (bspw. in Polyolen, Füllstoffen, Lösungsmitteln, Hilfsstoffen etc.) oder aufgrund der Umgebungsfeuchte im Herstellungs- und Aushärteprozess einsetzen. Es ist bekannt, dem durch den Einsatz von Wasserfängern bzw. Trocknungsmitteln zu begegnen. Der Einsatz von zusätzlichen - zumeist gesundheitlich bedenklichen - Rohstoffen wie Wasserfängern wie bspw. Vinyltrimethoxysilan (VTMO oder Dynasilan®) führt zu einer weiteren Erhöhung der Produktionskosten.

Aufgabe der Erfindung ist es demnach, ein verbessertes Verfahren zur Herstellung von Polyurethanen bereitzustellen.

Diese Aufgabe wird nach Anspruch 1 gelöst. Vorteilhafte Weiterentwicklungen sind Gegenstand der Unteransprüche oder der nebengeordneten Ansprüche.

Der Kern der Erfindung besteht darin, die neue und überraschende Kenntnis, dass Metall-Siloxan-Silanol(-at)-Verbindungen selektiv die Gelreaktion katalysieren, für die Herstellung von Polyurethanen zu verwenden, insbesondere von ungeschäumten Polyurethanen, Weich- oder Hartschäumen. Ein Aspekt der Erfindung ist somit die Verwendung von Metall-Siloxan-Silanol(-at)-Verbindungen als Gelkatalysator.

Im Kontext der vorliegenden Erfindung wird unter dem Begriff "Gelkatalysator" (oder "Gelierkatalysator") ein Katalysator verstanden, der im Vergleich mit der Blasreaktion bevorzugt die Gelreaktion (1) katalysiert, also die Urethan-Verknüpfung durch Reaktion einer Isocyanat-haltigen Komponente mit einer Isocyanat-reaktiven Komponente (hydroxyfunktionalisiertes Polymer oder Polyol). Die Ausbildung der Urethan-Bindung (R-NH-CO-OR') ist in Gegenwart mindestens einer Metall-Siloxan-Silanol(-at)-Verbindung demnach gegenüber der Ausbildung der Harnstoff-Bindung (R'-NH-CO-NH-R) bevorzugt.

Der Begriff "Selektivität" (oder "Gel-/Blasreaktions-Selektivität") beschreibt im Zusammenhang mit der vorliegenden Erfindung somit die Eigenschaft eines Katalysators, in welchem Maß er die Gelreaktion gegenüber der Blasreaktion bevorzugt katalysiert. Ist keine der Reaktionen bevorzugt, ist die Selektivität 1, d.h. das Verhältnis von Gelreaktion zu Blasreaktion liegt bei 1:1. Je größer der Wert, desto mehr katalysiert der Katalysator die Gelreaktion im Vergleich zur Blasreaktion.

In einer bevorzugten Ausführungsform der Erfindung weist die Metall-Siloxan-Silanol(-at)-Verbindung eine Selektivität von >1, vorzugsweise >5, besonders bevorzugt >10, weiter bevorzugt >30, ganz besonders bevorzugt >40 beträgt. Bevorzugte Metall-Siloxan-Silanol(-at)-Verbindungen werden unten genannt. Besonders bevorzugt sind die Metall-Siloxan-Silanol(-at)-Verbindungen nach Anspruch 17, insbesondere bevorzugt Verbindungen nach Anspruch Anspruch 18. In Anspruch 18 sind die Verbindungen TiPOSS und SnPOSS besonders bevorzugt.

Die Selektivität der Metall-Siloxan-Silanol(-at)-Verbindungen hat sich den Erfindern erstmals durch den Vergleich mit den vorbekannten Katalysatoren DBTL und DABCO gezeigt. In Vergleichsversuchen (Beispiel I unten) wurden Test-Zusammensetzungen (EP1-EP18) für ungeschäumte Polyurethane eingesetzt, die sich in ihrem Wasseranteil und dem jeweiligen Katalysator unterschieden. Die Erfinder haben dabei gefunden, dass bei Anwesenheit von TiPOSS die Blasreaktion erst bei einer im Vergleich zu den üblichen Katalysatoren höheren Wassermenge einsetzte. Das Einsetzen der Blasreaktion wurde durch das Aufschäumen (durch das entstandene gasförmige CO2↑) des Materials festgestellt. Das bedeutet, dass bei Verwendung von TiPOSS in der Herstellung von Polyurethanen innerhalb bestimmter Grenzen bei Anwesenheit von Wasser die Shore-Härte und die Dichte des Materials im Wesentlichen unverändert bleibt.

Die Selektivität von Katalysatoren für die Gelreaktion gegenüber der Blasreaktion bei der Herstellung von Polyurethanen kann durch einen Assay nach Beispiel I unten überprüft werden.

Zudem sind dem Fachmann Methoden zur Bestimmung der Selektivität von Katalysatoren in der Herstellung von Polurethanen bekannt, z.B. die in Beispiel III unten beschriebene Titrationsmethode nach Farkas (A. Farkas und K. G. Flynn, J. Am. Chem. Soc., 82, 642, 1960) oder die Methode nach R. van Maris et al. (J. Cel. Plastics, 41, 305-322, 2005). Die Titrationsmethode vergleicht die jeweilige Reaktion während einer standardisierten Umsetzung einer Isocyanat- mit einer Diol-Komponente (auch Alkohol) bei Anwesenheit verschiedener Katalysatoren.

Es gilt grundsätzlich, dass sich mit einer gezielteren Steuerung und Kontrolle der Gel- und/oder Blasreaktion die Eigenschaften der daraus resultierenden Polyurethane genauer einstellen lassen. So ermöglicht die erfindungsgemäße Verwendung von Metall-Siloxan-Silanol(-at)-Verbindungen z.B. in ungeschäumten Polyurethanen konstantere Dichten oder in geschäumten Polyurethanen erhöhte Zugfestigkeiten. Vorteilhafterweise kann zudem auf die Zugabe von Wasserfängern verzichtet werden, oder aber der Anteil von Wasserfängern reduziert werden, dass das Risiko einer ungewollten Blasreaktion mit der Selektivität des eingesetzten Katalysators für die Gelreaktion sinkt.

In einer besonders vorteilhaften Ausführungsform der Erfindung werden die Metall-Siloxan-Silanol(-at)-Verbindung(en) in der Herstellung ungeschäumter Polyurethane eingesetzt, insbesondere in der Herstellung von Elastomeren oder Duromeren. In einem Aspekt betrifft die Erfindung somit die Verwendung mindestens einer Metall-Siloxan-Silanol(-at)-Verbindung, insbesondere eines einkernigen metallisierten Silsesquioxans wie TiPOSS oder SnPOSS, für die Herstellung ungeschäumter Polyurethane, insbesondere für die Herstellung von Elastomeren oder Vergussmassen.

Im Kontext der Erfindung wird unter "ungeschäumtem Polyurethan" ein Polyurethan (auch "Polyurethanmaterial") verstanden, welches eine Dichte von ≥ 800 kg/m$^3$ aufweist. Ungeschäumte Polyurethane sind beispielsweise Elastomere und Duromere. Dabei kann es sich um Vergussmassen oder Giessysteme handeln.

In einer bevorzugten Ausführungsform weist das erfindungsgemäß hergestellte/herstellbare ungeschäumte Polyurethan einer Dichte im Bereich von ≥ 800 bis 2000 kg/m$^3$ auf, bevorzugt im Bereich von 950 bis 1750 kg/m$^3$, besonders bevorzugt im Bereich von 980 bis 1650 kg/m$^3$, ganz besonders bevorzugt im Bereich von 990 bis 1600 kg/m$^3$.

Die "Dichte" gibt das Verhältnis der Masse zu dem Volumen eines Werkstoffs wieder - also den Quotienten aus der Masse m eines Werkstoffs und seinem Volumen V. Erfindungsgemäß wird die Dichte von ungeschäumtem Polyurethan, insbesondere von Elastomeren und Vergussmassen, sowie von geschäumtem Polyurethan, insbesondere von Weich- und Hartschäumen, nach der DIN EN ISO 845:2009-10 bestimmt.

Die erfindungsgemäß herstellbaren ungeschäumten Polyurethane, vorzugsweise mit den Dichten wie oben beschrieben, weisen vorteilhafte Härten auf. Diese lassen sich mit den dem Fachmann bekannten Shore-Härten erfassen und definieren (siehe die Definitionen und Methoden dazu unten). Vorteilhafterweise weisen die ungeschäumten Polyurethane folgenden Härten auf:

- Shore00-Härte im Bereich von 40-100 auf, bevorzugt im Bereich von 45 bis 95, bevorzugt im Bereich von 50 bis 90, besonders bevorzugt im Bereich von 55 bis 85 und/oder.

- ShoreA-Härte im Bereich von 0-100 hervor, bevorzugt im Bereich von 5 bis 95, bevorzugt im Bereich von 10 bis 90, besonders bevorzugt im Bereich von 15 bis 85 und/oder

- ShoreD-Härte im Bereich von 0-100 hervor, bevorzugt im Bereich von 5 bis 95, bevorzugt im Bereich von 10 bis 90, besonders bevorzugt im Bereich von 15 bis 85.

Die "Shore-Härte" ist ein Werkstoffkennwert z.B. für Elastomere oder Kunststoffe. Sie steht in direkter Beziehung zur Eindringtiefe eines Körpers in das zu prüfende Material und ist somit ein Maß für dessen Härte. Als Eindringkörper (Indenter) wird ein federbelasteter Stift aus gehärtetem Stahl verwendet. Bei diesen Verfahren wird der jeweilige Indenter

mit einer Federkraft in den Prüfkörper gedrückt. Die Eindringtiefe stellt somit ein Maß für die Shore-Härte dar. Das Verfahren zur Prüfung variiert je nach Kraft und Probenkopf und lässt sich unter anderem in die Shore-Härten Shore00, Shore A und ShoreD ausdrücken. Erfindungsgemäß werden die Shore-Härten, ob Shore00-, ShoreA- oder ShoreD-Härte, nach der Norm ASTM D2240-15 bestimmt.

Wie ausgeführt, lassen sich erfindungsgemäß vorzugsweise ungeschäumte Polyurethane, insbesondere Elastomere und Duromere, zum Beispiel Vergussmassen und/oder Gießsysteme herstellen.

Elastomere zeichnen sich im Allgemeinen durch ihre formfesten, aber elastisch verformbaren Haptiken aus. Bei Zug- und Druckbelastung verformen sich Elastomere, finden aber nach der jeweiligen Belastung wieder in ihre ursprüngliche, unverformte Gestalt zurück. Elastomere finden unter anderem Verwendung als Material für Reifen, Gummibänder, Dichtungsringe, etc.

Vergussmassen, insbesondere Polyurethan-Vergussmassen, werden in der Fachwelt unter anderem zum Vergießen oder Verkapseln von Bauteilen und Geräten verwendet. Ihre gute Flexibilität, sogar bei niedrigen Temperaturen, die exzellente Wasserbeständigkeit und die große Bandbreite an möglichen Härte-Optionen machen Vergussmassen aus Polyurethan ideal für empfindliche Bauteile und/oder komplexe Geometrien. Erfindungsgemäß liegen die Shore 00/A/D-Härten sowie Dichten für Vergussmassen in den oben genannten Bereichen für Gießsysteme.

Gießsysteme werden aufgrund ihrer hohen Temperatur- und Chemikalienbeständigkeit überwiegend in Kleb- und Dichtstoffsystemen eingesetzt. Gießsysteme sind lösungsmittelarme oder -freie, nicht schäumende 2-Komponenten-Vergussmassen auf Polyurethanbasis.

Erfindungsgemäß werden in einer Ausführungsform vorzugsweise gefüllte Gießsysteme hergestellt. Diese können vorzugsweise einen Füllstoffgehalt von 5 und 70 %, ShoreA- bzw. ShoreD-Härten von 90 und Dichten zwischen 1,1 bis 1,8 g/cm$^3$ aufweisen. Ungefüllte Gießsysteme (Füllstoffgehalt = 0 %) haben vorzugsweise eine ShoreA-Härte von 10, eine ShoreD-Härte von 90 sowie eine Dichte von 0,85 bis 1,2 g/cm$^3$.

Nach einem weiteren Aspekt der Erfindung wird die Metall-Siloxan-Silanol(-at)-Verbindung vorteilhafterweise in der Herstellung geschäumter Polyurethane eingesetzt. Die so hergestellten Polyurethane weisen vorzugsweise vorteilhafte Zugfestigkeiten auf. So haben die Erfinder in Vergleichsversuchen mit herkömmlichen Katalysatoren nach Beispiel II (DS1-DS15) und (HS1-HS2) gefunden, dass unter Verwendung von TiPOSS geschäumte Polyurethane mit erhöhten Zugfestigkeiten herstellbar sind. Nach diesem Aspekt der Erfindung wird daher mindestens eine Metall-Siloxan-Silanol(-at)-Verbindung, insbesondere mindestens ein einkerniges metallisiertes Silsesquioxan wie TiPOSS oder Sn-POSS, für die Herstellung geschäumter Polyurethane mit erhöhten Festigkeiten, insbesondere von Weich- und/oder Hartschäumen, eingesetzt.

Im Kontext der Erfindung bezeichnet "geschäumtes Polyurethan" ein Polyurethan mit einer Dichte von $\leq$ 800 kg/m$^3$. In der Herstellung von geschäumten Polyurethanen wird optional zusätzlich zum Gelkatalysator ein Blaskatalysator verwendet. In der Herstellung von geschäumten Polyurethanen stammt das Treibmittel entweder aus der Reaktion (in-situ) oder aus einer externen Quelle (externe Gaszufuhr bspw. durch eine Gaskartusche).

"Treibmittel" ist ein gasförmiger oder ein Gas freisetzener Stoff oder eine Stoffzusammensetzung, der einer Zusammensetzung beigefügt wird, um darin bei der weiteren Verarbeitung Poren zu generieren. Der Einsatz von Treibmitteln dient also dazu, einem anderen Material eine gewünschte Porösizität zu verleihen oder die Materialdichte zu reduzieren. Ein Treibmittel kann in-situ z.B. durch Reaktion zweier Stoffe, wie in der Blasreaktion durch die Reaktion einer Isocyanat-haltigen Komponente mit Wasser (hier: gasförmiges $CO_2\uparrow$), gebildet oder alternativ aus einer externen Quelle dem Material zugeführt werden. Ein Beispiel für letzte Variante ist das Zuführen eines Gases, z.B. $CO_2$, $N_2$, Ar, $H_2$, $O_2$ oder sonstige Gase oder Mischungen davon, bspw. durch Gaskartuschen und/oder Einleitungsrohre oder-düsen. Ein "Treibgas" ist ein Treibmittel.

In dieser erfindungsgemäßen Verwendung der Metall-Siloxan-Silanol(-at)-Verbindung hat sich gezeigt, dass sich die derart hergestellten Schäume, insbesondere Weich- und Hartschäume, durch eine gleichmäßige Porenstruktur auszeichnen. Die Hartschäume zeigen außerdem eine feinzellige bzw. feinporige Verteilung der Hohlräume im Material. Dies hat vorteilhafte Eigenschaften bezüglich der Wärmeleitfähigkeit zur Folge. Die Erfindung betrifft in einem Aspekt daher auch die Herstellung von Schäumen für die Bereitstellung von Materialien für die Wärmedämmung.

In einer bevorzugten Ausführungsform dieser erfindungsgemäße Verwendung der Metall-Siloxan-Silanol(-at)-Verbindung können vorzugsweise geschäumte Polyurethane einer Dichte im Bereich von 100 bis 900 kg/m$^3$ hervor, bevorzugt im Bereich von 150 bis 850 kg/m$^3$, besonders bevorzugt im Bereich von 200 bis 750 kg/m$^3$, ganz besonders bevorzugt im Bereich von 200 bis 650 kg/m$^3$ erzeugt werden.

Vorzugsweise können erfindungsgemäß geschäumte Polyurethane mit den folgenden Shore-Härten erhalten (Definitionen wie oben) hergestellt werden:

- Shore00-Härte im Bereich von 10-100 hervor, bevorzugt im Bereich von 10 bis 90, bevorzugt im Bereich von 20 bis 80, besonders bevorzugt im Bereich von 35 bis 75 und/oder

- ShoreA-Härte im Bereich von 0-100 hervor, bevorzugt im Bereich von 20 bis 95, bevorzugt im Bereich von 20 bis

60, besonders bevorzugt im Bereich von 20 bis 50 und/oder

- ShoreD-Härte im Bereich von 0-90 hervor, bevorzugt im Bereich von 10 bis 90, bevorzugt im Bereich von 20 bis 80, besonders bevorzugt im Bereich von 35 bis 75.

Die erfindungsgemäße Verwendung der Metall-Siloxan-Silanol(-at)-Verbindung erfolgt in einem weiteren Aspekt der Erfindung insbesondere zur Herstellung von Weichschäumen. Weichschäume haben typischerweise eine lange Lebensdauer, ein gutes Rückstellvermögen sowie weisen eine gute Verformbarkeit auf. Die Dichte von erfindungsgemäß hergestellten/herstellbaren Weichschäumen variiert zwischen etwa 5 und 650 $kg/m^3$, und die von Blockschäumen zwischen 25 bis 300 $kg/m^3$.

In einer besonderen vorteilhaften Ausführungsform wird nach der Erfindung ein Weichschaum mit einer ShoreA-Härte von ≥ 20 erzeugt. Insbesondere bevorzugt ist die Herstellung eines Weichschaums mit einer ShoreA-Härte zwischen 20 und 100, bevorzugt zwischen 20 und 60, besonders bevorzugt zwischen 20 und 50.

Die erfindungsgemäß herstellbaren/hergestellten Weichschäume weisen vorteilhafterweise eine Zugfestigkeit von ≥ 200 kPa auf. Insbesondere bevorzugt sind Weichschäume mit einer Zugfestigkeit zwischen 200 und 350 kPa. Die Zugfestigkeit sowie Methoden zu deren Bestimmung sind unten definiert. Sie sind dem Fachmann bekannt.

In einer besonders bevorzugten Ausführungsform der Erfindung weisen die Weichschäume eine ShoreA-Härte zwischen 20 und 50 und eine Zugfestigkeit zwischen 200 und 350 kPa auf.

In einer weiteren vorteilhaften Ausführungsform wird die Metall-Siloxan-Silanol(-at)-Verbindung als Katalysator für die Herstellung von Polyurethan-Hartschäumen eingesetzt. Hartschäume zeichnen sich in der Regel durch eine lange Lebensdauer, hohe Form- und Dimensionsstabilität sowie durch niedrige Wärmeleitfähigkeiten und niedrige Forminnendrücke aus.

Die erfindungsgemäße Verwendung der Metall-Siloxan-Silanol(-at)-Verbindung kann insbesondere zur Herstellung von Hartschäumen einer Dichten im Bereich von 25 bis 900 $kg/m^3$ eingesetzt werden. Diese Schäume dienen vorzugsweise der Wärmedämmung z.B. in Gebäuden, Kühlgeräten, Wärme- und Kältespeichern sowie einigen Rohrsystemen (Kunststoffmantelverbundrohr, flexible Verbundrohre). Die erfindungsgemäße Verwendung betrifft in diesem Aspekt daher die Herstellung von Dämmaterial.

In einer bevorzugten Ausführungsform weisen die Hartschäume eine ShoreD-Härte von ≥ 10 auf. Weiter bevorzugt liegt die ShoreD-Härte zwischen 15 und 100, vorzugsweise zwischen 20 und 95, ganz besonders bevorzugt zwischen 25 und 90.

In einer weiteren bevorzugten Ausführungsform weisen die Hartschäume eine Zugfestigkeit von ≥ 100 kPa auf, insbesondere von 200 und 2000 kPa. Vorzugsweise liegt die Zugfestigkeit dabei bei ≥ 350 kPa.

Es ist ganz besonders bevorzugt, die Metall-Siloxan-Silanol(-at)-Verbindung zur Herstellung von Hartschäumen einer ShoreD-Härte zwischen 25 und 90 und einer Zugfestigkeit zwischen 350 und 2000 kPa einzusetzen.

"Zugfestigkeit" ist ein Festigkeitskennwert eines Werkstoffs. Die Zugfestigkeit beschreibt die maximale mechanische Zugspannung, die ein Werkstoff aushält. Bei Überschreiten der Zugfestigkeit bricht, zerreißt oder zerspringt der Werkstoff. Die Dimension für die Zugfestigkeit ist Kraft pro Fläche - die verwendeten Maßeinheiten sind $N/mm^2$ oder kPa bzw. MPa. Die Messmethode zur Bestimmung der Zugfestigkeit bzw. Bruchdehnung sind dem Fachmann bekannt. Sie können für Weichschäme vorzugsweise nach DIN EN ISO 1798:2008-04 und für Hartschäume nach ISO 1926:2009-12 durchgeführt werden.

In einer besonders bevorzugten Ausführungsform wird mindestens eine Metall-Siloxan-Silanol(-at)-Verbindung zur selektiven Katalyse der Gelreaktion in einem Zwei-Komponenten (2K)-System verwendet. Das (2K)-System umfasst dabei eine Komponente A und eine Komponente B. Komponente A umfasst mindestens ein hydroxyfunktionalisiertes Polymer. Komponente B umfasst mindestens eine ein oder mehrere Isocyanat-Gruppen aufweisende Verbindung. Die Metall-Siloxan-Silanol(-at)-Verbindung(en) kann/können in je einer der beiden Komponenten oder in beiden Komponenten formuliert bzw. vorgelegt werden. Vorzugsweise wird/werden die Metall-Siloxan-Silanol(-at)-Verbindung(en) mit der Komponente A formuliert bzw. vorgelegt.

Aus der von den Erfindern gefundenen Selektivität der Metall-Siloxan-Silanol(-at)-Verbindungen für die Gelreaktion folgt des Weiteren, dass die Metall-Siloxan-Silanol(-at)-Verbindungen eine Reduktion oder den Verzicht von zusätzlich zugesetzten Wasserfängern ermöglichen. Hieraus ergeben sich wiederum die Schonung von Ressourcen sowie eine Kostensenkung durch Materialeinsparung. Im Weiteren erlaubt die erfindungsgemäße Verwendung den Einsatz von Rohstoffen, welche keine besondere oder zusätzliche Trocknung durchlaufen mussten. Darüber hinaus sind durch die erfindungsgemäße Verwendung die betroffenen Mischungen lagerstabiler.

Durch die Verwendung mindestens einer Metall-Siloxan-Silanol(-at)-Verbindung zur selektiven Katalyse der Gelreaktion in einem System für die Herstellung von Polyurethanen kommt es zu einer Verminderung ungewollter bzw. unkontrollierter Nebenreaktionen (bspw. der Blasreaktion). Die Produktausbeute ist bei der erfindungsgemäßen Verwendung ohne störende Nebenreaktionen demnach größer.

Überraschenderweise benötigen Reaktionsmischungen unter erfindungsgemäßer Verwendung des Blaskatalysators keine weiteren bzw. zusätzlichen Katalysatoren zur Aushärtung in Herstellung von Polyurethanen. Die Verwendung des erfindungsgemäßen Gelkatalysators ermöglicht daher die Reduktion oder sogar den gänzlichen Verzicht von zinnhaltigen (Gel-)Katalysatoren und/oder Amin-Katalysatoren.

Zusätzlich zur Einsparung von Wasserfängern sowie weiteren Katalysatoren können auch Isocyanat-haltige Verbindungen eingespart werden, da diese durch die erfindungsgemäße Verwendung nicht länger in einem erhöhten Überschuss (über die benötigte Reaktionsstöchiometrie hinaus) zugeben werden müssen. Sie dienen bisweilen im Stand der Technik auch als Wasserfänger sowie der Aufrechterhaltung der Stabilität und Reaktivität von Reaktionsmischungen zur Herstellung von Polyurethanen.

In einem weiteren Aspekt der Erfindung kann so die Verwendung gesundheitsschädlicher Stoffe allgemein weiter reduziert und die Anwendung beim Endkunden verbraucherfreundlicher gestaltet werden.

"Wasserfänger" sind erfindungsgemäß Verbindungen oder Stoffe, die zu einer Mischung aus Bestandteilen zugegeben wird, mit dem Zweck selbst mit Wasser (ab)zureagieren oder Wasser zu binden. Die Zugabe von Wasserfängern vermeidet in der Hauptanwendung das unerwünschte Vorhandensein von Wasser, bspw. aufgrund problematischer oder ungewollter Reaktionen von Wasser mit weiteren Mischungsbestandteilen.

Durch die hohe Selektivität gepaart mit einer hohen katalytischen Aktivität der Metall-Siloxan-Silanol(-at)-Verbindungen in der Verwendung zur selektive Katalyse der Gelreaktion für die Herstellung von Polyurethanen (PU) kann der Katalysatoreinsatz auch insgesamt reduziert werden. Je nach verwendeten Edukten und Reaktionsführung zur Herstellung von Polyurethanwerkstoffen können die benötigten Katalysatormengen im Bereich von 10 bis 75000 ppm, vorzugsweise im Bereich von 15 bis 10000 ppm oder im Bereich von 20 bis 5000 ppm liegen.

Im Sinne der Erfindung handelt es sich bei "Polyurethanen", auch um Polyurethanmaterialen, Polyurethanwerkstoffe oder Polyurethan-Systeme oder Polymere umfassend Urethan-Verknüpfungen. Alternativ wird ebenfalls die Abkürzung "PU" für Polyurethan verwendet. Polyurethane werden allgemein gebräuchlich sowie erfindungsgemäß in ungeschäumt und geschäumt unterteilt.

"Urethan-Verknüpfung" oder auch "Urethan-Bindung" wird erfindungsgemäß für die sich in der Herstellung von Polyurethanen bildenden Urethan-Einheiten bzw. -Gruppen verwendet. Die Urethan-Einheit bzw. -Gruppe selbst ist hier fett dargestellt R-**NH-CO-O**R'. Diese kann bspw. durch eine Reaktion bzw. Verknüpfung einer Isocyanat-Gruppe (-N=C=O) in einer Isocyanat-haltigen Verbindung mit einer Hydroxygruppe (-OH) in einem hydroxyfunktionalisierten Polymer oder Polyol entstehen.

Isocyanatreaktive Verbindungen sind erfindungsgemäß solche, die mit einem Isocyanat reagieren können. Diese Verbindungen können eine oder mehrere NH-, OH- oder SH-Funktionen aufweisen.

Zu den isocyanatreaktiven Verbindungen zählt insbesondere die Klasse der hydroxyfunktionellen Verbindungen. Polyole sind hydroxyfunktionelle Verbindungen, insbesondere hydroxyfunktionelle Polymere. Geeignete Polyole für die Herstellung von Polyurethanpolymeren sind insbesondere Polyetherpolyole, Polyesterpolyole und Polycarbonatpolyole sowie Mischungen dieser Polyole.

"Polyether" stellen eine Klasse der Polymere dar. Sie sind langkettige Verbindungen umfassend mindestens zwei gleiche oder unterschiedliche Ethergruppen. Erfindungsgemäß wird auch von Polyethern gesprochen, wenn die polymeren Ethergruppen durch andere Gruppe unterbrochen sind (z. B. durch einpolymerisierte/eingebaute Isocyanate oder weitere Polymer- oder Oligomereinheiten anderer Monomerherkunft).

"Polymere" sind chemische Verbindungen aus Ketten- oder verzweigten Molekülen (Makromolekülen), die ihrerseits aus einer Anzahl von gleichen/gleichartigen oder auch ungleichen Einheiten, den so genannten Monomeren bestehen. Polymere umfassen dabei auch Oligomere. Oligomere sind Polymere, welche eine kleinere Anzahl von Einheiten aufweist. Sofern nicht ausdrücklich anderweitig definiert, fallen erfindungsgemäß Oligomere unter die Begrifflichkeit der Polymere. Polymere können als Homopolymere (= bestehen aus nur einer Monomereinheit), Copolymere (= bestehen aus zwei oder mehreren Monomereinheiten) oder als Polymermischung (= Polymerlegierung, Polymerblends, also Mischungen aus unterschiedlichen Polymeren und Copolymeren) vorkommen.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Pentaerythrit, Sorbitol, Zucker, Dipentaerythrit, Glycerin, Anilin, sowie Mischungen der genannten Verbindungen.

Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Doppelmetall-Cyanidkomplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30000 g/mol, sowie Polyoxyethylendiole, Polyoxyethylentriole, Polyoxypropylendiole und Polyoxypropylentriole mit einem Molekulargewicht von 200 bis 20000 g/mol. Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole. Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte. Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden. Insbesondere geeignet sind Polyesterpolyole, welche hergestellt sind aus zwei bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton. Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caproiacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole. Darüber hinaus können Polycarbonatdiole oder Polyether-Polycarbonatdiole über eine Polymerisation von Propylenoxid mit $CO_2$ erhältlich sein.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Rizinusöl, oder durch chemische Modifizierung von natürlichen Fetten und Ölen gewonnene, so genannte oleochemische, Polyole, die beispielsweise durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können. Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden können.

Diese ebenfalls besonders bevorzugten Polyole können ein mittleres Molekulargewicht von 250 bis 40000 g/mol aufweisen, insbesondere von 1000 bis 30000 g/mol, und eine mittlere OH-Funktionalität im Bereich von 1,6 bis 6 auf.

Besonders geeignete Polyole sind Polyesterpolyole und Polyetherpolyole, insbesondere Polyoxyethylenpolyol,

Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Verwendung des erfindungsgemäßen Gelkatalysators in der Herstellung von Polyurethanen, insbesondere von ungeschäumten Polyurethanen und/oder in ein erfindungsgemäßen Zwei-Komponenten (2K) Systemen mitverwendet werden.

Isocyanat-haltige Verbindungen (Iso) weisen mindestens eine NCO-Gruppe (= Isocyanat-Gruppe) auf. Es kann zwischen den Monoisocyanaten (z = 1) und den Di- und Polyisocyanaten (z = $\geq$ 2) unterschieden werden. Die NCO-Gruppen können beispielsweise mit Alkoholen zu Urethanen oder mit Aminen zu Harnstoffderivaten reagieren. Die erfindungsgemäßen Isocyanathaltigen Verbindungen können durch die allgemeine Formel (VI) beschrieben werden.

$$R^x\{N{=}C{=}O)_z \qquad (VI),$$

wobei

- $R^x$ eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte C1- bis C20-Alkylgruppe, eine optional substituierte, geradkettige oder verzweigte C2- bis C20-Alkenylgruppe oder eine optional substituierte, geradkettige oder verzweigte C2- bis C20-Alkinylgruppe, eine optional substituierte C4- bis C14-Cycloalkylgruppe oder eine optional substituierte C4- bis C14-Arylgruppe bedeutet, ganz besonders bevorzugt Diphenylmethan, Toluol, Dicylohexylmethan, Hexan oder Methyl-3,5,5-trimethylcyclohexyl bedeutet,
- z mindestens 1 ist, bevorzugt mindestens 1, 2 oder 3 ist, besonders bevorzugt 1, 2 oder 3 ist.

Mit der Bezeichnung "Metall-Siloxan-Silanol(-at)" werden alle Metall-Siloxan Verbindungen bezeichnet, die entweder eine oder mehrere Silanol- und/oder Silanolat-Gruppen enthalten. In einer Ausführungsform der Erfindung ist es ebenfalls möglich, dass ausschließlich Metall-Siloxan-Silanolate vorliegen. Solange nicht im Einzelnen zwischen diesen unterschiedlichen Konstellationen differenziert wird, sind alle Kombinationen eingeschlossen. Im Folgenden werden die soeben beschriebenen Metall-Siloxan-Silanol(-at)-Verbindungen (= Metall-Siloxan-Silanol/Silanolat-Verbindungen) auch als oligomere Metallo-Silsesquioxane, "POMS", Metall-Silsesquioxane oder metallisierte Silsesquioxane bezeichnet. Die Termini werden folgend austauschbar verwendet.

"Alkoxy" bezeichnet eine Alkylgruppe, die über ein Sauerstoffatom mit der Hauptkohlenstoffkette bzw. dem Hauptgerüst der Verbindung verbunden ist.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist. P bezeichnet insbesondere Phosphor, sofern nichts anderes angegeben ist. C bezeichnet insbesondere Kohlenstoff, sofern nichts anderes angegeben ist. H bezeichnet insbesondere Wasserstoff, sofern nichts anderes angegeben ist. Si bezeichnet insbesondere Silizium, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, Iod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

Mit der Bezeichnung "Alkylgruppe" ist eine gesättigte Kohlenwasserstoffkette gemeint. Alkylgruppen weisen insbesondere die allgemeine Formel $-C_nH_{2n+1}$ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, Propyl-, Butyl-, Isopropyl-, iso-Butyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen, die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel $-C_nH_{2n-1}$ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Arylgruppen" bezeichnen monocyclische (z. B. Phenyl-), bicyclische (z. B. Indenyl-, Naphthalenyl, Tetrahydronapthyl, oder Tetrahydroindenyl) und tricyclische (z. B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht speziell angegeben ist.

Gemäß einer Ausführungsform der Erfindung enthält ein erfindungsgemäßes System, insbesondere ein Zwei-Komponenten (2K) System mindestens eine Metall-Siloxan-Silanol(-at)-Verbindung, wobei die Metall-Siloxan-Silanol(-at)-Verbindung dabei mit einem Gewichtsanteil im Bereich von 0,001 bis 5 %, bevorzugt im Bereich von 0,002 bis 1 %, besonders bevorzugt im Bereich von 0,003 bis 0,5 % vorliegt, jeweils bezogen auf das Gesamtgewicht der Reaktionsmischung. Die erfindungsgemäßen Zwei-Komponenten (2K) Systeme enthalten Metall-Siloxan-Silanol(-at)-Verbindung(en) in molaren Konzentrationen im Bereich von 0,00001 bis 0,06 mol/kg, bevorzugt im Bereich von 0,00002 bis 0,01 mol/kg, besonders bevorzugt im Bereich von 0,00003 bis 0,06 mol/kg, jeweils bezogen auf das Gesamtgewicht der Reaktionsmischung, hergestellt wurden.

Unter "Reaktionsmischung" wird erfindungsgemäß die Gesamtzusammensetzung eines Systems, insbesondere eines Zwei-Komponenten (2K) Systems, also die Summe aus Komponente A und B sowie Gelkatalysator und optional weiteren Katalysatoren, Hilfsstoffen und Bestandteilen verstanden. Das Resultat einer Reaktionsmischung ist nach erfolgter Reaktion ein Polyurethan.

Die Metall-Siloxan-Silanol(-at)-Verbindung kann in einer Ausführungsform der vorliegenden Erfindung als Monomer, Oligomer und/oder Polymer zur Herstellung von Polyurethanen der vorliegen, wobei der Übergang von Oligomeren zu Polymeren gemäß der allgemeinen Definition fließend ist.

Vorzugsweise ist das Metall beziehungsweise sind die Metalle in der oligomeren und/oder polymeren Metall-Siloxan-Silanol(-at)-Verbindung endständig und/oder innerhalb der Kette vorhanden.

In der erfindungsgemäßen Verwendung zur Herstellung von Polyurethanen, bevorzugt von ungeschäumten Polyurethanen, Weich- oder Hartschäumen und/oder im erfindungsgemäßen Zwei-Komponenten (2K)-System ist die kettenförmige Metall-Siloxan-Silanol(-at)-Verbindung linear, verzweigt und/oder ein Käfig.

In einer bevorzugten erfindungsgemäßen Verwendung zur Herstellung von Polyurethanen, bevorzugt von ungeschäumten Polyurethanen, Weich- oder Hartschäumen und/oder im erfindungsgemäßen Zwei-Komponenten (2K)-System weist die kettenförmige Metall-Siloxan-Silanol(-at)-Verbindung eine Käfigstruktur auf.

Unter einem "Käfig" oder einer oligomeren oder polymeren "Käfigstruktur" wird im Sinne der Erfindung eine dreidimensionale Anordnung der kettenförmigen Metall-Siloxan-Silanol(-at)-Verbindung verstanden, wobei einzelne Atome der Kette die Eckpunkte einer vielflächigen Grundstruktur der Verbindung bilden. Hierbei werden durch die miteinander verknüpften Atome mindestens zwei Flächen aufgespannt, wobei eine gemeinsame Schnittmenge entsteht. In einer Ausführungsform der Verbindung bildet sich beispielsweise eine würfelförmige Grundstruktur der Verbindung aus. Eine Einkäfig-Struktur oder auch singulär vorliegende Käfig-Struktur, also eine Verbindung, die sich über einen vereinzelt vorliegenden Käfig definiert, stellt die Struktur (IVc) dar. Verbindungen, welche innerhalb der Verbindung mehrere Käfige aufweisen können durch die Verbindungen (I) sowie (Ia) bis (Id) beschrieben werden. Ein Käfig kann erfindungsgemäß "offen" oder auch "geschlossen" vorliegen. Je nachdem ob alle Eckpunkte so verbunden, verknüpft oder koordiniert sind, dass eine geschlossene Käfigstruktur entsteht. Ein Beispiel für einen geschlossenen Käfig stellen die Strukturen (II), (IV), (IVb), (IVc).

Der Begriff "kernig" schreibt erfindungsgemäß die Kernigkeit einer Verbindung, wie viele Metall-Atome darin enthalten sind. Eine einkernige Verbindung weist ein Metall-Atom auf, eine mehr- bzw. zweikernige Verbindung hingegen

zwei Metall-Atome innerhalb einer Verbindung auf. Die Metalle können dabei direkt miteinander verbunden sein oder über ihre Substituenten verknüpft. Ein Beispiel für eine erfindungsgemäße einkernige Verbindung stellen z. B. die Strukturen (IV), (IVb), (IVc), (Ia) (Ib) oder (Ic) dar; eine zweikernige Verbindung stellt Struktur (Id) dar.

Eine einkernige Einkäfig-Struktur stellen die Metall-Siloxan-Silanol(-at)-Verbindungen (IV), (IVb) und (IVc) dar. Einkernige Zweikäfig-Strukturen sind z. B. die Strukturen (Ia), (Ib) oder (Ic).

Bevorzugt umfasst die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System ein oligomeres Metall-Silsesquioxan.

Insbesondere umfasst die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System ein polyhedrales Metall-Silsesquioxan.

In einer Ausführungsform weißt die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System die allgemeine Formel $R^*_qSi_rO_sM_t$ auf, wobei jeder R* unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl),
jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2. 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

In einer weiteren Ausführungsform weißt die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System die allgemeine Formel $R^\#_4Si_4O_{11}Y_2Q_2X_4Z_3$ auf, wobei jedes X unabhängig voneinander ausgewählt ist aus der Gruppe bestehend aus Si, $M^1$, $-M^3L^1_\Delta$, $M^3$, oder $-Si(R^8)-O-M^3L^1_\Delta$, wobei $M^1$ und $M^3$ unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei $L^1$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
jedes Z unabhängig voneinander ausgewählt ist aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl;
jedes $R^\#$, $R^5$, $R^6$ und $R^7$ unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; jedes Y unabhängig voneinander $-O-M^2-L^3_\Delta$ bedeutet, oder zwei Y zusammengenommen sind und zusammen $-O-M^2(L^3_\Delta)-O-$ oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und jedes $M^2$ unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, jedes Q unabhängig voneinander H, $M^4L^4_\Delta$, $-SiR^8$, $-M^3L^1_\Delta$, eine Einfachbindung verknüpft mit $M^3$ von X oder eine Einfachbindung verknüpft mit dem Si-Atom des Rests

$-Si(R^8)-O-M^3L^1_\Delta$ bedeutet, wobei $M^3$, $R^8$ und $L^1$ wie für X definiert sind, wobei $M^4$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,und wobei $L^4$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl,

mit dem Vorbehalt, dass mindestens ein X $M^3$, $-M^3L^1_\Delta$, oder $-Si(R^8)-O-M^3L^1_\Delta$ bedeutet.

Dem Fachmann ist bekannt, dass sich die Anzahl ($\Delta$) möglicher Liganden für $L^1_\Delta$, $L^2_\Delta$, $L^3_\Delta$, $L^4_\Delta$, direkt aus der Anzahl freier Valenzen des eingesetzten Metallatoms ergibt, wobei die Valenzzahl die Wertigkeit des Metalls beschreibt.

In einer weiteren Ausführungsform weißt die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System die allgemeine Formel $(Y_{0,25}R^{\#}SiO_{1,25})_4(Z_{0,75}Y_{0,25}XO)_4(OQ)_2$ auf, wobei jedes X unabhängig voneinander ausgewählt ist aus der Gruppe bestehend aus Si, $M^1$, $-M^3L^1_\Delta$, $M^3$, oder $-Si(R^8)-O-M^3L^1_\Delta$, wobei $M^1$ und $M^3$ unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei $L^1$ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;

jedes Z unabhängig voneinander ausgewählt ist aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl;

jedes $R^{\#}$, $R^5$, $R^6$ und $R^7$ unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;

jedes Y unabhängig voneinander $-O-M^2-L^3_\Delta$ bedeutet, oder zwei Y zusammengenommen sind und zusammen $-O-M^2(L^3_\Delta)-O-$ oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und jedes $M^2$ unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

jedes Q unabhängig voneinander H, $M^4L^4_\Delta$, $-SiR^8$, $-M^3L^1_\Delta$, eine Einfachbindung verknüpft mit $M^3$ von X oder eine Einfachbindung verknüpft mit dem Si-Atom des Rests $-Si(R^8)-O-M^3L^1_\Delta$ bedeutet, wobei $M^3$, $R^8$ und $L^1$ wie für X definiert sind, wobei $M^4$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei $L^4$ ausgewählt ist aus der Gruppe bestehend aus -OH und - O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl,

mit dem Vorbehalt, dass mindestens ein X $M^3$, $-M^3L^1_\Delta$, oder $-Si(R^8)-O-M^3L^1_\Delta$ bedeutet.

Bevorzugt weißt die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System die allgemeine Formel $Si_4O_9R^1R^2R^3R^4X^1X^2X^3X^4OQ^1OQ^2Y^1Y^2Z^1Z^2Z^3$ auf, wobei $X^1$, $X^2$ und $X^3$ unabhängig voneinander ausgewählt sind aus Si oder $M^1$, wobei $M^1$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der

Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

$Z^1$, $Z^2$ und $Z^3$ unabhängig voneinander ausgewählt sind aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L2 ausgewählt ist aus der Gruppe bestehend aus -OH, -O-Methyl, -O-Ethyl, -O-Propyl, -O-Butyl, -O-Octyl, -O-Isopropyl, und -O-Isobutyl;

$R^1$, $R^2$, $R^3$, $R^4$, $R^5$, $R^6$ und $R^7$ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; $Y^1$ und $Y^2$ unabhängig voneinander $-O-M^2-L^3_\Delta$ bedeuten, oder $Y^1$ und $Y^2$ zusammengenommen sind und zusammen $-O-M^2(L^3_\Delta)-O-$ oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und $M^2$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und $X^4-M^3L^1_\Delta$ oder $M^3$ bedeutet und $Q^1$ und $Q^2$ jeweils H oder eine Einfachbindung verknüpft mit $M^3$ bedeuten, wobei $L^1$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

oder

$X^4-M^3L^1_\Delta$ bedeutet und $Q^2$ H oder eine Einfachbindung verknüpft mit $M^3$ bedeutet und $Q^1$, H, $M^4L^4_\Delta$ oder $-SiR^8$ bedeutet, wobei $M^4$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei $L^4$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,

oder

$X^4$, $Q^1$ und $Q^2$ unabhängig voneinander $-M^3L^1_\Delta$, bedeuten,

oder

$X^4$ $-Si(R^8)-O-M^3L^1$ bedeutet, $Q^2$ eine Einfachbindung verknüpft mit dem Si-Atom von $X^4$ bedeutet und $Q^1$ $-M^4L^4_\Delta$ bedeutet,

oder

$X^4$ $-Si(R^8)-O-M^3L^1_\Delta$ bedeutet, $Q^2$ eine Einfachbindung verknüpft mit dem Si-Atom von $X^4$ bedeutet und $Q^1$ eine Einfachbindung verknüpft mit dem $M^3$-Atom von $X^4$ bedeutet.

In einer weiteren Ausführungsform weißt das Metallsilsesquioxan in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System die allgemeine Formel $(X^4)(Z^1Y^1X^2O)(Z^2X^1O_2)(Z^3X^3O_2)(R^1Y^2SiO)(R^3SiO)(R^4SiO_2)(R^2SiO_2)(Q^1)(Q^2)$ auf, wobei $X^1$, $X^2$ und $X^3$ unabhängig voneinander ausgewählt sind aus Si oder $M^1$, wobei $M^1$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

$Z^1$, $Z^2$ und $Z^3$ unabhängig voneinander ausgewählt sind aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl;

$R^1$, $R^2$, $R^3$, $R^4$, $R^5$, $R^6$ und $R^7$ unabhängig voneinander ausgewählt sind aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;

$Y^1$ und $Y^2$ unabhängig voneinander -O-$M^2$-$L^3_\Delta$ bedeuten, oder $Y^1$ und $Y^2$ zusammengenommen sind und zusammen -O-$M^2$($L^3_\Delta$)-O- oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und $M^2$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und

$X^4$-$M^3L^1_\Delta$ oder $M^3$ bedeutet und $Q^1$ und $Q^2$ jeweils H oder eine Einfachbindung verknüpft mit $M^3$ bedeuten, wobei $L^1$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

oder

$X^4$-$M^3L^1_\Delta$ bedeutet und $Q^2$ H oder eine Einfachbindung verknüpft mit $M^3$ bedeutet und $Q^1$ H, $M^4L^4_\Delta$ oder -$SiR^8$ bedeutet, wobei M4 ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei $L^4$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,

oder

$X^4$, $Q^1$ und $Q^2$ unabhängig voneinander -$M^3L^1_\Delta$, bedeuten,

oder

$X^4$ -Si($R^8$)-O-$M^3L^1_\Delta$ bedeutet, $Q^2$ eine Einfachbindung verknüpft mit dem Si-Atom von $X^4$ bedeutet und $Q^1$ -$M^4L^4_\Delta$ bedeutet,

oder

$X^4$ -Si($R^8$)-O-$M^3L^1_\Delta$ bedeutet, $Q^2$ eine Einfachbindung verknüpft mit dem Si-Atom von $X^4$ bedeutet und $Q^1$ eine Einfachbindung verknüpft mit dem $M^3$-Atom von $X^4$ bedeutet.

In einem weiteren Sinne der Erfindung kann der erfindungsgemäß eingesetzte selektive Katalysator der Gelreaktion in der Herstellung von Polyurethanen, insbesondere von ungeschäumten Polyurethanen, Weich- oder Hartschäumen und/oder im erfindungsgemäßen Zwei-Komponenten (2K)-System auf Basis einer Metall-Siloxan-Silanol(-at)-Verbindung durch die Struktur (I) beschrieben werden,

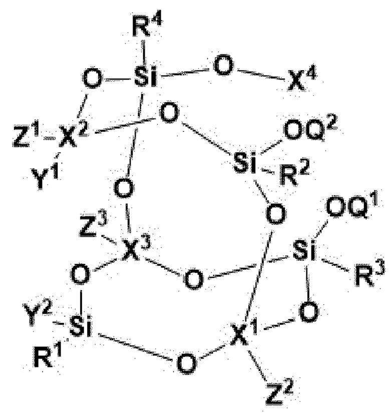

(I)

wobei

$X^1$, $X^2$ und $X^3$ unabhängig voneinander ausgewählt sind aus Si oder $M^1$, wobei $M^1$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

$Z^1$, $Z^2$ und $Z^3$ unabhängig voneinander ausgewählt sind aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl;

$R^1$, $R^2$, $R^3$, $R^4$, $R^5$, $R^6$ und $R^7$ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;

$Y^1$ und $Y^2$ unabhängig voneinander -O-$M^2$-$L^3_\Delta$ bedeuten, oder $Y^1$ und $Y^2$ zusammengenommen sind und zusammen -O-$M^2$($L^3_\Delta$)-O- oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^2$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
und $X^4$-$M^3L^1_\Delta$ oder $M^3$ bedeutet und $Q^1$ und $Q^2$ jeweils H oder eine Einfachbindung verknüpft mit $M^3$ bedeuten, wobei $L^1$ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
oder
$X^4$-$M^3L^1$ bedeutet und $Q^2$ H oder eine Einfachbindung verknüpft mit $M^3$ bedeutet und $Q^1$ H, $M^4L^4_\Delta$ oder -Si$R^8$ bedeutet, wobei $M^4$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei $L^4$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,
oder
$X^4$, $Q^1$ und $Q^2$ unabhängig voneinander -$M^3L^1_\Delta$, bedeuten,
oder
$X^4$ -Si($R^8$)-O-$M^3L^1_\Delta$ bedeutet, $Q^2$ eine Einfachbindung verknüpft mit dem Si-Atom von $X^4$ bedeutet und $Q^1$ -$M^4L^4_\Delta$ bedeutet,
oder
$X^4$-Si($R^8$)-O-$M^3L^1_\Delta$ bedeutet, $Q^2$ eine Einfachbindung verknüpft mit dem Si-Atom von $X^4$ bedeutet und $Q^1$ eine Einfachbindung verknüpft mit dem $M^3$-Atom von $X^4$ bedeutet.

In einer weiteren bevorzugten Ausführungsform weißt die Metall-Siloxan-Silanol(-at)-Verbindung in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System die allgemeinen Formel (I) auf, wobei $X^1$, $X^2$ und $X^3$ unabhängig voneinander Si bedeuten,
$X^4$-$M^3L^1_\Delta$ bedeutet und $Q^1$ und $Q^2$ jeweils eine Einfachbindung verknüpft mit $M^3$ bedeuten, wobei $L^1$ ausgewählt ist aus

der Gruppe bestehend aus -OH und -O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

$Z^1$, $Z^2$ und $Z^3$ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind,

$R^1$, $R^2$, $R^3$ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind,

$Y^1$ und $Y^2$ zusammengenommen sind und zusammen -O- bilden.

In einer Ausführungsform kann die Metall-Siloxan-Silanol(-at)-Verbindung gemäß Formel (I) in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System in Abhängigkeit der vorhandenen Äquivalente an Metall einkernig als Monomer oder mehrkernig als Dimer (zweikernig), Trimer (dreikernig), Multimer (multikernig) und/oder Mischungen daraus vorliegen, sodass beispielsweise Strukturen gemäß der Formeln (Ia) bis (Id) möglich sind,

Weitere erfindungsgemäß einsetzbare mehrkernige Metall-Siloxan-Silanol(-at)-Verbindung sind die Strukturen (Ia), (Ib), (IC) oder (Id),

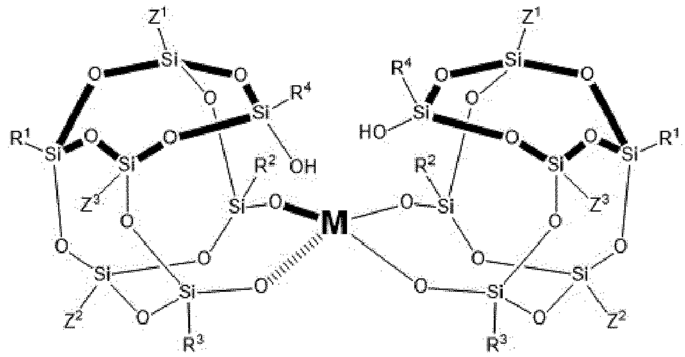

(Ia)

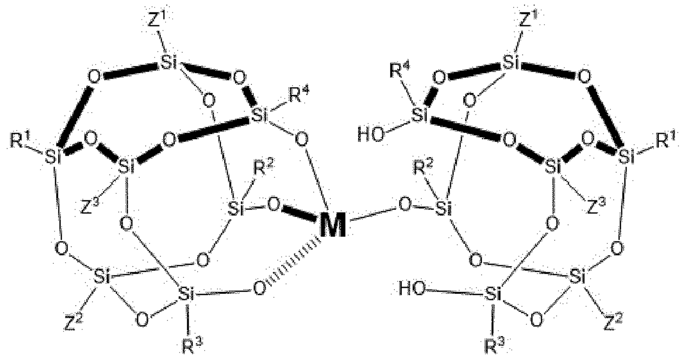

(Ib)

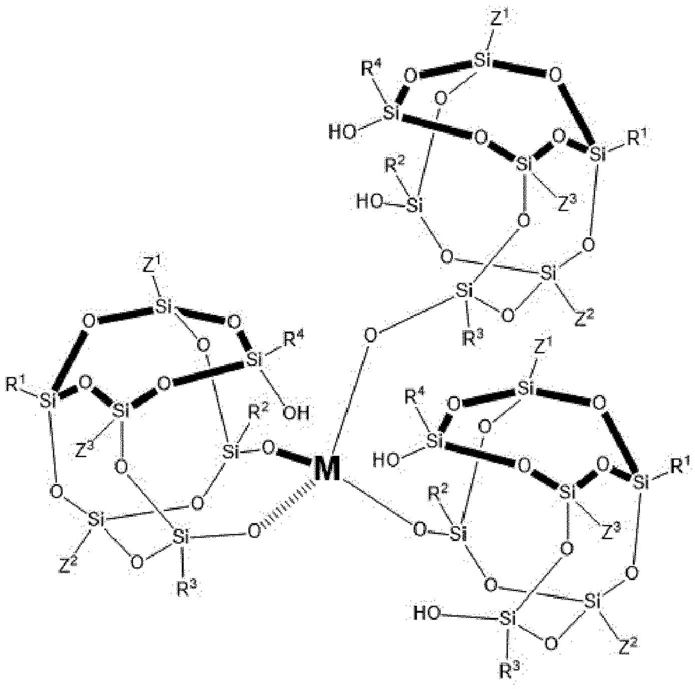

(Ic)

wobei

M ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R ($R^1$ bis $R^4$) unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl). Das vierwertige Metall M stellt hierbei einen gemeinsamen Teil mehrerer Käfige dar. Dabei ist dem Fachmann bekannt, dass die Anzahl der Bindungen zum Metall M abhängig ist von der Wertigkeit des Metalls M. Die Strukturformeln (Ia) bis (Ic) sind gegebenenfalls entsprechend anzupassen.

In einer Ausführungsform der erfindungsgemäßen Verwendung kommt in der Herstellung von Polyurethanen, bevorzugt von ungeschäumten Polyurethanen oder Weichschäumen eine Mischung der Metall-Siloxan-Silanol(-at)-Verbindungen gemäß Formel (I), (Ia), (Ib) und (Ic) zum Einsatz.

Ferner kann die mehrkernige Metall-Siloxan-Silanol(-at)-Verbindung gemäß Formel (Id) in der erfindungsgemäßen Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System 6-fach koordinierte Metallzentren aufweisen, sodass Strukturen gemäß Formel (Id) möglich sind

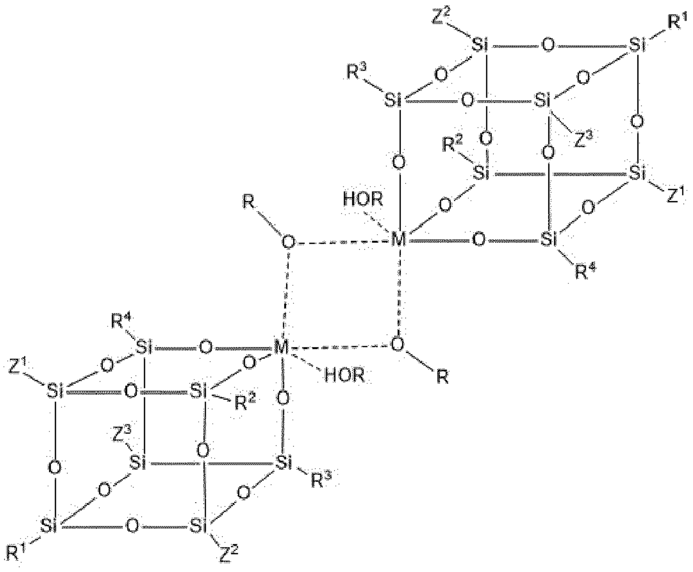

(Id),

wobei jedes M unabhängig ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl).

Im Sinne der Erfindung beschreibt der Begriff "einkäfig" die vereinzelt, also singulär vorliegende Käfig-Struktur des erfindungsgemäßen Gelkatalysators auf Basis einer Metall-Siloxan-Silanol(-at)-Verbindung. Käfig-Strukturen des erfindungsgemäßen Gelkatalysatoren auf Basis einer Metall-Siloxan-Silanol(-at)-Verbindung können durch die Struktur (IV) sowie ebenfalls durch die Strukturen (I) und (II) umfasst werden.

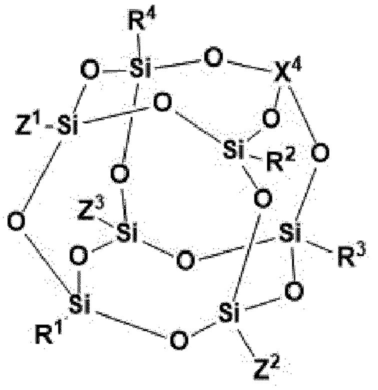

(II)

wobei

$X^4$-$M^3L^1_\Delta$ bedeutet, wobei $L^1$ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend

aus Zn, Ti, Zr, Hf, V, Fe, Sn und Bi,

$Z^1$, $Z^2$ und $Z^3$ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; $R^1$, $R^2$, $R^3$ und $R^4$ jeweils unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.

Ferner betrifft die erfindungsgemäße Verwendung zur selektiven Katalyse der Gelreaktion für die Herstellung von Polyurethanen, bevorzugt von ungeschäumten Polyurethanen, Weich- oder Hartschäumen und/oder im erfindungsgemäßen Zwei-Komponenten (2K)-System eingesetzte Metall-Siloxan-Silanol(-at)-Verbindungen der allgemeinen Strukturformel (II), wobei $X^4$-$M^3L^1_\Delta$ bedeutet wobei $L^1$ ausgewählt ist aus der Gruppe bestehend aus -OH und - O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
$Z^1$, $Z^2$ und $Z^3$ unabhängig voneinander ausgewählt sind aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl und
$R^1$, $R^2$, $R^3$, $R^4$, $R^5$, $R^6$ und $R^7$ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.

In einer besonders vorteilhaften Ausführungsform können die Polyurethane, bevorzugt ungeschäumte Polyurethane, Weich- oder Hartschäume durch eine selektiven Katalyse der Gelreaktion mit Heptaisobutyl POSS-Titanium(IV)-Ethoxid (TiPOSS) als eine Metall-Siloxan-Silanol(-at)-Verbindung hergestellt worden sein. Hierbei steht die Abkürzung "TiPOSS" für das einkernige Titan-metallisierte Silsesquioxan der Strukturformel (IV) und kann äquivalent zu "Heptaisobutyl POSS-Titanium(IV)-Ethoxid" im Sinne der Erfindung verwendet werden.

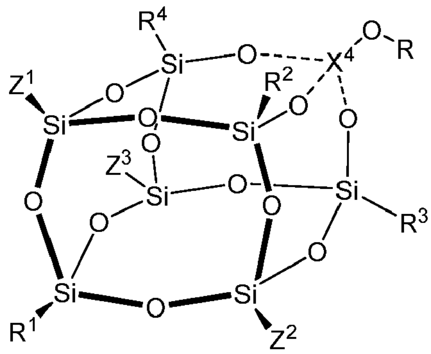

(IV)

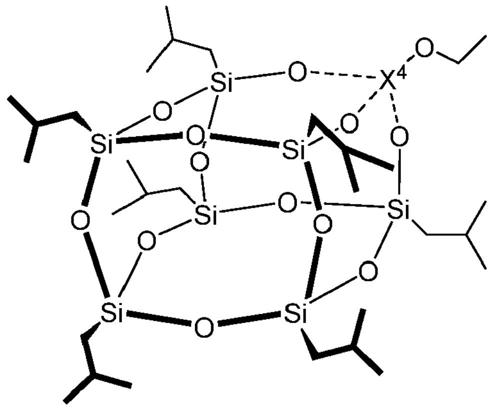

(IVb)

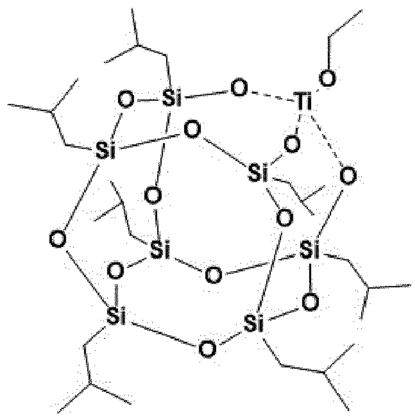

(IVc)

In der erfindungsgemäßen Verwendung kann die Metall-Siloxan-Silanol(-at)-Verbindung in der Herstellung von Polyurethanen, bevorzugt von ungeschäumten Polyurethanen, Weich- oder Hartschäumen eine Mischung enthaltend die Strukturen (I), (Ia), (Ib), (Ic), (Id), (II), (IV), (IVb), (IVc) darstellen.

In einer bevorzugten Ausführungsform ist das Metall in der Metall-Siloxan-Silanol(-at)-Verbindung ein Titan.

In einer weiter bevorzugten Ausführungsform kann in der Herstellung von Polyurethanen, bevorzugt von ungeschäumten Polyurethanen, Weich- oder Hartschäumen und/oder im erfindungsgemäßen Zwei-Komponenten (2K)-System durch Verwendung einer Metall-Siloxan-Silanol(-at)-Verbindung zusätzlich einen Katalysator enthalten sein ausgewählt aus der Gruppe bestehend aus Metall-Siloxan-Silanol(-at)-Verbindungen wie Heptaisobutyl POSS-Titanium(IV)-Ethoxid (TiPOSS), Heptaisobutyl POSS-Zinn(IV)-Ethoxid (SnPOSS), Tetraalkyltitanaten, wie Tetramethyltitanat, Tetraethyltitanat, Tetra-n-propyltitanat, Tetraisopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ($(RO)_2TiO_2$, worin R z. B. für isoPropyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminiumtrisbutylat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylmercaptide, Dibutylmercaptide, Dioctylmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodekanoat, Gemische aus Bismut- und Zinkcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen, Amin-Verbindungen wie Butylamin, Octylamin, Dibutylamin, Monoethanolamin, Diethanolamin, Triethanolamin, Diethylentriamin, Oleylamin, Cyclohexylamin, Benzylamin, Diethylaminopropylamin, Xylylendiamin, Triethylendiamin, Guanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), Salze dieser Amine mit Carbonsäuren oder anderen Säuren oder Mischungen davon, bevorzugt Metall-Siloxan-Silanol(-at)-Verbindungen, insbesondere Heptaisobutyl POSS-Titanium(IV)-Ethoxid (TiPOSS), Dibutylzinndilaurat (DBTL), Zinn(II)-2-ethylhexanoat (Zinnoctoat), Zink(II)-2-ethylhexanoat, Zink(II)-neodekanoat, Bismut(III)-tris(2-ethylhexonat), Bismut(III)-tris(neodecanoat) oder Mischungen davon, besonders bevorzugt Metall-Siloxan-Silanol(-at)-Verbindungen, insbesondere Heptaisobutyl POSS-Titanium(IV)-Ethoxid (TiPOSS) oder Heptaisobutyl POSS-Zinn(IV)-Ethoxid (SnPOSS), Dibutylzinndilaurat (DBTL) oder Mischungen davon, ganz besonders bevorzugt Heptaisobutyl POSS-Titanium(IV)-Ethoxid (TiPOSS), Heptaisobutyl POSS-Zinn(IV)-Ethoxid (SnPOSS), Dibutylzinndilaurat (DBTL) ist oder Mischungen davon.

In einer Ausführungsform einer erfindungsgemäßen Verwendung von Metall-Siloxan-Silanol(-at)-Verbindungen zur selektiven Katalyse der Gelreaktion in der Herstellung von Polyurethanen, bevorzugt von ungeschäumten Polyurethanen, Weich- oder Hartschäumen und/oder eines erfindungsgemäßen Zwei-Komponenten (2K)-Systems wird mindestens eine isocyanatreaktive Verbindung (Komponente A) ausgewählt aus der Gruppe bestehend aus NH-, OH- oder SH-Funktionen aufweisenden Verbindungen, und einer oder mehrerer mindestens eine Isocyanat-Gruppen aufweisenden Verbindung (Komponente B) ausgewählt aus der Gruppe aus Isocyanaten (Iso) und mindestens eine einkernige Metall-Siloxan-Silanol(-at)-Verbindung.

In einer bevorzugten Ausführungsform einer erfindungsgemäßen Verwendung von Metall-Siloxan-Silanol(-at)-Verbindungen zur selektiven Katalyse der Gelreaktion in der Herstellung von Polyurethanen, bevorzugt von ungeschäumten Polyurethanen, Weich- oder Hartschäumen und/oder eines erfindungsgemäßen Zwei-Komponenten (2K)-Systems wird mindestens ein hydroxyfunktionalisiertes Polymer (Komponente A) ausgewählt aus der Gruppe bestehend aus Polyoxyalkylenpolyole, Styrol-Acrylnitril, gepfropfte Polyetherpolyole, Polyesterpolyole, Polycarbonatpolyole, polyhydroxyfunktionelle Fette und/oder Öle, polyhydroxyfunktionelle Fette und Öle, Polykohlenwasserstoffpolyole oder Mischungen daraus und einer oder mehreren mindestens eine Isocyanat-Gruppen aufweisenden Verbindung (Komponente B) ausgewählt aus der Gruppe aus polymerem Methylendiphenylisocyanat (Poly-MDI oder PMDI), 4,4'-Methylendiphenylisocyanat (4,4'-MDI), 2,4-Methylendiphenylisocyanat, (2,4-MDI), 2,2'-Methylendiphenylisocyanat (2,2-MDI), NCO-Prepolymere auf Basis der vorgenannten MDI-Isomere, Isophorondiisocyanat (IPDI), 2,4, und/oder 2,6-Toluylendiisocyanat (TDI), 1,6-Hexamethylendiisocyanat (HDI) oder das Trimer daraus (HDI-Trimer) oder Mischungen davon, katalysiert durch mindestens eine einkernige Einkäfig-Metall-Siloxan-Silanol(-at)-Verbindung.

In einer weiter bevorzugten Ausführungsform einer erfindungsgemäßen Verwendung von Metall-Siloxan-Silanol(-at)-Verbindungen zur selektiven Katalyse der Gelreaktion in der Herstellung von Polyurethanen, bevorzugt von ungeschäumten Polyurethanen, Weich- oder Hartschäumen und/oder eines erfindungsgemäßen Zwei-Komponenten (2K)-Systems wird mindestens ein hydroxyfunktionalisiertes Polymer (Komponente A) ausgewählt aus der Gruppe aus Polyoxyalkylenpolyole, Polyesterpolyole, Polycarbonatpolyole, polyhydroxyfunktionelle Fette und/oder Öle, oder Mischungen daraus und einer oder mehreren mindestens eine Isocyanat-Gruppen aufweisenden Verbindung (Komponente B) ausgewählt aus der Gruppe aus polymerem Methylendiphenylisocyanat (Poly-MDI oder PMDI), 4,4'-Methylendiphenylisocyanat (4,4'-MDI), Isophorondiisocyanat (IPDI), oder Mischungen davon, katalysiert durch mindestens eine einkernige Titan-Siloxan-Silanol(-at)-Verbindung, insbesondere durch Heptaisobutyl POSS-Titanium(IV)-Ethoxid (TiPOSS).

In einer ganz besonders bevorzugten Ausführungsform eines erfindungsgemäßen Zwei-Komponenten (2K)-Systems wird durch eine mit Heptaisobutyl POSS-Titanium(IV)-Ethoxid (TiPOSS) katalysierte Gelreaktion von einer Komponente A ausgewählt aus der Gruppe bestehend aus Polyalkylendiole, Polyesterpolyole, oder Mischungen daraus mit einer Komponente B ausgewählt aus der Gruppe bestehend aus polymerem Methylendiphenylisocyanat (Poly-MDI), 4,4'-Methylendiphenylisocyanat (4,4'-MDI), Isophorondiisocyanat (IPDI) oder Mischungen daraus.

In der bevorzugtesten Ausführungsform weisen alle obigen erfindungsgemäßen Verwendungen und/oder Zwei-Komponenten (2K)-Systeme Heptaisobutyl POSS-Titanium(IV)-Ethoxid (TiPOSS) in der selektiven Katalyse der Gelreaktion in der Herstellung von Polyurethanen, bevorzugt die ungeschäumten Polyurethanen, Weich- oder Hartschäumen auf.

In einer alternativen Ausführungsform weisen alle obigen erfindungsgemäßen Verwendungen und/oder Zwei-Komponenten (2K)-Systeme anstatt Heptaisobutyl POSS-Titanium(IV)-Ethoxid (TiPOSS), Heptaisobutyl POSS-Zinn(IV)-Ethoxid (SnPOSS) auf oder eine Mischung davon. In der jedoch bevorzugtesten Ausführungsform ist nur Heptaisobutyl POSS-Titanium(IV)-Ethoxid (TiPOSS) in den erfindungsgemäßen Verwendungen und/oder im Zwei-Komponenten (2K) System enthalten.

Die erfindungsgemäßen Zwei-Komponenten (2K)-Systeme und Verwendungen aller obigen Kombinationen weisen in einer bevorzugten Ausführungsform einen weiteren Katalysator auf der ausgewählt aus Metall-Siloxan-Silanol(-at)-Verbindungen, insbesondere Heptaisobutyl POSS-Titanium(IV)-Ethoxid (TiPOSS) oder Heptaisobutyl POSS-Zinn(IV)-Ethoxid (SnPOSS), Dibutylzinndilaurat (DBTL) oder Mischungen davon.

In einer alternativen bevorzugten Ausführungsform weisen alle obigen erfindungsgemäßen Systeme, insbesondere Zwei-Komponenten (2K)-Systeme, Kombinationen oder Verwendungen Dibutylzinndilaurat (DBTL) oder Heptaisobutyl POSS-Zinn(IV)-Ethoxid (SnPOSS) als zweiten Katalysator auf.

In einer weiter bevorzugten Ausführungsform, umfasst die erfindungsgemäße Verwendung neben den Metall-Siloxan-Silanol(-at)-Verbindungen zur selektiven Katalyse der Gelreaktion in der Herstellung von Polyurethanen, bevorzugt von ungeschäumten Polyurethanen, Weich- oder Hartschäumen und/oder das erfindungsgemäße Zwei-Komponenten (2K)-System auch Additive wie ein oder mehrere Füllstoffe ausgewählt aus der Gruppe bestehend aus anorganischen und organischen Füllstoffen, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, kalzinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln, ein oder mehrere Haftvermittler aus der Gruppe aus der Silane, insbesondere Aminosilane wie 3-Aminopropyl-trimethoxysilan, 3-Aminopropyl-dimethoxy-methylsilan, N-(2-Aminoethyl)-3-aminopropyl-trimethoxysilan, N-(2-Amino-ethyl)-3-aminopropylmethyldimethoxysilan, N-(2-Aminoethyl)-N'-[3-(trimethoxysilyl)propyl]ethylendiamin sowie deren Analoga mit Ethoxy- oder Isopropoxy anstelle der Methoxygruppen am Silizium, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan und die entsprechenden, Silane mit Ethoxygruppen anstelle der Methoxygruppen, sowie oligomere Formen dieser Silane, ein oder mehrere Feuchtigkeitsfänger aus der Gruppe aus Silane insbesondere Tetraethoxysilan, Vinyltrimethoxy- oder Vinyltriethoxysilan oder Organoalkoxysilane, welche in $\alpha$-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe, ein oder mehrere Weichmacher aus der Gruppe aus Carbonsäureester wie Phthalate, insbesondere 1,2-Cyclohexandicarbonsäurediisononylester, Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, Citrate, insbesondere Triethylcitrat, organische Phosphor- und Sulfonsäureester, Polybutene oder von natürlichen Fetten oder Ölen abgeleitete Fettsäuremethyl- oder -ethylester, ein oder mehrere UV-Stabilisatoren aus der Gruppe aus organischen (Benzophenone, Benzotriazole, Oxalanilide, Phenyltriazine) und anorganischen (Titandioxid, Eisenoxid, Zinkoxid) UV-Absorber sowie Antioxidantien aus der Gruppe der sterisch gehinderten Phenole, Amine und Phosphite und Phosphonite, ein oder mehrere Thixotropiermittel aus der Gruppe aus Schichtsilikaten wie Bentonite, Derivaten von Rizinusöl, hydriertes Rizinusöl, Polyamide, Polyurethane, Harnstoffverbindungen, pyrogene Kieselsäuren, Celluloseether oder hydrophob modifizierte Polyoxyethylene, ein oder mehrere Benetzungsmittel aus der Gruppe aus nichtionischen, anionischen und kationischen Tensiden oder Kombinationen davon ausgewählt sind.

In einer weiteren Ausführungsform beinhaltet das erfindungsgemäße Zwei-Komponenten (2K)-System, insbesondere für ungeschäumte Polyurethane zusätzlich einen Wasserfänger, bevorzugt einen ein Molekularsieb, UOP-L-Pulver, Vinylalkoxysilan oder Mischungen davon, besonders bevorzugt Vinyltrimethoxysilan (VTMO), UOP-L-Pulver oder Mischungen davon, ganz besonders bevorzugt UOP-L-Pulver.

In einer Ausführungsform umfasst das System, insbesondere das Zwei-Komponenten (2K) System einer erfindungsgemäßen Verwendung einen Wasserfänger. Dabei liegt der Anteil des Wasserfangers maximal bei 5,0 Gew.-%, bevorzugt maximal bei 3,5 Gew.-%, besonders bevorzugt maximal bei 2,5 Gew.-%, ganz bevorzugt maximal bei 1,5 Gew.-%, äußerst bevorzugt maximal bei 1 Gew.-% bezogen auf die Gesamtzusammensetzung des Systems.

In einer bevorzugten Ausführungsform weist das System, insbesondere das Zwei-Komponenten (2K) System in der Gesamtzusammensetzung einer erfindungsgemäßen Verwendung als Wasserfänger mindestens ein Molekularsieb, insbesondere UOP-L Pulver in einem Anteil von maximal 5,0 Gew.-%, bevorzugt maximal 3,5 Gew.-%, besonders bevorzugt maximal 2,5 Gew.-%, ganz besonders bevorzugt maximal 2,0 Gew.-%, oder mindestens ein Mono-Oxazolidin, insbesondere Incozol® 2 in einem Anteil von maximal 4 Gew.-%, bevorzugt maximal 2,5 Gew.-%, besonders bevorzugt maximal 2 Gew.-%, ganz besonders bevorzugt maximal 1,5 Gew.-%, oder mindestens ein Organoalkoxysilan, insbesondere Vinyltrimethoxysilan oder Alkoxysilane, insbesondere Tetraethoxysilan in einem Anteil von maximal 3 Gew.-%, bevorzugt maximal 2,0 Gew.-%, besonders bevorzugt maximal 1,5 Gew.-%, ganz besonders bevorzugt maximal 1,25 Gew.-% beträgt oder p-Tosylisocyanat in einem Anteil von maximal 4 Gew.-%, bevorzugt maximal 3 Gew.-%, besonders bevorzugt maximal 2,5 Gew.-%, ganz besonders bevorzugt maximal 2 Gew.-%, oder Calciumoxid in einem Anteil von maximal 3 Gew.-%, bevorzugt maximal 2 Gew.-%, besonders bevorzugt maximal 1,5 Gew.-%, ganz besonders bevorzugt maximal 1,25 Gew.-% beträgt, oder mindestens einen Orthoameisensäureester, insbesondere Triethylorthoformiat (TEOF) in einem Anteil von maximal 3 Gew.-%, bevorzugt maximal 2 Gew.-%, besonders bevorzugt maximal 1,5 Gew.-%, ganz besonders bevorzugt maximal 1,25 Gew.-% oder Mischungen davon.

In einer besonders bevorzugten Ausführungsform weist das System, insbesondere das Zwei-Komponenten

(2K) System, insbesondere für ungeschäumte Polyurethane einer erfindungsgemäßen Verwendung keinen Wasserfänger auf.

In einer weiter ganz besonders bevorzugten Ausführungsform liegt die Dichte des ungeschäumten Polyurethans bei ≥ 1000 kg/m$^3$ wenn der Gesamtwasseranteils ≤ 0,6 %, vorzugsweise bei 0,6 % in der Herstellung dessen liegt.

Eine bevorzugte Ausführungsform eines erfindungsgemäßen Verfahrens zur Herstellung von ungeschäumtem Polyurethan umfassend die folgenden Schritte:

(i) Bereitstellung einer Komponente A umfassend mindestens ein hydroxyfunktionalisiertes Polymer nach einer der obigen Definitionen,
(ii) Bereitstellung einer Komponente B umfassend mindestens eine ein oder mehrere Isocyanat-Gruppen aufweisende Verbindung nach einer der obigen Definitionen,
(iii) zusetzen mindestens einer Metall-Siloxan-Silanol(-at)-Verbindung nach einer der obigen Definitionen der Komponenten A oder B,
(iv) optional zusetzen eines Wasserfängers bevorzugt ein Molekularsieb oder UOP-L-Pulver oder Mischungen davon, besonders bevorzugt UOP-L-Pulver, mindestens einer der Komponenten A und/oder B,
(v) optional zusetzen mindestens eines Additives nach einer der obigen Definitionen, mindestens einer der Komponenten A und/oder B,
(vi) zusammenbringen der Komponente A mit der Komponente B.

Eine besonders bevorzugte Ausführungsform eines erfindungsgemäßen Verfahrens zur Herstellung von ungeschäumtem Polyurethan umfasst die folgenden Schritte:

(i) Bereitstellen einer Komponente A umfassend mind. ein hydroxyfunktionalisiertes Polymer ausgewählt aus der Gruppe bestehend aus di- oder höherfunktionelle Polyoxyalkylenpolyole, Polyesterpolyole, Polycarbonatpolyole, polyhydroxyfunktionelle Fette und/oder Öle, oder Mischungen daraus, bevorzugt mit zahlenmittleren Molgewichten (Mn) von 250-35000 g/mol, besonders bevorzugt mit ca. 350 g/mol oder ca. 19000 g/mol oder Mischungen davon und mindestens eine Metall-Siloxan-Silanol(-at)-Verbindung, insbesondere Heptaisobutyl POSS-Titanium(IV)-Ethoxid (TiPOSS), Heptaisobutyl POSS-Zinn(IV)-Ethoxid (SnPOSS) oder Mischungen davon,
(ii) Bereitstellen einer Komponente B umfassend ein oder mehrere Isocyanate (Iso) ausgewählt aus der Gruppe bestehend aus polymerem Methylendiphenylisocyanat (Poly-MDI), 4,4'-Methylendiphenylisocyanat (4,4'-MDI), Isophorondiisocyanat (IPDI) oder Mischungen davon,
(iii) optional zusetzen eines Wasserfängers bevorzugt ein Molekularsieb oder UOP-L-Pulver oder Mischungen davon, besonders bevorzugt UOP-L-Pulver, mindestens einer der Komponenten A und/oder B,
(iv) optional zusetzen mindestens eines Additives nach einer der obigen Definitionen, mindestens einer der Komponenten A und/oder B,
(v) zusammenbringen der Komponente A mit der Komponente B.

Eine alternative bevorzugte Ausführungsform eines erfindungsgemäßen Verfahrens zur Herstellung von Weich- oder Hartschäumen umfassend die folgenden Schritte:

(i) Bereitstellung einer Komponente A umfassend mindestens ein hydroxyfunktionalisiertes Polymer nach einem der vorherigen Ausführungsformen,
(ii) Bereitstellung einer Komponente B umfassend mindestens eine ein oder mehrere Isocyanat-Gruppen aufweisende Verbindung nach einem der vorherigen Ausführungsformen,
(iii) zusetzen mindestens einer Metall-Siloxan-Silanol(-at)-Verbindung nach einem der vorherigen Ansprüche der Komponenten A und/oder B,
(iv) optional zusetzen eines Wasserfängers nach einem der vorherigen Ausführungsformen, mindestens einer der Komponenten A und/oder B,
(v) optional zusetzen mindestens eines Additives nach einem der vorherigen Ausführungsformen, mindestens einer der Komponenten A und/oder B,
(vi) zusetzen eines Treibmittels mindestens einer der Komponenten A und/oder B nach einem der vorherigen Ausführungsformen,
(vii) zusammenbringen der Komponente A mit der Komponente B.

Eine besonders bevorzugte Ausführungsform eines erfindungsgemäßen Verfahrens zur Herstellung von Weich- oder Hartschäumen umfasst die folgenden Schritte:

(i) Bereitstellung einer Komponente A umfassend mindestens ein hydroxyfunktionalisiertes Polymer ausgewählt

aus der Gruppe bestehend aus EO-getippten Polyethertriolen, di- oder höherfunktionelle Polyoxyalkylenpolyole, Polyesterpolyole, Polycarbonatpolyole, polyhydroxy-funktionelle Fette und/oder Öle bevorzugt EO-getippten Polyethertriolen, di- oder höherfunktionelle Polyoxyalkylenpolyole, Polyesterpolyole, oder Mischungen daraus,

(ii) Bereitstellung einer Komponente B umfassend mindestens eine ein oder mehrere Isocyanat-Gruppen aufweisende Verbindung ausgewählt aus der Gruppe bestehend aus polymerem Methylendiphenylisocyanat (Poly-MDI), 4,4'-Methylendiphenylisocyanat (4,4'-MDI), Isophorondiisocyanat (IPDI) oder Mischungen davon,

(iii) zusetzen mindestens einer Metall-Siloxan-Silanol(-at)-Verbindung, insbesondere Heptaisobutyl POSS-Titanium(IV)-Ethoxid (TiPOSS), Heptaisobutyl POSS-Zinn(IV)-Ethoxid (SnPOSS) oder Mischungen davon der Komponenten A und/oder B,

(iv) optional zusetzen eines Wasserfängers bevorzugt ein Molekularsieb oder UOP-L-Pulver oder Mischungen davon, besonders bevorzugt UOP-L-Pulver, mindestens einer der Komponenten A und/oder B,

(v) optional zusetzen mindestens eines Additives nach einer der obigen Definitionen, mindestens einer der Komponenten A und/oder B,

(vi) zusetzen eines Treibmittels mindestens einer der Komponenten A und/oder B ausgewählt aus der Gruppe bestehend aus Wasser, Stickstoff, Luft, Kohlendioxid, Pentan, Fluorkohlenwasserstoffe (HFO) oder Mischungen davon, bevorzugt Wasser oder Mischungen davon,

(vii) zusammenbringen der Komponente A mit der Komponente B.

Eine bevorzugte Ausführungsform einer Kombination zur Herstellung von ungeschäumtem Polyurethanen umfassend mindestens eine Komponente A und eine Komponente B, wobei Komponente A mindestens ein hydroxyfunktionalisiertes Polymer nach einem der vorherigen Ansprüche und mindestens eine Metall-Siloxan-Silanol(-at)-Verbindung nach einem der vorherigen Ansprüche umfasst und Komponente B mindestens eine ein oder mehrere Isocyanat-Gruppen aufweisende Verbindung nach einem der vorherigen Ansprüche umfasst, dadurch gekennzeichnet, dass die Komponente A und B jeweils getrennt voneinander und in einem Verhältnis zueinander von 2:1 bis zu 1:2 vorliegen, bevorzugt in einem Verhältnis von 1,8:1 bis zu 1:1,8, besonders bevorzugt in einem Verhältnis von 1,5:1 bis zu 1:1,5, ganz besonders bevorzugt in einem Verhältnis von 1,2:1 bis zu 1:1,2.

Eine alternative bevorzugte Ausführungsform einer Kombination zur Herstellung von Weich- oder Hartschäumen umfassend mindestens eine Komponente A und eine Komponente B, wobei Komponente A mindestens ein hydroxyfunktionalisiertes Polymer nach einem der vorherigen Ansprüche und mindestens eine Metall-Siloxan-Silanol(-at)-Verbindung nach einem der vorherigen Ansprüche umfasst und Komponente B mindestens eine ein oder mehrere Isocyanat-Gruppen aufweisende Verbindung nach einem der vorherigen Ansprüche umfasst, dadurch gekennzeichnet, dass die Komponente A und B jeweils getrennt voneinander und in einem Verhältnis zueinander von 2:1 bis zu 1:2 vorliegen, bevorzugt in einem Verhältnis von 1,8:1 bis zu 1:1,8, besonders bevorzugt in einem Verhältnis von 1,5:1 bis zu 1:1,5, ganz besonders bevorzugt in einem Verhältnis von 1,2:1 bis zu 1:1,2.

Das erfindungsgemäße Verfahren wird vorzugsweise bei Temperaturen von mindestens 0 °C, besonders bevorzugt mindestens 20 °C und vorzugsweise höchstens 150 °C, insbesondere höchstens 80 °C, durchgeführt.

Das erfindungsgemäße Verfahren kann kontinuierlich, durch konventionelle Hochdruck- und Niederdruckmischanlagen, mit mehreren neben- oder auch hintereinander liegenden Dosierstellen, oder diskontinuierlich, z.B. in einem herkömmlichen Reaktionskessel mit Rührwerk, erfolgen.

In einer Ausführungsform sind ungeschäumte Polyurethane herstellbar durch ein Verfahren unter Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS.

In einer Ausführungsform der erfindungsgemäßen ungeschäumten Polyurethane sind diese Elastomere.

In einer weiteren Ausführungsform der erfindungsgemäßen ungeschäumten Polyurethane sind diese Duromere.

In einer alternativen Ausführungsform sind geschäumte Polyurethane, insbesondere Weich- oder Hartschäume herstellbar durch ein Verfahren unter Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS.

In einer vorteilhaften Ausführungsform der Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS in der Herstellung von Polyurethanen, eignen diese Polyurethane sich besonders zum Einsatz in CASE-Anwendungen (Beschichtungen, Klebstoffe, Dichtungen und Elastomere) und/oder elastomeren Materialien.

In einer weiteren vorteilhaften Ausführungsform der Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS

in der Herstellung von Weichschäumen, eignen diese Weichschäume sich besonders zum Einsatz in Möbeln, Matratzen, Autositzen, Dichtungs- oder Akustikmaterialien.

In einer weiteren vorteilhaften Ausführungsform der Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS in der Herstellung von Hartschäumen, eignen diese Hartschäume sich besonders zum Einsatz in Dämmungen, Wärme- und oder Kälteisolationen.

In einer weiteren vorteilhaften Ausführungsform der Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS in der Herstellung von Hartschäumen, eignen diese Hartschäume sich besonders zur Isolation von Fernwärmerohren, Tanks und Pipelines sowie zur Herstellung aller Arten von Kühlmöbeln.

In einer weiteren vorteilhaften Ausführungsform der Verwendung mindestens einer Metall-Siloxan-Silanol(-at)-Verbindung, bevorzugt einer einkernigen Einkäfig-Struktur nach einer der Strukturen (IV), (IVb) oder (IVc), besonders bevorzugt einer Titan-haltigen Einkäfig-Struktur nach einer der Strukturen (IV), (IVb) oder (IVc), ganz besonders bevorzugt TiPOSS in der Herstellung von Hartschäumen, eignen diese Hartschäume sich besonders zum Einsatz in Dämmplatten für die Anwendungsgebiete Dach, Wand, Boden und/oder Decke, in Fensterrahmen-Dämmungen oder als Montageschaum.

## Besonders bevorzugte Ausführungsformen der Erfindung

**1.** Verwendung mindestens einer Metall-Siloxan-Silanol(-at)-Verbindung zur selektiven Katalyse der Gelreaktion in einem System für die Herstellung von Polyurethanen.

**2.** Verwendung mindestens einer Metall-Siloxan-Silanol(-at)-Verbindung für die Herstellung ungeschäumter Polyurethane, insbesondere von Elastomeren und/oder Vergussmassen.

**3.** Verwendung mindestens einer Metall-Siloxan-Silanol(-at)-Verbindung zur Herstellung von Weichschäumen, insbesondere Polyurethan-Weichschäumen.

**4.** Verwendung mindestens einer Metall-Siloxan-Silanol(-at)-Verbindung zur Herstellung von Hartschäumen, insbesondere Polyurethan-Hartschäumen.

**5.** Verwendung nach einem der vorstehenden Ansprüche, wobei das System ein Zwei-Komponenten (2K) System ist.

**6.** Verwendung nach Ausführungsform 5, **dadurch gekennzeichnet, dass** das Zwei-Komponenten (2K) System eine Komponente A und eine Komponente B umfasst, wobei die Metall-Siloxan-Silanol(-at)-Verbindung(en), vorzugsweise zusammen mit Komponente A umfassend mindestens ein hydroxyfunktionalisiertes Polymer oder mit Komponente B umfassend mindestens eine ein oder mehrere Isocyanat-Gruppen aufweisende Verbindung, formuliert vorliegt.

**7.** Verwendung nach Ausführungsform 2, 5 oder 6, wobei das ungeschäumte Polyurethan eine Dichte im Bereich nach DIN EN ISO 845:2009-10 von 800 bis 1950 $kg/m^3$ aufweist, bevorzugt im Bereich von 950 bis 1750 $kg/m^3$, besonders bevorzugt im Bereich von 980 bis 1650 $kg/m^3$, ganz besonders bevorzugt im Bereich von 990 bis 1600 $kg/m^3$.

**8.** Verwendung nach Ausführungsform 2 oder 5 bis 7, wobei das ungeschäumte Polyurethan eine Shore00-Härte nach ASTM D2240-15 im Bereich von 40-100 aufweist, bevorzugt im Bereich von 45 bis 95, bevorzugt im Bereich von 50 bis 90, besonders bevorzugt im Bereich von 55 bis 85.

**9.** Verwendung nach Ausführungsform 2, 5 oder 6 bis 8, wobei das ungeschäumte Polyurethan eine ShoreA-Härte nach ASTM D2240-15 im Bereich von 0-100 aufweist, bevorzugt im Bereich von 5 bis 95, bevorzugt im Bereich von 10 bis 90, besonders bevorzugt im Bereich von 15 bis 85.

**10.** Verwendung nach Ausführungsform 2, 5 oder 6 bis 9, wobei das ungeschäumte Polyurethan eine ShoreD-Härte nach ASTM D2240-15 im Bereich von 0-100 aufweist, bevorzugt im Bereich von 5 bis 95, bevorzugt im Bereich von

10 bis 90, besonders bevorzugt im Bereich von 15 bis 85.

**11.** Verwendung nach Ausführungsform 3, wobei der Weichschaum eine Dichte nach DIN EN ISO 845:2009-10 im Bereich von 50 bis 900 kg/m3 aufweist, bevorzugt im Bereich von 100 bis 850 kg/m3, besonders bevorzugt im Bereich von 200 bis 750 kg/$m^3$, ganz besonders bevorzugt im Bereich von 200 bis 700 kg/$m^3$.

**12.** Verwendung nach Ausführungsform 3, 5, 6 oder 11, wobei der Weichschaum eine Shore00-Härte nach ASTM D2240-15 im Bereich von 0-100 aufweist, bevorzugt im Bereich von 5 bis 95, bevorzugt im Bereich von 15 bis 90, besonders bevorzugt im Bereich von 20 bis 85.

**13.** Verwendung nach Ausführungsform 3, 5, 6 oder 11 bis 12, wobei der Weichschaum eine ShoreA-Härte nach ASTM D2240-15 im Bereich von 0-100 aufweist, bevorzugt im Bereich von 20 bis 95, bevorzugt im Bereich von 20 bis 60, besonders bevorzugt im Bereich von 20 bis 50.

**14.** Verwendung nach Ausführungsform 3, 5, 6 oder 11 bis 13, wobei der Weichschaum eine Zugfestigkeit nach DIN EN ISO 1798:2008-04 zwischen 180 und 400 kPa aufweist, bevorzugt zwischen 200 und 380 kPa, besonders bevorzugt zwischen 200 und 350 kPa.

**15.** Verwendung nach Ausführungsform 4, wobei der Hartschaum eine Dichte nach DIN EN ISO 845:2009-10 im Bereich von 50 bis 900 kg/m3 aufweist, bevorzugt im Bereich von 150 bis 850 kg/$m^3$, besonders bevorzugt im Bereich von 200 bis 750 kg/$m^3$, ganz besonders bevorzugt im Bereich von 200 bis 700 kg/$m^3$.

**16.** Verwendung nach Ausführungsform 5 bis 6 oder 15, wobei der Hartschaum eine ShoreD-Härte nach ASTM D2240-15 im Bereich von 0 bis 100 aufweist, bevorzugt im Bereich von 15 bis 100, bevorzugt im Bereich von 20 bis 95, besonders bevorzugt im Bereich von 25 bis 90.

**17.** Verwendung nach Ausführungsform 5 bis 6 oder 15 bis 16, wobei der Hartschaum eine Zugfestigkeit nach ISO 1926:2009-12 zwischen 100 und 2500 kPa aufweist, bevorzugt zwischen 150 und 2250 kPa, besonders bevorzugt zwischen 200 und 2000 kPa.

**18.** Verwendung nach einer der vorstehenden Ausführungsformen **dadurch gekennzeichnet, dass** das System einen Wasserfänger umfasst und der Anteil des Wasserfangers maximal 5,0 Gew.-%, bevorzugt maximal 3,5 Gew.-%, besonders bevorzugt maximal 2,5 Gew.-%, ganz bevorzugt maximal 1,5 Gew.-%, äußerst bevorzugt maximal 1 Gew.-% an der Gesamtzusammensetzung des Systems beträgt.

**19.** Verwendung nach Ausführungsform 18, **dadurch gekennzeichnet, dass** das System keinen Wasserfänger umfasst.

**20.** Verwendung nach einer der vorherigen Ausführungsformen, **dadurch gekennzeichnet, dass** die Metall-Siloxan-Silanol(-at)-Verbindung als Monomer, Oligomer und/oder als Polymer vorliegt, wobei das Metall oder die Metalle endständig und/oder innerhalb der Kette vorhanden sind.

**21.** Verwendung nach einer der vorherigen Ausführungsformen, **dadurch gekennzeichnet, dass** die Metall-Siloxan-Silanol(-at)-Verbindung die allgemeine Formel $R^*_qSi_rO_sM_t$ aufweist, wobei jeder R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6-bis C10-Aryl, -OH und -O-(C1- bis C10-Alkyl), jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

**22.** Verwendung nach einem der vorherigen Ausführungsformen **dadurch gekennzeichnet, dass** die Metall-Siloxan-Silanol(-at)-Verbindung eine allgemeinen Struktur (I) aufweist,

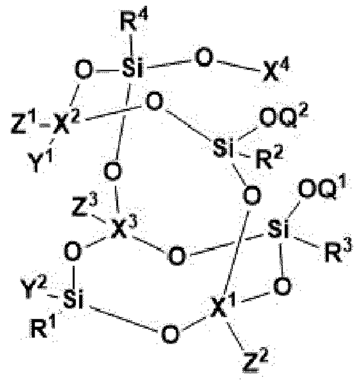

(I)

wobei

$X^1$, $X^2$ und $X^3$ unabhängig voneinander ausgewählt sind aus Si oder $M^1$, wobei $M^1$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
$Z^1$, $Z^2$ und $Z^3$ unabhängig voneinander ausgewählt sind aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl;
$R^1$, $R^2$, $R^3$, $R^4$, $R^5$, $R^6$ und $R^7$ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
$Y^1$ und $Y^2$ unabhängig voneinander -O-$M^2$-$L^3_\Delta$ bedeuten, oder $Y^1$ und $Y^2$ zusammengenommen sind und zusammen -O-$M^2$($L^3_\Delta$)-O- oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^2$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
$X^4$ -$M^3L^1_\Delta$ oder $M^3$ bedeutet und $Q^1$ und $Q^2$ H oder jeweils eine Einfachbindung verknüpft mit $M^3$ bedeuten, wobei $L^1$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, oder
$X^4$ -$M^3L^1_\Delta$ bedeutet und $Q^2$ H oder eine Einfachbindung verknüpft mit $M^3$ bedeutet und $Q^1$ H, $M^4L^4_\Delta$, oder -Si$R^8$ bedeutet, wobei $M^4$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr,

Hf, V, Fe, Pt, Cu, Ga, Sn und Bi; insbesondere bevorzugt aus der Gruppe bestehend aus Zn, Ti, Zr, Hf, V, Fe, Sn und Bi, und wobei $L^4$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,

oder

$X^4$, $Q^1$ und $Q^2$ unabhängig voneinander $-M^3L^1_\Delta$ bedeuten,

oder

$X^4$ $-Si(R^8)-O-M^3L^1_\Delta$ bedeutet, $Q^2$ eine Einfachbindung verknüpft mit dem Si-Atom von $X^4$ bedeutet und $Q^1$ $-M^4L^4_\Delta$ bedeutet,

oder

$X^4$ $-Si(R^8)-O-M^3L^1_\Delta$ bedeutet, $Q^2$ eine Einfachbindung verknüpft mit dem Si-Atom von $X^4$ bedeutet und $Q^1$ eine Einfachbindung verknüpft mit dem $M^3$-Atom von $X^4$ bedeutet.

**23.** Verwendung nach einer der vorherigen Ausführungsformen dadurch gekennzeichnet, dass die Metall-Siloxan-Silanol(-at)-Verbindung die Strukturformel (II)

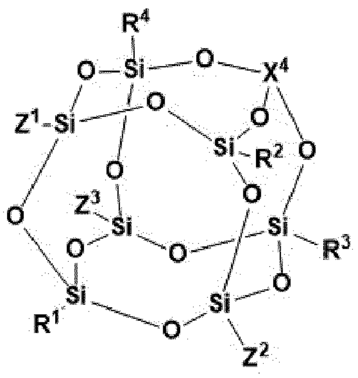

(II)

aufweist, wobei $X^4$, $R^1$, $R^2$, $R^3$, $R^4$, $Z^1$, $Z^2$ und $Z^3$ gemäß Ausführungsform 22 definiert sind.

**24.** Verwendung nach Ausführungsform 23 **dadurch gekennzeichnet, dass** die Metall-Siloxan-Silanol(-at)-Verbindung der Struktur (IV) ein Metall-Silsesquioxan ist,

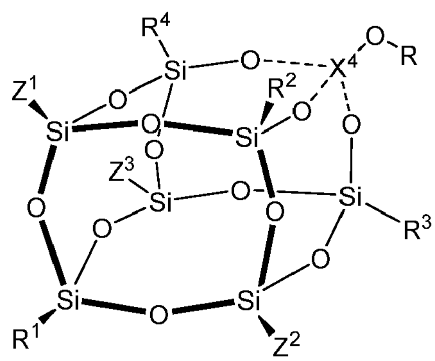

(IV)

wobei

- $X^4$ ausgewählt aus der Gruppe ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend

aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti und Sn, ganz besonders bevorzugt Ti ist, und

- $X^4$ mit OR verknüpft ist, wobei R ausgewählt ist aus der Gruppe bestehend aus-H, -Methyl, -Ethyl, -Propyl, -Butyl, -Octyl, -Isopropyl, und -Isobutyl, $Z^1$, $Z^2$ und $Z^3$ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und $R^1$, $R^2$, $R^3$ und $R^4$ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

**25.** Verwendung nach Ausführungsform 25 **dadurch gekennzeichnet, dass** die Metall-Siloxan-Silanol(-at)-Verbindung ein Metall-Silsesquioxan der Struktur (IVb) ist,

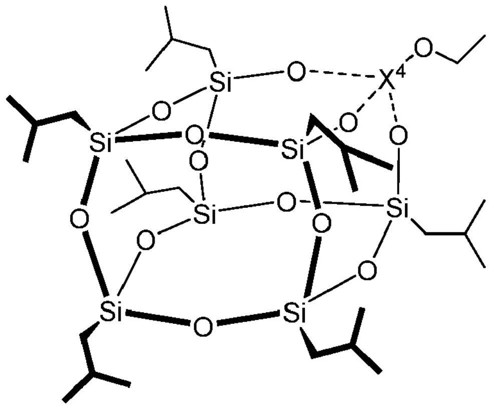

(IVb)

wobei

- $X^4$ ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti (ergo Heptaisobutyl POSS-Titanium(IV)-Ethoxid (TiPOSS) ist) und Sn (ergo Heptaisobutyl POSS-Zinn(IV)-Ethoxid (SnPOSS) ist), ganz besonders bevorzugt Ti (ergo Heptaisobutyl POSS-Titanium(IV)-Ethoxid (TiPOSS) ist) ist.

**26.** Verwendung nach einer der vorherigen Ausführungsformen **dadurch gekennzeichnet, dass** das hydroxyfunktionalisierte Polymer in Komponente A ausgewählt ist aus der Gruppe bestehend aus Polyoxyalkylendiole oder Polyoxyalkylentriole, insbesondere Polyoxyethylen- und Polyoxypropylendi- und -triole, Polyole höher Funktionalität wie Sorbitol, Pentaerythrit gestartete Polyole, Ethylenoxid-terminierte Polyoxypropylenpolyole, Polyesterpolyole, Styrol-Acrylnitril, Acryl-Methacrylat, (Poly)harnstoff gepfropfte oder enthaltende Polyetherpolyole, Polycarbonatpolyole, $CO_2$-Polyole, Polyhydroxyfunktionelle Fette und Öle, insbesondere Rizinusöl, Polykohlenwasserstoffpolyole wie Dihydroxypolybutadien, Polytetrahydrofuran basierte Polyether (PTMEG), OH-terminierte Prepolymere auf der Basis der Reaktion eines Polyether- oder Polyesterols mit einem Diisocyanat, Polyalkylendiole, Polyesterpolyole oder Mischungen daraus, bevorzugt Polyalkylendiole, Polyesterpolyole, oder Mischungen daraus.

**27.** Verwendung nach Ausführungsform 26 **dadurch gekennzeichnet, dass** das hydroxyfunktionalisierte Polymer in Komponente A ausgewählt ist aus der Gruppe bestehend aus Polyoxyalkylendiole, Polyoxyalkylentriole, Polyoxyalkylenpolyole höherer Funktionalität, insbesondere Polyoxyethylen- und/oder Polyoxypropylendi- und/oder - triole, KOH-katalysierten hydroxyfunktionalisierten Polyethern oder Doppelmetall-Cyanidkomplex-(DMC)-katalysierten hydroxyfunktionalisierten Polyethern oder Mischungen daraus.

**28.** Verwendung nach einer der vorherigen Ausführungsformen **dadurch gekennzeichnet, dass** die ein oder mehrere Isocyanat-Gruppen aufweisende Verbindung in Komponente B ausgewählt ist aus der Gruppe bestehend aus

aromatischen und/oder aliphatischen Isocyanaten (Iso) der allgemeinen Struktur (VI) oder Mischungen daraus,

$$R^x(N{=}C{=}O)_z \qquad (VI)$$

wobei

- $R^x$ eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine optional substituierte C4- bis C14-Cycloalkylgruppe oder eine optional substituierte C4-bis C14-Arylgruppe bedeutet, ganz besonders bevorzugt Diphenylmethan, Toluol, Dicylohexylmethan, Hexan oder Methyl-3,5,5-trimethylcyclohexyl bedeutet,
- z mindestens 1 ist, bevorzugt mindestens 2 oder 3 ist.

**29.** Verwendung nach einer der vorherigen Ausführungsformen **dadurch gekennzeichnet, dass** die ein oder mehrere Isocyanat-Gruppe aufweisenden Verbindung in Komponente B ausgewählt ist aus der Gruppe bestehend aus aromatischen und/oder aliphatischen Isocyanaten (Iso) der allgemeinen Struktur (VI) oder Mischungen daraus,

$$R^x(N{=}C{=}O)_z \qquad (VI)$$

wobei

- $R^x$ Diphenylmethan, Toluol, Dicylohexylmethan, Hexan oder Methyl-3,5,5-trimethylcyclohexyl bedeutet, bevorzugt Diphenylmethan oder Hexan oder Methyl-3,5,5-trimethylcyclohexyl bedeutet, ganz besonders bevorzugt Diphenylmethan oder Methyl-3,5,5-trimethylcyclohexyl bedeutet und
- z mindestens 2 ist, bevorzugt 2 oder 3 ist.

**30.** Verwendung nach Ausführungsform 29 **dadurch gekennzeichnet, dass** mindestens ein Isocyanat (Iso) der allgemeinen Struktur (VI) ausgewählt ist aus der Gruppe bestehend aus polymerem, oligomerem oder monomerem Methylendiphenylisocyanat (MDI), insbesondere von polymerem Methylendiphenylisocyanat (Poly-MDI), 4,4'-Methylendiphenylisocyanat (4,4'-MDI), 2,4'-Methylendiphenylisocyanat (2,4'-MDI), 2,2'-Methylendiphenylisocyanat (2,2'-MDI), 4,4'-Diisocyanatodicyclohexylmethan ($H_{12}$MDI), 2-Methylpentamethylen-1,5-diisocyanat, 1,12-Dodecamethylendiisocyanat, Lysin-und Lysinesterdiisocyanat, Cyclohexan-1,3-diisocyanat, Cyclohexan-1,4-diisocyanat, Perhydro-2,4'-diphenylmethandiisocyanat, Perhydro-4,4'-diphenylmethandiisocyanat, 1,4-Diisocyanato-2,2,6-trimethylcyclohexan (TMCDI), 3-Isocyanatmethyl-3,5,5-trimethylcyclohexylisocyanat (= Isophorondiisocyanat oder IPDI), 1,6-Hexamethylendiisocyanat (HDI) oder das Trimer daraus (HDI-Trimer), 2,2,4-Trimethyl-1,6-hexamethylendiisocyanat und/oder 2,4,4- 1,4-Bis-(isocyanat)cyclohexan, 1,4-Bis-(isocyanat)benzol (PPDI), 1,3- und/oder 1,4-Bis-(isocyanatomethyl)-cyclohexan, m- und/oder p-Xylylendiisocyanat (m- und/oder p-XDI), m- und/oder p-Tetramethyl-1,3-xylylendiisocyanat, m- und/oder p-Tetramethyl-1,4-xylylendiisocyanat, Bis-(1-Isocyanato-1-methylethyl)-naphthalin, 1,3-Bis(isocyanat-4-methyl-phenyl)-2,4-dioxo-1,3-diazetidin, Naphthalin-1,5-diisocyanat (NDI), 3,3'-Dimethyl-4,4'-diisocyanatodiphenyl (TODI), 2,4- und/oder 2,6-Toluylendiisocyanat (TDI), 1,3-Bis(isocyanatmethyl)benzol oder Mischungen davon, bevorzugt polymerem Methylendiphenylisocyanat (Poly-MDI), 4,4'-Methylendiphenylisocyanat (4,4'-MDI) oder Isophorondiisocyanat (IPDI), 1,6-Hexamethylendiisocyanat (HDI) oder das Trimer daraus (HDI-Trimer) oder Mischungen davon, ganz besonders bevorzugt polymerem Methylendiphenylisocyanat (Poly-MDI), 4,4'-Methylendiphenylisocyanat (4,4'-MDI) oder Isophorondiisocyanat (IPDI) oder Mischungen davon.

**31.** Verwendung nach einer der vorherigen Ausführungsformen **dadurch gekennzeichnet, dass** die Metall-Siloxan-Silanol(-at)-Verbindung eine Gel-/Blasreaktions-Selektivität von >1 aufweist, vorzugsweise >5, besonders bevorzugt >10, weiter bevorzugt >30, ganz besonders bevorzugt >40.

**32.** Verwendung nach einer der vorherigen Ansprüche **dadurch gekennzeichnet, dass** die Metall-Siloxan-Silanol(-at)-Verbindung eine Gel-/Blasreaktions-Selektivität von ≥30 aufweist.

**33.** Verwendung nach einer der vorherigen Ausführungsformen **dadurch gekennzeichnet, dass** die Metall-Siloxan-Silanol(-at)-Verbindung in einer molaren Konzentration im Bereich von 0,00001 bis 0,06 mol/kg, bevorzugt im Bereich von 0,0002 bis 0,01 mol/kg, besonders bevorzugt im Bereich von 0,0003 bis 0,01 mol/kg, jeweils bezogen auf das Gesamtgewicht des Systems, vorliegt.

**34.** Verwendung nach einer der vorherigen Ausführungsformen **dadurch gekennzeichnet, dass** die Metall-Siloxan-Silanol(-at)-Verbindung mit einem Gewichtsanteil von 0,001 bis 5 %, bevorzugt im Bereich von 0,002 bis 1 %, besonders bevorzugt im Bereich von 0,003 bis 0,5 %, jeweils bezogen auf das Gesamtgewicht des Systems, vorliegt.

**35.** Verwendung nach einer der vorherigen Ausführungsformen **dadurch gekennzeichnet, dass** das System nach Zusammenbringen der Komponenten A und B zu einem Reaktionsprodukt, insbesondere zu einem Polyurethan aushärtet.

**36.** Verwendung nach einer der vorherigen Ausführungsformen **dadurch gekennzeichnet, dass** das daraus resultierende Reaktionsprodukt eine um > 3 % höhere Dichte aufweist im Vergleich zu einem unter Dibutylzinndilaurat (DBTL) oder Triethylendiamin (DABCO)-katalysierten resultierenden Reaktionsprodukt, wenn der Wassergehalt der Komponente A oder der Komponente B > 0,2% ist.

**37.** Verwendung nach einer der vorherigen Ausführungsformen **dadurch gekennzeichnet, dass** das System zusätzlich einen Katalysator enthält ausgewählt aus der Gruppe bestehend aus Metall-Siloxan-Silanol(-at)-Verbindungen wie Heptaisobutyl POSS-Titanium(IV)-Ethoxid (TiPOSS), Heptaisobutyl POSS-Zinn(IV)-Ethoxid (SnPOSS), Tetraalkyltitanaten, wie Tetramethyltitanat, Tetraethyltitanat, Tetra-n-propyltitanat, Tetraisopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ($(RO)_2TiO_2$, worin R z.B. für iso-Propyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminiumtrisbutylat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylmercaptide, Dibutylmercaptide, Dioctylmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodekanoat, Gemische aus Bismut- und Zinkcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen, Amin-Verbindungen wie Butylamin, Octylamin, Dibutylamin, Monoethanolamin, Diethanolamin, Triethanolamin, Diethylentriamin, Oleylamin, Cyclohexylamin, Benzylamin, Diethylaminopropylamin, Xylylendiamin, Triethylendiamin, Guanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), Salze dieser Amine mit Carbonsäuren oder anderen Säuren oder Mischungen davon, bevorzugt Metall-Siloxan-Silanol(-at)-Verbindungen, insbesondere Heptaisobutyl POSS-Titanium(IV)-Ethoxid (TiPOSS), Dibutylzinndilaurat (DBTL), Zinn(II)-2-ethylhexanoat (Zinnoctoat), Zink(II)-2-ethylhexanoat, Zink(II)-neodekanoat, Bismut(III)-tris(2-ethylhexonat), Bismut(III)-tris(neodecanoat) oder Mischungen davon, besonders bevorzugt Metall-Siloxan-Silanol(-at)-Verbindungen, insbesondere Heptaisobutyl POSS-Titanium(IV)-Ethoxid (TiPOSS) oder Heptaisobutyl POSS-Zinn(IV)-Ethoxid (SnPOSS), Dibutylzinndilaurat (DBTL) oder Mischungen davon, ganz besonders bevorzugt Heptaisobutyl POSS-Titanium(IV)-Ethoxid (TiPOSS), Heptaisobutyl POSS-Zinn(IV)-Ethoxid (SnPOSS), Dibutylzinndilaurat (DBTL) ist oder Mischungen davon.

**38.** Verwendung nach einer der vorherigen Ausführungsformen, wobei das Treibmittel ausgewählt ist aus der Gruppe bestehend aus Wasser, Luft, Stickstoff, Kohlenstoffdioxid, Pentan, Cyclopentan, Fluorkohlenwasserstoffe oder Mischungen davon.

**39.** Verwendung nach einer der vorherigen Ausführungsformen, wobei das System ferner ein oder mehrere Additive umfasst, die aus der Gruppe umfassend Füllstoff, Haftvermittler, Weichmacher, UV-Stabilisatoren, Thixotropiermittel, Benetzungsmittel oder Kombinationen davon ausgewählt sind.

**40.** Zwei-Komponenten (2K) System definiert nach einer der vorherigen Ausführungsformen.

**41.** Verfahren zur Herstellung von ungeschäumtem Polyurethan umfassend die folgenden Schritte:

(i) Bereitstellung einer Komponente A umfassend mindestens ein hydroxyfunktionalisiertes Polymer nach einer

der vorherigen Ausführungsformen,
(ii) Bereitstellung einer Komponente B umfassend mindestens eine ein oder mehrere Isocyanat-Gruppen aufweisende Verbindung nach einer der vorherigen Ausführungsformen,
(iii) zusetzen mindestens einer Metall-Siloxan-Silanol(-at)-Verbindung nach einer der vorherigen Ausführungsformen der Komponenten A oder B,
(iv) optional zusetzen eines Wasserfängers nach einer der vorherigen Ausführungsformen, mindestens einer der Komponenten A und/oder B,
(v) optional zusetzen mindestens eines Additives nach einer der vorherigen Ausführungsformen, mindestens einer der Komponenten A und/oder B,
(vi) zusammenbringen der Komponente A mit der Komponente B.

**42.** Verfahren zur Herstellung von Weichschäumen umfassend die folgenden Schritte:

(i) Bereitstellung einer Komponente A umfassend mindestens ein hydroxyfunktionalisiertes Polymer nach einer der vorherigen Ausführungsformen,
(ii) Bereitstellung einer Komponente B umfassend mindestens eine ein oder mehrere Isocyanat-Gruppen aufweisende Verbindung nach einer der vorherigen Ausführungsformen,
(iii) zusetzen mindestens einer Metall-Siloxan-Silanol(-at)-Verbindung nach einer der vorherigen Ausführungsformen der Komponenten A und/oder B,
(iv) optional zusetzen eines Wasserfängers nach einer der vorherigen Ausführungsformen, mindestens einer der Komponenten A und/oder B,
(v) optional zusetzen mindestens eines Additives nach einer der vorherigen Ausführungsformen, mindestens einer der Komponenten A und/oder B,
(vi) zusetzen eines Treibmittels mindestens einer der Komponenten A und/oder B nach einer der vorherigen Ausführungsformen,
(vii) zusammenbringen der Komponente A mit der Komponente B.

**43.** Verfahren zur Herstellung von Hartschäumen umfassend die folgenden Schritte:

(i) Bereitstellung einer Komponente A umfassend mindestens ein hydroxyfunktionalisiertes Polymer nach einer der vorherigen Ausführungsformen,
(ii) Bereitstellung einer Komponente B umfassend mindestens eine ein oder mehrere Isocyanat-Gruppen aufweisende Verbindung nach einer der vorherigen Ausführungsformen,
(iii) zusetzen mindestens einer Metall-Siloxan-Silanol(-at)-Verbindung nach einer der vorherigen Ausführungsformen der Komponenten A und/oder B,
(iv) optional zusetzen eines Wasserfängers nach einer der vorherigen Ausführungsformen, mindestens einer der Komponenten A und/oder B,
(v) optional zusetzen mindestens eines Additives nach einer der vorherigen Ausführungsformen, mindestens einer der Komponenten A und/oder B,
(vi) zusetzen eines Treibmittels mindestens einer der Komponenten A und/oder B nach einer der vorherigen Ausführungsformen,
(vii) zusammenbringen der Komponente A mit der Komponente B.

**44.** Kombination zur Herstellung von ungeschäumtem Polyurethanen umfassend mindestens eine Komponente A und eine Komponente B, wobei Komponente A mindestens ein hydroxyfunktionalisiertes Polymer nach einer der vorherigen Ausführungsformen und mindestens eine Metall-Siloxan-Silanol(-at)-Verbindung nach einer der vorherigen Ausführungsformen umfasst und Komponente B mindestens eine ein oder mehrere Isocyanat-Gruppen aufweisende Verbindung nach einer der vorherigen Ausführungsformen umfasst, dadurch gekennzeichnet, dass die Komponente A und B jeweils getrennt voneinander und in einem NCO:OH-Verhältnis zueinander von 2:1 bis zu 1:2 vorliegen, bevorzugt in einem Verhältnis von 1,8:1 bis zu 1:1,8, besonders bevorzugt in einem Verhältnis von 1,5:1 bis zu 1:1,5, ganz besonders bevorzugt in einem Verhältnis von 1,2:1 bis zu 1:1,2.

**45.** Kombination zur Herstellung von Weich- oder Hartschäumen umfassend mindestens eine Komponente A und eine Komponente B, wobei Komponente A mindestens ein hydroxyfunktionalisiertes Polymer nach einer der vorherigen Ausführungsformen und mindestens eine Metall-Siloxan-Silanol(-at)-Verbindung nach einer der vorherigen Ausführungsformen umfasst und Komponente B mindestens eine ein oder mehrere Isocyanat-Gruppen aufweisende Verbindung nach einer der vorherigen Ausführungsformen umfasst, dadurch gekennzeichnet, dass die Komponente A und B jeweils getrennt voneinander und in einem Verhältnis zueinander von 2:1 bis zu 1:2 vorliegen, bevorzugt

in einem Verhältnis von 1,8:1 bis zu 1:1,8, besonders bevorzugt in einem Verhältnis von 1,5:1 bis zu 1:1,5, ganz besonders bevorzugt in einem Verhältnis von 1,2:1 bis zu 1:1,2.

**46.** Ungeschäumte Polyurethane herstellbar durch ein Verfahren unter Verwendung mindestens einer Metall-Siloxan-Silanol(-at)-Verbindung nach einer oder mehreren der Ausführungsformen 20 bis 25.

**47.** Ungeschäumte Polyurethane nach Ausführungsform 46 **dadurch gekennzeichnet, dass** es Elastomere sind.

**48.** Ungeschäumte Polyurethane nach Ausführungsform 47 **dadurch gekennzeichnet, dass** es Duromere sind.

**49.** Ungeschäumte Polyurethane nach Ausführungsform 46 bis 48 **dadurch gekennzeichnet, dass** sie eine Dichte im Bereich nach DIN EN ISO 845:2009-10 von 800 bis 1950 kg/m$^3$ aufweisen, bevorzugt im Bereich von 950 bis 1750 kg/m$^3$, besonders bevorzugt im Bereich von 980 bis 1650 kg/m$^3$, ganz besonders bevorzugt im Bereich von 990 bis 1600 kg/m$^3$.

**50.** Ungeschäumte Polyurethane nach Ausführungsform 46 bis 49 **dadurch gekennzeichnet, dass** sie eine Shore00-Härte nach ASTM D2240-15 im Bereich von 40-100 aufweisen, bevorzugt im Bereich von 45 bis 95, bevorzugt im Bereich von 50 bis 90, besonders bevorzugt im Bereich von 55 bis 85.

**51.** Ungeschäumte Polyurethane nach Ausführungsform 46 bis 50 **dadurch gekennzeichnet, dass** sie eine ShoreA-Härte nach ASTM D2240-15 im Bereich von 0-100 aufweisen, bevorzugt im Bereich von 5 bis 95, bevorzugt im Bereich von 10 bis 90, besonders bevorzugt im Bereich von 15 bis 85.

**52.** Ungeschäumte Polyurethane nach Ausführungsform 46 bis 51 **dadurch gekennzeichnet, dass** sie eine ShoreD-Härte nach ASTM D2240-15 im Bereich von 0-100 aufweisen, bevorzugt im Bereich von 5 bis 95, bevorzugt im Bereich von 10 bis 90, besonders bevorzugt im Bereich von 15 bis 85.

**53.** Weichschäume herstellbar durch ein Verfahren unter Verwendung mindestens einer Metall-Siloxan-Silanol(-at)-Verbindung nach einer oder mehreren der Ausführungsformen 20 bis 25.

**54.** Weichschäume nach Ausführungsform 53, **dadurch gekennzeichnet, dass** sie eine ShoreA-Härte nach ASTM D2240-15 von ≥ 20 aufweisen

**55.** Weichschäume nach Ausführungsform 53 oder 54, **dadurch gekennzeichnet, dass** sie eine ShoreA-Härte nach ASTM D2240-15 zwischen 20 und 100, bevorzugt zwischen 20 und 60, besonders bevorzugt zwischen 20 und 50 aufweisen

**56.** Weichschäume nach Ausführungsform 53, 54 oder 55 **dadurch gekennzeichnet, dass** sie eine Zugfestigkeit nach DIN EN ISO 1798:2008-04 von ≥ 200 kPa aufweisen.

**57.** Weichschäume nach Ausführungsform 53, 54 oder 55 **dadurch gekennzeichnet, dass** sie eine Zugfestigkeit nach DIN EN ISO 1798:2008-04 zwischen 200 und 350 kPa aufweisen.

**58.** Hartschäume herstellbar durch ein Verfahren unter Verwendung mindestens einer Metall-Siloxan-Silanol(-at)-Verbindung nach einer oder mehreren der Ausführungsformen 20 bis 25.

**59.** Hartschäume nach Ausführungsform 58 **dadurch gekennzeichnet, dass** die Hartschäume nach dem Verfahren nach Ausführungsform 43 hergestellt werden.

**60.** Hartschäume nach Ausführungsform 58 oder 59 **dadurch gekennzeichnet, dass** sie eine Zugfestigkeit Zugfestigkeit nach ISO 1926:2009-12 von ≥ 100 kPa aufweisen.

**61.** Hartschäume nach Ausführungsform 51, 52 oder 53 **dadurch gekennzeichnet, dass** sie eine Zugfestigkeit nach ISO 1926:2009-12 zwischen 200 und 2000 kPa aufweisen.

**62.** Verwendung mindestens einer Metall-Siloxan-Silanol(-at)-Verbindung zur Herstellung von Weichschäumen zum Einsatz in CASE-Anwendungen (Beschichtungen, Klebstoffe, Dichtungen und Elastomere) und/oder elastomeren Materialien.

**63.** Verwendung mindestens einer Metall-Siloxan-Silanol(-at)-Verbindung zur Herstellung von Weichschäumen in Möbeln, Matratzen, Autositzen, Dichtungs- oder Akustikmaterialien.

**64.** Verwendung mindestens einer Metall-Siloxan-Silanol(-at)-Verbindung zur Herstellung von Hartschäumen in Dämmungen, Wärme- und oder Kälteisolationen oder in CASE-Anwendungen (Beschichtungen, Klebstoffe, Dichtungen und Elastomere).

**65.** Verwendung mindestens einer Metall-Siloxan-Silanol(-at)-Verbindung zur Herstellung von Hartschäumen zur Isolation von Fernwärmerohren, Tanks und Pipelines sowie zur Herstellung aller Arten von Kühlmöbeln.

**66.** Verwendung mindestens einer Metall-Siloxan-Silanol(-at)-Verbindung zur Herstellung von Hartschäumen in Dämmplatten für die Anwendungsgebiete Dach, Wand, Boden und/oder Decke, in Fensterrahmen-Dämmungen oder als Montageschaum.

**Beispiele**

**Beispiel I) - ungeschäumte Polyurethane**

Die Vergleichsbeispiele (EP1-EP18) zeigen den Einfluss des erfindungsgemäßen Gelkatalysators. Es ist trotz des Einflusses eines gewissen Wassergehalts möglich, auch ungeschäumte Polyurethane in einem hohen technischen Niveau herzustellen. Die bekannten und in der Fachwelt genutzten Blaskatalysatoren DBTL und DABCO zeigen im direkten Vergleich dabei eine wesentlich schlechtere Performance. Somit konnte überraschenderweise festgestellt werden, dass Metall-Siloxan-Silanol(-at)-Verbindungen besonders selektiv die Gel-Reaktion katalysiert.

Im Rahmen der Untersuchungen konnte überraschenderweise festgestellt werden, dass die Verwendung von TiPOSS als Katalysator für den Aufbau von ungeschäumten Polyurethansystemen besonders selektiv die Gelreaktion katalysiert, mit erheblichen Unterschieden zu den im Vergleich getesteten Referenz-Gelkatalysatoren DBTL und TEDA. Im Zuge dieser Untersuchung wurden Polyolmischungen (Komponenten A) mit jeweils gleichen Anteilen Katalysator und steigenden Wasseranteilen hergestellt. Die zum Vergleich erhaltenen Komponenten A wurden mit Polymer-MDI (Komponente B) im stöchiometrischen Verhältnis zu Polyurethanverbindungen umgesetzt. Die Beurteilung der am Aushärteprozess beteiligten Reaktionen (Gel- und Blasreaktion) erfolgte anhand der erhaltenen Dichte- und Härtewerte, sowie des Aufschäumverhaltens.

Die folgenden Materialien wurden für die Herstellung der Komponente A, der Komponente B und der Elastomer-Produkte (EP) verwendet:

- Voranate M230, BASF
- PolyU-Pol M5020 (OH-Zahl 35 mg KOH/g, Viskosität 850 mPa*s), PolyU GmbH
- BNT-Cat 422, Dibutylzinndilaurat (DBTL), 20%ig und 1%ig, gelöst in Hexamoll® DINCH, BASF
- Heptaisobutyl POSS-Titanium(IV)-Ethoxid (TiPOSS)
- TiPOSS, 20%ig und 1%ig gelöst in Hexamoll® DINCH, BASF
- Dabco® 33 LV, 1,4-Diazabicyclo[2.2.2]octan, auch Triethylendiamin (DABCO oder TEDA), 33%ig in Dipropylenglycol, Evonik

**A-I) Herstellung der Komponenten A - Vergleichsbeispiele zur Untersuchung des Einflusses unterschiedlicher Wasseranteile:**

In je einem Reaktionsgefäß wurden die Vergleichsbeispiele der Komponente A hergestellt, indem je 200 g PolyU-Pol M5020 vorgelegt und mit jeweils 0,1 % (A4-A6), 0,2 % (A7-A9), 0,4 % (A10-A12), 0,6 % (A13-A15) und 0,8 % (A16-A18) Wasser versetzt und mit einem Propellerrührer bei 2500 min$^{-1}$ vermischt wurde. Die Ansätze wurden für jede Mischung unterschiedlichen Wasseranteils nach Stehenlassen für 1 h in 3 x 60 g-Ansätze unterteilt und mit 1% einer 20%igen TiPOSS-Lösung in DINCH, 1% einer 20%igen DBTL-Lösung in DINCH und 0,66% einer 33%igen TEDA-Lösung in Dipropylenglycol versetzt und nochmals für 1 min bei 2500 min$^{-1}$ vermischt. Zusätzlich dazu wurden als Referenzmaterialien noch die Mischungen (A1-A3) ohne zusätzlichen Wassereintrag hergestellt.

Tabelle 3: Zusammensetzung der Komponenten B B1 - B18 für die Untersuchung

| | A1 | A2 | A3 | A4 | A5 | A6 | A7 | A8 | A9 |
|---|---|---|---|---|---|---|---|---|---|
| PolyU-Pol M5020 | 100 | 100 | 100 | 100 | 100 | 100 | 100 | 100 | 100 |

(fortgesetzt)

| | A1 | A2 | A3 | A4 | A5 | A6 | A7 | A8 | A9 |
|---|---|---|---|---|---|---|---|---|---|
| TiPOSS 20%ig in DINCH | 1 | - | - | 1 | - | - | 1 | - | - |
| DBTL 20%ig in DINCH | - | 1 | - | - | 1 | - | - | 1 | - |
| TEDA 33% in DPG | - | - | 0,66 | - | - | 0,66 | - | - | 0,66 |
| Wasser | 0 | 0 | 0 | 0,1 | 0,1 | 0,1 | 0,2 | 0,2 | 0,2 |
| | | | | | | | | | |
| | B10 | B11 | B12 | B13 | B14 | B15 | B16 | B17 | B18 |
| PolyU-Pol M5020 | 100 | 100 | 100 | 100 | 100 | 100 | 100 | 100 | 100 |
| TiPOSS 20%ig in DINCH | 1 | - | - | 1 | - | - | 1 | - | - |
| DBTL 20%ig in DINCH | - | 1 | - | - | 1 | - | - | 1 | - |
| TEDA 33% in DPG | - | - | 0,66 | - | - | 0,66 | - | - | 0,66 |
| Wasser | 0,4 | 0,4 | 0,4 | 0,6 | 0,6 | 0,6 | 0,8 | 0,8 | 0,8 |

**B-I) Umsetzung der Komponenten A A1 bis A18 mit Polymer-MDI, Voranate M230 (Komponente B)**

In einem Einwegbecher wurden jeweils 20 g der unter 1.) hergestellten Mischungen **A1 - A18** im stöchiometrischen Verhältnis (100%iger Isocyanat Umsatz bezogen auf die resultierende Gesamt-OH-Zahl der Polyolmischung) mit Voranate M230 (Komponente B) versetzt und mit einem Propellerrührer für 10 s bei 1500 min-1 gemischt. 15 g des Gemischs wurden anschließend in einen 100 ml PP-Becher überführt und die Aushärtecharakteristik anhand des Aufschäumverhaltens, Dichte und Shore A-Härte der erhaltenen Elastomer-Produkte **EP1** - **EP18** (Nummerierung wie in vorheriger Tabelle) bestimmt. Die Resultate befinden sich in nachfolgender Tabelle 4.

Tabelle 4: Eigenschaften der Elastomer-Produkte EP

| | EP1 | EP2 | EP3 | EP4 | EP5 | EP6 | EP7 | EP8 | EP9 |
|---|---|---|---|---|---|---|---|---|---|
| Aufschäumverhalten | - | - | - | - | - | - | - | - | - |
| Dichte [g/cm$^3$] | 1,04 | 1,04 | 1,04 | 1,04 | 0,99 | 0,99 | 1,04 | 0,94 | 0,96 |
| Härte Shore A | 53 | 54 | 53 | 53 | 48 | 49 | 54 | 47 | 48 |
| | | | | | | | | | |
| | EP10 | EP11 | EP12 | EP13 | EP14 | EP15 | EP16 | EP17 | EP18 |
| Aufschäumverhalten | - | 0 | 0 | - | + | + | 0 | + | + |
| Dichte [g/cm$^3$] | 1,03 | 0,72 | 0,73 | 1,01 | 0,51 | 0,40 | 0,66 | 0,33 | 0,31 |
| Härte Shore A | 53 | 40 | 41 | 52 | 30 | 16 | 45 | 17 | 14 |
| - optisch keine Aufschäumung erkennbar<br>0 optisch geringe Aufschäumung erkennbar<br>+ optisch starke Aufschäumung erkennbar | | | | | | | | | |

**C-I) Ergebnisse der Synthesen der Elastomer-Produkte (EP)**

Die optische Beurteilung des Aufschäumverhaltens der verschiedenen Elastomer-Produkte EP1 -EP18 zeigt, dass die mit TiPOSS-katalysierten Kombinationen (umfassend Komponente A und B) **(markierter Tabellenbereich, EP1, EP4, EP7, EP10, EP13 und EP16)** erst bei größerem Wassergehalt (EP16, Wassergehalt ca. 0,8 %) als die entsprechend mit DBTL oder TEDA katalysierten Mischungen (EP11 und EP12, Wassergehalt ca. 0,4%) aufschäumen. Die nachfolgenden Fotos verdeutlichen das Aufschäumverhalten bei zunehmendem Wasseranteil und den überraschenden Effekt der Ti-POSS-Katalyse in der Reaktion von Komponente A mit Komponente B.

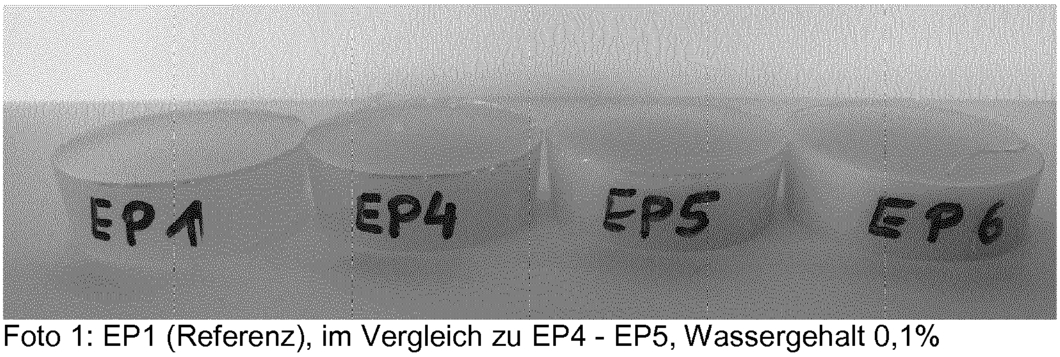


Foto 1: EP1 (Referenz), im Vergleich zu EP4 - EP5, Wassergehalt 0,1%

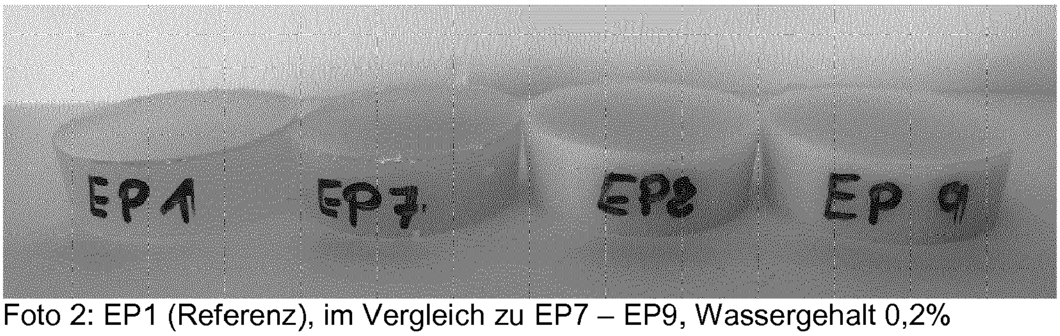


Foto 2: EP1 (Referenz), im Vergleich zu EP7 – EP9, Wassergehalt 0,2%

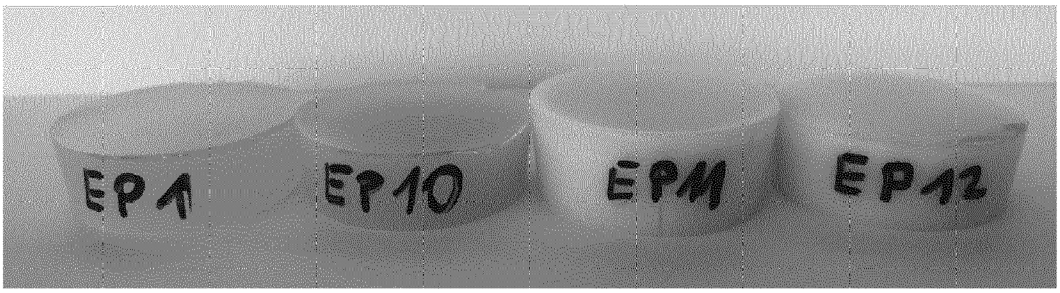


Foto 3: EP1 (Referenz), im Vergleich zu EP10 – EP12, Wassergehalt 0,4%

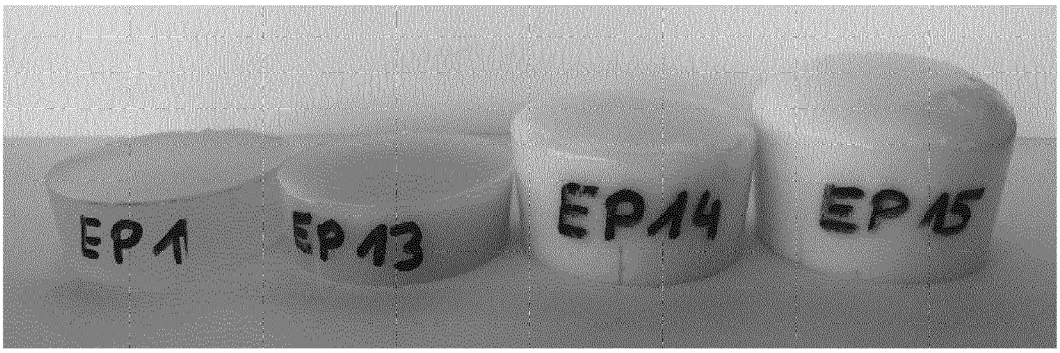


Foto 4: EP1 (Referenz), im Vergleich zu EP13 – EP15, Wassergehalt 0,6%

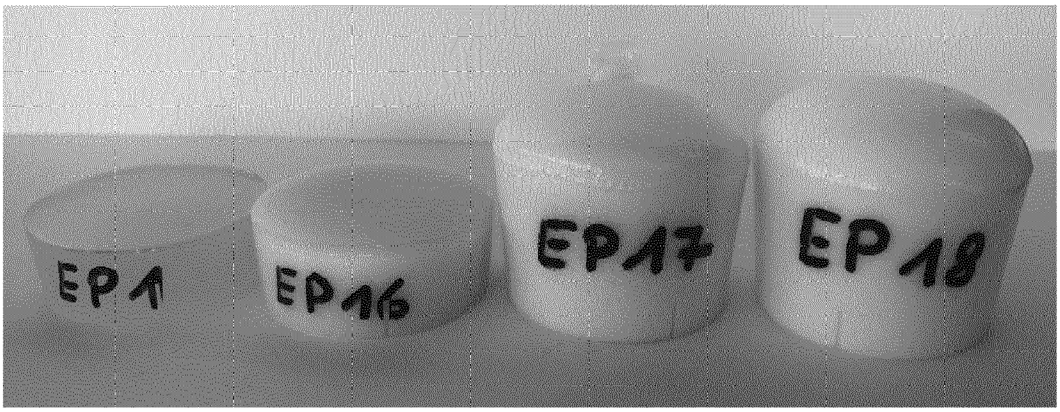


Foto 5: EP1 (Referenz), im Vergleich zu EP16 - EP18, Wassergehalt 0,8%

**Beispiel II) - geschäumte Polyurethane**

**Beispiel IIa) - Weichschäume**

Es hat sich überraschenderweise gezeigt, dass die Verwendung von TiPOSS als Katalysator für die Herstellung von geschäumten Polyurethansystemen zu Produkten führt, die über ein erheblich verbessertes Festigkeitsniveau verfügen im Vergleich zu geschäumten Polyurethansystemen, die über konventionelle Katalyse erhalten werden. Die Festigkeitszunahme ist insofern vorteilhaft, da die mit TiPOSS hergestellten Polyurethanschäume größeren mechanischen Belastungen standhalten können.

Die Untersuchung der katalytischen Eigenschaften von TiPOSS in geschäumten Polyurethansystemen erfolgte an 2-komponentigen Polyurethan-Reaktionsmischungen (A-Komponente = Mehrkomponentensystem mit Basispolyol, B-Komponente = Isocyanat), die beispielsweise Anwendung zur Herstellung von in-situ (formed-in-place-foam-gasket, FIPFG) an einem Bauteil aufgeschäumten Dichtungen finden. Bei diesem Verfahren wird die 2-komponentige Reaktionsmischung direkt in noch nicht ausreagierter Form mit Hilfe einer CNC-Maschine oder eines Roboters auf das Bauteil aufgetragen.

Für die Untersuchung fanden stark vereinfachte Basisrezepturen Verwendung, die sich in ihrem Rohstoff-Aufbau an den oben beschriebenen 2-komponentigen Reaktionssystemen für den FIPFG-Prozess orientieren. Die verwendeten Rohstoffe sind in der nachfolgenden Tabelle 5 aufgeführt. Die Beurteilung von TiPOSS als Katalysator für den Schaumbildungsprozess erfolgte dadurch,

- dass die Schäume entweder nur mit einem Katalysator (TiPOSS oder DBTL oder TEDA/DABCO)
- oder mit einem Katalysatorgemisch (TiPOSS und TEDA oder DBTL und TEDA/DABCO) hergestellt wurden.

Tabelle 5: Basisbestandteile der A-Komponente für die Herstellung von geschäumten Polyurethansystemen

| | |
|---|---|
| PolyU-Pol M5020 | Basispolyol, EO-getipptes Polyethertriol, M~4850 g/mol |
| Glycerin, Alfa Aesar | Vernetzer |
| Wasser | Treibmittel |
| Katalysator 1 | Metallkatalysator, TiPOSS |
| Katalysator 2 | Metallkatalysator, DBTL |
| Katalysator 3 | Aminkatalysator, TEDA |

Die Umsetzungen wurden bei verschiedenen Kennzahlen (Kennzahl 100 bedeutet vollständiger Umsatz der A-Komponente (OH) mit der B-Komponente (NCO), Kennzahl 75 und Kennzahl 50 bedeutet 25%iger bzw. 50%iger NCO-Unterschuss) durchgeführt, da die Herstellung von industriell gefertigten Dichtschäumen in diesem Kennzahlbereich gängige Praxis ist und zur Justage der Schaumeigenschaften wie Härte, Dichte, Festigkeitseigenschaften und Kompressionsverhalten herangezogen wird.

**A-IIa) Herstellung der Dichtungsschäume (DS) DS1 - DS15:**

Herstellung der A-Komponente:
Für die Herstellung der A-Komponenten wurden 5 x 500 g-Ansätze mit den in der nachfolgenden Tabelle 6 angegebenen prozentualen Mengenverhältnissen hergestellt. Hierzu wurden PolyU-Pol M5020, Glycerin und Wasser vorgelegt und mit den in der Tabelle 6 angegebenen Mengen einer 20%igen TiPOSS-Lösung in DINCH (für ***DS1*, *DS6*** und ***DS11***), einer 20%igen DBTL-Lösung in DINCH (für **DS2, DS7** und **DS12**), einer 33%igen TEDA-Lösung in Dipropylenglycol (für **DS3, DS8** und **DS13**), einem Gemisch aus einer 20%igen TiPOSS-Lösung in DINCH mit einer 33%igen TEDA-Lösung in Dipropylenglycol (für **DS4, DS9** und **DS14**), einem Gemisch aus einer 20%igen DBTL-Lösung in DINCH und 0,66% einer 33%igen TEDA-Lösung in Dipropylenglycol (für **DS5, DS10** und **DS15**) versetzt und mit einem Propellerrührer bei 2500 U/min vermischt.

**BIIa) Umsetzung der A-Komponente mit der B-Komponente Polymer-MDI, Voranate M230**

In einem 300 ml Einwegbecher wurden jeweils 80 - 140 g der A-Komponente mit der entsprechenden Menge der B-Komponente (PMDI-Isocyanat, Voranate M230), die sich aus dem in der Zeile MV der nachfolgenden Tabelle 6 angegebenen Mischungsverhältnis ergibt, hergestellt und mit einem Propellerrührer für 15 s bei 2500 U/min gemischt. Die unterschiedlichen Mischungsverhältnisse MV repräsentieren den Grad der Umsetzung der A-Komponente mit der B-Komponente (Kennzahl 100, Kennzahl 75 und Kennzahl 50).

**Spalten DS1 - DS5, MV 3,8 : 1 bis MV 3,9 : 1** entspricht 100% Umsetzung der A-Komponente mit der B-Komponente (stöchiometrischer Umsatz NCO:OH)

**Spalten DS6 - DS10, MV 5,2 : 1 - MV 5,1 : 1** entspricht 75 % Umsetzung der A-Komponente mit der B-Komponente (B-Komponente liegt im Unterschuss vor)

**Spalten DS11 - DS15, MV 7,7 : 1 - MV 7,6 : 1** entspricht 50 % Umsetzung der A-Komponente mit der B-Komponente (B-Komponente liegt im Unterschuss vor)
Die Mischungen aus A- und B-Komponente (ca. 90 - 150 g) wurden in eine offene Kunststoffform (Ø 20 cm, t = 1 cm) gegossen und nach dem Entformen für 72 h bei 23°C ausgehärtet.

**C-IIa) Ergebnisse der Dichtschaumuntersuchungen DS1 - DS15**

An den erhaltenen Schaumstoffplatten (h ~ 1 cm) DS1-DS15 konnten die technischen Eigenschaften wie Dichte, ShoreA-Härte, Zugfestigkeit, Bruchdehnung und Druckverformungsrest ermittelt werden. Die Resultate befinden sich in nachfolgender Tabelle 6.

Tabelle 6: Zusammensetzung und Eigenschaften der Dichtungsschäume DS1 – DS7

| | | *DS1* | DS2 | DS3 | DS4 | DS5 | *DS6* | DS7 |
|---|---|---|---|---|---|---|---|---|
| | **A-Komponente** | | | | | | | |
| | PolyU-Pol M5020 | 98 | 98 | 98,25 | 97,25 | 97,25 | 98 | 98 |
| | Glycerin | 0,43 | 0,43 | 0,43 | 0,43 | 0,43 | 0,43 | 0,43 |
| | Wasser | 1,07 | 1,07 | 1,07 | 1,07 | 1,07 | 1,07 | 1,07 |
| | TiPOSS, 20%ig in DINCH | 0,5 | | | 0,5 | | 0,5 | |
| | DBTL, 20%ig in DINCH | | 0,5 | | | 0,5 | | 0,5 |
| | DABCO 33 LV | | | 0,25 | 0,25 | 0,25 | | |
| | | | | | | | | |
| | **B-Komponente** | | | | | | | |
| | Voranate M230 | 100 | 100 | 100 | 100 | 100 | 100 | 100 |
| | | | | | | | | |
| **MV** | **Mischungsverhältnis [Gew. %] A : [Gew. %g] B** | **3,9 : 1** | **3,9 : 1** | **3,8 : 1** | **3,8 : 1** | **3,8 : 1** | **5,2 : 1** | **5,2 : 1** |
| **Kenn-zahl** | **Kennzahl / Index** | 100 | 100 | 100 | 100 | 100 | 75 | 75 |
| | | | | | | | | |
| | **Physikalische Eigenschaften** | | | | | | | |
| | Dichte [g/cm$^3$] * | 0,29 | 0,27 | 0,24 | 0,21 | 0,19 | 0,43 | 0,40 |
| | Härte Shore A ** | 25 | 18 | 17 | 12 | 10 | 32 | 22 |
| **ZF** | Zugfestigkeit [kPa] *** | 260 | 153 | 98 | 142 | 79 | 254 | 234 |
| | Bruchdehnung [%] *** | 45 | 40 | 40 | 45 | 45 | 35 | 40 |
| | Druckverformungsrest [%] ***** | 2,7 | 3,0 | 2,5 | 2,5 | 2,0 | 2,5 | 2,4 |

* DIN EN ISO 845:2009-10
** DIN ASTM D2240-15
*** DIN EN ISO 1798:2008-04
**** Druckverformungsrest nach 22 h-Lagerung von 10 g Kegeln bei 50%iger Kompression / DIN EN ISO 1856:2018-11

weiter Tabelle 6: Zusammensetzung und Eigenschaften der Dichtungsschäume DS8 – DS15

| | | DS8 | DS9 | DS10 | *DS11* | DS12 | DS13 | DS14 | DS15 |
|---|---|---|---|---|---|---|---|---|---|
| | **A-Komponente** | | | | | | | | |
| | PolyU-Pol M5020 | 98,25 | 97,25 | 97,25 | 98 | 98 | 98,25 | 97,25 | 97,25 |
| | Glycerin | 0,43 | 0,43 | 0,43 | 0,43 | 0,43 | 0,43 | 0,43 | 0,43 |
| | Wasser | 1,07 | 1,07 | 1,07 | 1,07 | 1,07 | 1,07 | 1,07 | 1,07 |
| | TiPOSS, 20%ig in DINCH | | 0,5 | | 0,5 | | | 0,5 | |
| | DBTL, 20%ig in DINCH | | | 0,5 | | 0,5 | | | 0,5 |
| | DABCO 33 LV | 0,25 | 0,25 | 0,25 | | | 0,25 | 0,25 | 0,25 |
| | | | | | | | | | |
| | **B-Komponente** | | | | | | | | |
| | Voranate M230 | 100 | 100 | 100 | 100 | 100 | 100 | 100 | 100 |
| | | | | | | | | | |
| **MV** | **Mischungsverhältnis [Gew. %] A : [Gew. %g] B** | **5,1 : 1** | **5,1 : 1** | **5,1 : 1** | **7,7 : 1** | **7,7 : 1** | **7,6 :1** | **7,6 : 1** | **7,6 : 1** |
| **Kenn zahl** | **Kennzahl / Index** | 75 | 75 | 75 | 50 | 50 | 50 | 50 | 50 |
| | | | | | | | | | |
| | **Physikalische Eigenschaften** | | | | | | | | |
| | Dichte [g/cm$^3$] * | 0,33 | 0,28 | 0,26 | 0,58 | 0,58 | 0,43 | 0,39 | 0,38 |
| | Härte Shore A ** | 14 | 13 | 11 | 30 | 21 | 15 | 15 | 11 |
| **ZF** | Zugfestigkeit [kPa] *** | 89 | 89 | 70 | 321 | 225 | 104 | 138 | 119 |
| | Bruchdehnung [%] *** | 40 | 45 | 45 | 40 | 45 | 50 | 50 | 50 |
| | Druckverformungsrest [%] ***** | 2,5 | 2,5 | 3,0 | 1,0 | 2,6 | 4,1 | 7,0 | 5,4 |

* DIN EN ISO 845:2009-10
** DIN ASTM D2240-15
*** DIN EN ISO 1798:2008-04
**** Druckverformungsrest nach 22 h-Lagerung von 10 g Kegeln bei 50%iger Kompression / DIN EN ISO 1856:2018-11

**D-IIa) Fazit**

Aus den Mischungsversuchen **DS1** - **DS15** wurden Schäume mit glatter Oberfläche und feiner Zellstruktur erhalten. Aus dem Vergleich der technischen Parameter der Dichtungsschäume DS1 bis DS5 für Index 100 (stöchiometrischer Umsatz, markierter Bereich) wird ersichtlich, dass insbesondere die Zugfestigkeit **ZF** für TiPOSS katalysierte Systeme (**DS1** im Vergleich zu **DS2 und DS3,** sowie **DS4** im Vergleich zu **DS5**) signifikant erhöht ist. Diese Beobachtung findet sich in analoger Weise auch bei den Systemen wieder, die mit einem Unterschuss Isocyanat (für Kennzahl 75 **DS6** im Vergleich zu **DS7** und **DS8,** sowie **DS9** im Vergleich zu **DS10** und Kennzahl 50 **DS11** im Vergleich zu **DS12**

und **DS13,** sowie **DS14** im Vergleich zu **DS15**) hergestellt wurden.

Als wesentliches Ergebnis der Versuche lässt sich zusammenfassen, dass die Verwendung von TiPOSS als Katalysator zur selektiveren Ausbildung von Polyurethanverknüpfungen und damit zu verbesserten Festigkeitseigenschaften in den untersuchten Schaumsystemen führt.

**Beispiel IIb) - Hartschäume**

Die Untersuchung der katalytischen Eigenschaften von TiPOSS in Polyurethan-Hartschaumsystemen erfolgte an 2-komponentigen Polyurethan-Reaktionsmischungen (A-Komponente = Mehrkomponentensystem mit Polyolen geringen Molekulargewichts und höherer Funktionalität, B-Komponente = Isocyanat), die beispielsweise Anwendung in der Herstellung von Abdichtungen, Auffüllungen und Isolierungen von Hohlräumen/Kavitäten in Gehäusebauteilen von elektronischen Geräten (z. B. Weissware) finden.

Die Untersuchung fand - in Analogie zu den vorstehenden Untersuchungen - anhand einer stark vereinfachten Basisrezeptur statt, die sich in ihrer Rohstoff-Auswahl an den oben beschriebenen 2-komponentigen Reaktionssystemen für die Ausschäumung von Kavitäten orientierten . Die verwendeten Rohstoffe sind in der nachfolgenden Tabelle 7 aufgeführt.

Tabelle 7: Basisbestandteile der A-Komponente für die Herstellung eines Polyurethan-Hartschaumsystems

| | |
|---|---|
| PolyU-Pol G500 | Polyetherpolyol, MW = 560 g/mol, OH-Funktionalität ~ 3, PolyU GmbH |
| PolyU-Pol RF551 | Polyetherpolyol, MW = 600 g/mol, OH-Funktionalität ~ 4,5, PolyU GmbH |
| Wasser | Treibmittel |
| Katalysator 1 | Metallkatalysator, TiPOSS |
| Katalysator 2 | Aminkatalysator, Dabco 33 LV, TEDA (Triethylendiamin 33%ig in DPG), Evonik |
| Katalysator 3 | Blaskatalysator, Dabco DMDEE (2,2'-Dimorpholindiethylester), Evonik |
| Stabilisator | Tegostab B 8863z, Evonik |

Die Beurteilung von TiPOSS als Katalysator für den Hartschaumbildungsprozess erfolgte dadurch, dass die Schäume

- Hartschaum 1 (**HS1**) mit einem Katalysatorgemisch aus Dabco DMDEE (Blaskatalysator) und TiPOSS (Gelkatalysator) und
- Hartschaum 2 (**HS2**) mit einem Katalysatorgemisch aus Dabco DMDEE (Blaskatalysator) und Dabco 33 LV (Gelkatalysator)

hergestellt wurden.

Die Umsetzungen wurden bei Kennzahl 100 durchgeführt, d. h. vollständiger Umsatz der A-Komponente (OH) mit der B-Komponente (NCO).

**A-IIb) Herstellung der Hartschäume (HS) HS1 und HS2:**

**Dichte**

**Herstellung der A-Komponente:**

Für die Herstellung der A-Komponenten wurden 2 x 500 g-Ansätze mit den in der nachfolgenden Tabelle angegebenen prozentualen Mengenverhältnissen hergestellt. Hierzu wurden PolyU-Pol G500, PolyU-Pol RF551, DMDEE, Wasser und Tegostab B 8863z vorgelegt und mit den in der Tabelle angegebenen Mengen einer 20%igen TiPOSS-Lösung in DINCH (**HS1**) sowie einer 33%igen TEDA-Lösung in Dipropylenglycol (HS2)versetzt und mit einem Propellerrührer 2 min bei 2500 U/min vermischt.

**Umsetzung der A-Komponente mit der B-Komponente Polymer-MDI, Voranate M230**

In einem 800 ml Einwegbecher wurden jeweils 300 g der A-Komponente mit der entsprechenden Menge (-275

g) der B-Komponente (PMDI-Isocyanat, Voranate M230, BASF), die sich aus dem in der Zeile **MV** der nachfolgenden Tabelle 8 angegebenen Mischungsverhältnis ergibt, hergestellt und mit einem Propellerrührer für 15 s bei 2500 U/min gemischt.

Die Mischungen aus A- und B-Komponente (ca. 550 g) wurden in eine mit Plastik verkleidete Holzbox (20cm x 20cm x 23 cm) gegossen und nach dem Aushärten für 72 h bei 23°C entformt.

**B-IIb) Ergebnisse der Hartschaumuntersuchungen HS1 und HS2**

Aus den erhaltenen Hartschaumstoffwürfeln (20 cm x 20 cm x ~ 14 cm, **HS1** und **HS2**) wurden mittels einer Bandsäge die erforderlichen Prüflinge herausgesägt, an denen die technischen Eigenschaften wie Dichte, Shore D-Härte (Oberflächenmessung), Zugfestigkeit und Bruchdehnung ermittelt wurden. Die Resultate der Untersuchungen befinden sich in nachfolgender Tabelle 8.

Tabelle 8: Zusammensetzung und Eigenschaften der Hartschäume HS1 - HS2

| | | **HS1** | **HS2** |
|---|---|---|---|
| | **A-Komponente** | | |
| | PolyU-Pol G500 | 59 | 59,1 |
| | PolyU-Pol RF551 | 39,6 | 39,7 |
| | Wasser | 0,6 | 0,6 |
| | TiPOSS, 20%ig in DINCH | 0,5 | |
| | DABCO 33 LV | | 0,3 |
| | DABCO DMDEE | 0,3 | 0,3 |
| | Tegostab B 8863z | 0,1 | 0,1 |
| | | | |
| | **B-Komponente** | | |
| | Voranate M230 | 100 | 100 |
| | | | |
| **MV** | **Mischungsverhältnis [Gew. %] A : [Gew. %g] B** | **1,1 : 1** | **1,1 : 1** |
| | **Kennzahl / Index** | 100 | 100 |
| | | | |
| | **Physikalische Eigenschaften** | | |
| | Dichte [g/cm$^3$]* | 0,19 | 0,19 |
| | Härte Shore D** | 45 | 45 |
| **ZF** | Zugfestigkeit [MPa]*** | 1,7 | 1,4 |
| | Bruchdehnung [%]*** | 5 | 6 |
| | Druckfestigkeit [MPa]**** | 0,85 | 0,7 |

* Dichte [g/cm$^3$], DIN EN ISO 845:2009-10
** Härte Shore D, ASTM D2240-15
*** Zugfestigkeit/Bruchdehnung ISO 1926:2009-12
**** Druckfestigkeit [MPa] DIN EN ISO 844:2014-11

**C-IIb) Fazit**

Aus den Mischungsversuchen **HS1** und **HS2** wurden in beiden Fällen Hartschäume mit einer sehr glatten Oberfläche erhalten. Die Schaumstruktur ist bei den untersuchten Schäumen **HS1** und **HS2** insgesamt feinzellig ausgeprägt und tendenziell feinzelliger für den mit TiPOSS erhaltenen Schaum. Aus dem Vergleich der technischen Parameter der Dichtungsschäume HS1 und HS2 wird ersichtlich, dass die Zugfestigkeit **ZF** für das TiPOSS katalysierte

System (**HS1** im Vergleich zu **HS2,** markierter Bereich) verbessert ist. Die anderen Parameter (Dichte und Härte) bleiben hingegen konstant.

Als wesentliches Ergebnis der Versuche lässt sich zusammenfassen, dass die Verwendung von TiPOSS als Katalysator auch in Hartschaumsystemen zur selektiven Ausbildung von Polyurethanverknüpfungen und damit zu verbesserten Festigkeitseigenschaften in den untersuchten Schaumsystemen genutzt werden kann.

**Beispiel III)** - **Protokoll zur Ermittlung der Selektivität (nach Farkas)**

Zur Bestimmung der Selektivität ("Gel-/Blasreaktions-Selektivität") von Katalysatoren in der Herstellung von Polurethanen mittels der Titrationsmethode nach Farkas wird ein Aliquot von 50 mL einer 2,4-Toluylendiisocyanat (TDI)-Benzollösung (0,1533 mol/L) und ein Aliquot von 50 mL einer Diethylenglykol- (DEG, 0,1533 mol/L) oder Wasser-Benzollösung (0,0752 mol/L) wurde mit 5 mL einer katalysatorhaltigen Benzollösung (0,0735 mol/L) bei 30-70°C umgesetzt. In verschiedenen Zeitabständen wurde eine Probe aus dem Reaktionskolben entnommen und das nicht reagierte Isocyanat mit der n-Butylamin-Benzollösung gequencht. Der NCO-Gehalt der jeweiligen Probe wurde durch Rücktitration mit einer standardisierten HCl-Lösung bestimmt.

In der Titrationsmethode wird angenommen, dass die Reaktion von Isocyanat mit Diol (oder mit Wasser) in Gegenwart eines Katalysators eine Reaktion erster Ordnung ist in Bezug auf die Isocyanat- bzw. Alkoholkonzentration.

$$\frac{dx}{dt} = K(a - x)^2 \qquad \text{(A)}$$

worin,

x die Konzentration der umgesetzten NCO-Gruppen ist,
a die Anfangskonzentration der NCO-Gruppen ist,
K die Reaktionsratenkonstante (L/mol/h) ist, und
t die Reaktionszeit (h) ist.

Die Integration der Gleichung (A), einbringen des Anfangszustand, (x = 0 wenn t = 0), gibt folgen Ausdruck:

$$\frac{1}{a-x} = Kt + \frac{1}{a} \qquad \text{(B)}$$

Die Katalysen-Reaktionskonstante Kc kann für jeden Katalysator unter der Annahme von Gleichung (C) erhalten werden.

$$K = K_0 + Kc \times C \qquad \text{(C)}$$

worin,

$K_0$ die Reaktionsratenkonstante (L/mol h, kein Katalysator),
Kc die Katalysen-Reaktionskonstante ($L^2$/eq mol h), und
C die Konzentration des Katalysators (mol/L) ist.

Die Aktivitäten der Gel- und Blasreaktionen, ermittelt mit der Titrationsmethode in der Modellreaktion von TDI/DEG (oder Wasser) ist in Tabelle A für eine Auswahl von Katalysatoren aus dem Stand der Technik gezeigt.

Tabelle A - Aktivitäten der Gel- und Blasreaktionen, sowie Selektivität der Katalysatoren ermittelt via Titrationsmethode

| Abkürzung | Chemikalien name | Aktivität der Gel-Reaktion k1w (x10) | Aktivität der BlasReaktion k2w (x10) | Selektivität (Gelreaktion/ Blasreaktion) |
|---|---|---|---|---|
| TEA | Triethylamin | 1,16 | 0,60 | 1,93 |
| DMCHA | Dimethylcyclohexylamin | 2,22 | 0,83 | 2,67 |

(fortgesetzt)

| Abkürzung | Chemikalien name | Aktivität der Gel-Reaktion k1w (x10) | Aktivität der BlasReaktion k2w (x10) | Selektivität (Gelreaktion/ Blasreaktion) |
|---|---|---|---|---|
| TE | Tetramethylethylendiamin | 4,19 | 1,14 | 3,68 |
| MR | Tetramethylhexamethylendiamin | 2,95 | 0,84 | 3,51 |
| DT | Pentamethyldiethylentriamin | 4,26 | 15,9 | 0,27 |
| PMA | Pentamethyldipropylentriamin | 3,80 | 1,16 | 3,28 |
| TEDA oder DABCO | Triethylendiamin | 10,9 | 1,45 | 7,52 |
| DMP | Dimethylpiperazin | 1,3 | 0,28 | 4,64 |
| NP | Dimethylaminoethylmethylpiperazin | 1,71 | 0,78 | 2,19 |
| NEM | N-Ethylmorpholin | 0,22 | 0,01 | 22,00 |
| TRC | Tri(dimethylaminopropyl)hexahydro-1,3,5-triazin | 3,00 | 1,12 | 2,68 |
| ETS | Bis(2-Dimethylaminoethyl)ether | 2,99 | 11,7 | 0,26 |
| DMEA | Dimethylaminoethanol | 2,91 | 0,36 | 8,08 |
| HP | Hydroxyethylmethylpiperazin | 0,61 | 0,11 | 5,55 |
| RX3 | Dimethylaminoethoxyethanol | 1,84 | 2,55 | 0,72 |
| RX5 | Trimethylaminoethylethanolamin | 2,89 | 4,33 | 0,67 |
| F22 | Spezial-Katalysator für CASE-Anwendungen | 26,1 | 0,83 | 31,45 |
| DBTL | Dibutylzinndilaurat | 14,4 | 0,48 | 30,00 |

**Beispiel IV)**

Die vorliegende Erfindung betrifft auch eine Zusammensetzung und ein Verfahren zur Herstellung von Polyurethan-Prepolymeren und Polyurethansystemen auf Basis von Polyolen, Di- oder Polyisocyanaten sowie eines TiPOSS-basierten Katalysators.

Erfindungsgemäß bevorzugte TiPOSS-basierte Katalysatoren sind diejenigen, die in der EP 2 989 155 B1 und der EP 2 796 493 A1 offenbart sind. Die Offenbarung dieser Dokumente wird hinsichtlich der Katalysatoren vollumfänglich in Bezug genommen. Besonders bevorzugt sind die Katalysatoren (Metallosilsesquioxan) nach Anspruch 5 der EP 2 989 155 B1.

Die Untersuchung der Aktivität des Heptaisobutyl POSS-Titanium(IV)-Ethoxid (TiPOSS) für die Bildung von Polyurethanverbindungen wurde im Vergleich zu Dibutylzinndilaurat (DBTDL) und Zinn(II)-2-ethylhexanoat (Zinnoctoat) exemplarisch an verschiedenen ungeschäumten und geschäumten Polyurethansystemen untersucht. Die Auswirkung auf die Herstellung der silylierten Polyurethane (SPUR) auf dem IPDI Weg wurde besonders beachtet. Die Modellrezepturen aus den Anwendungsbereichen CASE, Weichschaum und Flexschaum (Blockschaum) wurden hierbei unter Verwendung verschiedener Polyole und Isocyanate bei gleichem Katalysatorgehalt an TiPOSS und DBTDL bzw. Zinnoctoat hinsichtlich ihres Aushärteverhaltens bei Raumtemperatur (23°C/50 % r. Lf.) untersucht. Die Untersuchungen sind zur Vereinfachung unter der Voraussetzung durchgeführt worden, dass eine vollständige stöchiometrische Umsetzung (Index 100) zwischen Isocyanat und Polyol stattfinden kann. Prinzipiell gelten die Untersuchungen auch für die Herstellung von Prepolymeren. Die katalytische Aktivität der untersuchten Katalysatoren wurde durch die Bestimmung und Vergleich der Startzeit, Fadenziehzeit und Klebfreizeit bestimmt.

1.) Untersuchung TiPOSS / DBTDL in ungeschäumten Polyurethanrezepturen

a) Propylenglykolpolyole

Die Polyol A-Komponente bestand aus einem Polypropylendiol und dem Katalysator TiPOSS, das in Diisononylphthalat (DINP) als 20%ige Lösung vorlag. Zum Vergleich der katalytischen Aktivität wurde eine entsprechende gleiche Polyol-A-Komponente unter Verwendung von DBTDL hergestellt. Die Katalysatormenge betrug jeweils 0,2 Gewichtsprozent (ohne Berücksichtigung der Lösungsmittelmenge). Um den Einfluss des Molekulargewichts zu untersuchen, wurde zusätzlich das Molekulargewicht von gering (MW -2000) bis hoch (MW -18000) variiert, da davon auszugehen ist, dass die Reaktivität der ohnehin reaktionsträgen Polypropylenpolyole mit steigendem Molekulargewicht weiter abnimmt und somit Reaktivitätsunterschiede besonders gut zu beobachten sind. Getestet wurden dementsprechend die Polypropylenpolyole mit MW~ 2000 (Rokopol D2002, PCC Rokita), MW ~8000 (Rokopol LDB 8000), MW ~12000 (Rokopol LDB 12000) und MW ~18000 (Rokopol LDB 18000).

Als Vernetzerkomponente kamen die Isocyanate P-MDI (Voranate M230, Dow), IPDI (Wanate IPDI, DKSH) und HDI-Trimer-Isocyanurate (Vestanat HT2500/100) zum Einsatz. Die Umsetzung zwischen Polyol-A- und Isocyanat B-Komponente erfolgte durch Verrühren der beiden Komponenten für 10 s bei 1000 U/min mit einem konventionellen Propellerrührer. Nach Beendigung des Rührprozesses wurde die erhaltene Reaktionsmasse in Platten der Dicke ~ 6mm ausgegossen (10 g). Die Aushärtecharakteristik wurde anhand der Start-, Fadenzieh- und Klebfreizeit bestimmt.

Es wurde gefunden, dass die TiPOSS-katalysierte Polyurethanaushärtung bei Raumtemperatur unter Verwendung der beschriebenen Polypropylenpolyole im Vergleich zu der entsprechenden DBTDL-katalysierten Vernetzung wesentlich beschleunigt wird. Die Reaktionsbeschleunigung liegt je nach untersuchter Polyol- und Isocyanat-Kombination zwischen Faktor 2 und Faktor 100. Insgesamt betrachtet, nimmt der Faktor der Reaktionsbeschleunigung bei Verwendung von TiPOSS besonders überraschend für das verwendete HDI-Trimer Isocyanurat zu und im geringerem Maße für IPDI.

<u>Fazit für die SPUR-Technologie:</u>

Da die Reaktion zwischen den DMC-Polyolen und IPDI-Isocyanat die entscheidende Reaktion für die kommerzielle Herstellung von SPUR ist (Hybrid-Polymere), kommt dieser Erkenntnis eine große Bedeutung zu. Da wir schon bei Raumtemperatur und 1 : 1 Stöchiometrie eine erhebliche Reaktionssteigerung feststellen können, ist zu erwarten, dass bei den üblichen Bedingungen der SPUR-Prepolymer Herstellung mit erheblich geringeren Katalysatormengen (1/5 bis 1/10) und / oder einer und / oder Temperaturabsenkung (< 80°C) und / oder einer Verkürzung der Reaktionszeit auszugehen ist. Da bei dieser Herstellung die Bildung von Nebenprodukten zu einer unerwünschten Viskositätserhöhung führt, ist somit eine deutliche Verbesserung der Reaktionsführung und Produktqualität zu erwarten.

Im Hinblick auf die immer größer werdende wirtschaftliche Bedeutung der SPUR-Produkte ist mit der Anwendung des TiPOSS-Katalysators sowohl ein Kostenvorteil gegenüber Zinn-Katalysatoren als auch ein Produktvorteil zu erwarten.

a) Propylenglykolpolyole, Ethylenglykol-getippt

Um zu beurteilen, ob diese Beobachtungen auch auf reaktivere Polyetherpolyole übertragbar sind, wurden exemplarisch Polyetherpolyole mit MW~4000 und f=2 sowie MW -4850 und f=3 untersucht, die endständig über "getippte" Ethoxygruppen verfügen. Es wurde gefunden, dass die Reaktivitätsunterschiede der mit TiPOSS und DBTDL katalysierten Polyolsysteme bei Verwendung des reaktiven Polyethertriols geringer ausfallen. Auch hier ist wieder zu beobachten, dass die Reaktivitätsbeschleunigung der Vernetzung durch TIPOSS besonders wirkungsvoll für das HDI-Trimer ist.

2.) Untersuchung der Aktivität von TiPOSS / DBTL in Silanterminierten Polyurethanen

Die Bestimmung der Fadenzieh- und Durchhärtegeschwindigkeit an silanterminierten Polyurethanen erfolgte an 6 mm SPUR-Platten, die durch Vermischen der silanterminierten Polyurethane mit jeweils 0,2 Gewichtsprozent TiPOSS und DBTL (jeweils in Lösung, 20%ig in DINP) hergestellt wurden. Die Vermischung erfolgte unter Luftausschluss in einer Argon-Inertgasatmosphäre mit einem konventionellen Propellerrührer. Das vermischte Material wurde bei 23°C/50 % r.Lf. ausgehärtet.

3.) Untersuchung der Aktivität von TiPOSS / DBTDL in Polyurethan-Weichschaumrezepturen

Die Polyol A-Komponente bestand aus einem reaktiven, mit Ethoxygruppen getippten Polyethertriol, (Rokopol

M 5020, f=3), Wasser und dem Katalysator TiPOSS, das in Diisononylphthalat (DINP) als 20%ige Lösung vorlag. Zum Vergleich der katalytischen Aktivität wurde eine entsprechende gleiche Polyol-A-Komponente unter Verwendung von DBTDL hergestellt. Die Katalysatormenge betrug jeweils 0,2 Gewichtsprozent (ohne Berücksichtigung des Lösungsmittels DINP). Vergleichsweise wurde die Umsetzung unter Verwendung eines weniger reaktionsfreudigen Polypropylenpolyols (Rokopol D 2002, f=2) durchgeführt.

Als Vernetzungskomponente wurde das Isocyanat P-MDI (Voranate M230) eingesetzt. Die Umsetzung zwischen Polyol-A- und Isocyanat-B-Komponente erfolgte durch Verrühren der beiden Komponenten für 10 s bei 2500 U/min mit einem konventionellen Propellerrührer. Die Umsetzung erfolgte stöchiometrisch. Nach Beendigung des Rührprozesses wurde die erhaltene Reaktionsmasse (20 g) in Becher gegossen. Die Aushärtecharakteristik wurde anhand der Start- und Klebfreizeit bestimmt.

Es wurde gefunden, dass die Aktivität des TiPOSS bei Verwendung von ethoxylierten Polyolen vergleichbar zu der des DBTDL ist. Demgegenüber wird der Aushärteprozess bei der Rezeptur, die aus einem reinen Polypropylenpolyol aufgebaut ist, durch TiPOSS stärker beschleunigt.

4.) Untersuchung der Aktivität von TiPOSS / Zinnoctoat in einer Polyurethan-Blockschaumrezeptur

Die Polyol A-Komponente bestand aus einem Standardpolyesterpolyol auf Basis Desmophen 2200 B, einem Aminkatalysator (N,N-Dimethylpiperazin und N-N-Dimethylhexadecylamin), Zellstabilisatoren, Wasser und dem Katalysator TiPOSS, welches in DINP als 20%ige Lösung vorlag. Zum Vergleich der katalytischen Aktivität wurde eine entsprechende gleiche Polyol-A-Komponente unter Verwendung von Zinnoctoat hergestellt. Die Katalysatormenge an TiPOSS und Zinnoctoat betrug jeweils 0,03 Gewichtsprozent.

Als Vernetzungskomponenten wurden das Isocyanat Desmodur T65 und ein Prepolymer mit einem NCO-Gehalt von ca. 12 % eingesetzt. Die Umsetzung erfolgte im stöchiometrischen Verhältnis (Index 100). Die Umsetzung zwischen Polyol-A- und den Isocyanat-B-Komponenten erfolgte durch Verrühren der beiden Komponenten für 10 s bei 1000 U/min mit einem Visco Jet-Rührorgan. Nach Beendigung des Rührprozesses wurde die erhaltene Reaktionsmasse (~ 400 g) in eine 2 L Holzbox gegossen und die Aushärtecharakteristik anhand der Start-und Klebfreizeit bestimmt.

Es wurde gefunden, dass die Aktivität des TiPOSS vergleichbar zu der des Zinnoctoats ist. Die erhaltenen Schäume aus der Umsetzung mit TiPOSS besitzen ein geringeres Raumgewicht, die Festigkeitseigenschaften und die Stauchhärte sind dementsprechend geringer.

5.) Gesamtfazit / Anwendungen

a) Verwendung von TiPOSS bei der Herstellung von SPUR-Prepolymeren

Die beschriebene starke Reaktionssteigerung der Reaktion zwischen den DMC-Polyolen und IPDI kann für die kommerzielle Herstellung von SPUR (Hybrid-Polymere) verwendet werden. Dabei ist vom Einsatz erheblich geringer Katalysatormengen (1/5 bis 1/10) und / oder einer Temperaturabsenkung (< 80°C) und / oder einer Verkürzung der Reaktionszeit auszugehen. Da im Allgemeinen bei dieser Herstellung die Bildung von Nebenprodukten zu einer unerwünschten Viskositätserhöhung führt, ist somit eine deutliche Verbesserung der Reaktionsführung und Produktqualität einschließlich geringerer Produktviskosität (sehr wichtig für den Formulierer) möglich.

b) Herstellung von KOH-basierten PU-Prepolymeren mit TiPOSS

Der Aufbau von Prepolymeren, die aus der Reaktion von KOH-basierten Polyolen und aliphatischen und aromatischen Isocyanaten erhalten werden, können mit erheblich geringeren Katalysatormengen TiPOSS (1/5 bis 1/10) und / oder einer und / oder Temperaturabsenkung (< 80°C) und / oder einer Verkürzung der Reaktionszeit hergestellt werden. Da bei dieser Herstellung die Bildung von Nebenprodukten zu einer unerwünschten Viskositätserhöhung führt, ist somit von einer deutlichen Verbesserung der Reaktionsführung und Produktqualität auszugehen.

c) Verwendung von TiPOSS in 2-komponentigen Klarverguss-Systemen und PU-Lacken auf Basis von HDI und anderen aliphatischen Isocyanaten

Durch Einsatz von TiPOSS als Katalysator wird die Aushärtegeschwindigkeit in 2-komponentigen Polyurethan Klarverguss-Systemen und PU-Lacken gesteigert. Durch die Erhöhung des Molekulargewichtes werden die mechanischen Eigenschaften der Lacke und Vergussmassen deutlich verbessert.

d) TDI-Schäume / Einsatz von TiPOSS bei der Herstellung von Blockschäumen

Bei der Herstellung von TDI-basierten Blockschäumen kann durch Verwendung von TiPOSS als Katalysator auf die Verwendung von gesundheitsbedenklichen Zinnverbindungen - wie bei allen anderen unter 5.) genannten Anwendungen - verzichtet werden. Die Produktqualität nimmt dabei keine Einbußen.

e) FIPFG (foamed in place foam gaskets) - Dichtungsschäume

Die Herstellung von 2-komponentigen Polyurethansystemen für den FIPFG-Prozess basierend auf einer TiPOSS-katalysierten Aushärtung ist besonders vorteilhaft, da der Aushärteprozess durch die höhere Reaktivität des TiPOSS gegenüber DBTL beschleunigt wird. Die Polyurethanprodukte können darüber hinaus ohne gesundheitsbedenkliche Zinnverbindungen hergestellt werden können, dass besonders für die Herstellung von Dichtungsmaterialien im medizinischen Bereich, Küchenwendungen, etc. wichtig ist.

f) Verwendung von TiPOSS in feuchtigkeitshärtenden 1-K-Isocyanat-terminierten Prepolymeren

Die Aushärtung von 1-K-Isocyanat-terminierten Prepolymeren kann durch die Verwendung von TiPOSS beschleunigt werden. Auf den Einsatz von gesundheitsbedenklichen Zinnverbindungen kann verzichtet werden. Dies hat eine besondere Relevanz bei Verwendung dieser Prepolymere als Klebstoffe für übliche Fußbodenbeläge, da somit eine mögliche Kontamination, wenn auch nur geringer Mengen Zinn, über die Fußhaut vermieden werden kann.

6.) Specific embodiments

Studies on the activity of Heptaisobutyl-POSS-Titanium(IV)-Ethoxide TiPOSS in comparison to DBTL

Tabelle 1:

| Isocyanate | Catalyst | Polyols from the KOH-catalyzed reaction<br>f = 2, MW = 2000, PO<br>f = 2, MW = 4000, PO, EO tipped<br>f = 3, MW = 4800, PO, EO tipped |
|---|---|---|
| P-MDI* | TiPOSS 0,2% vs.<br>DBTL 0,2 % | + |
| **Isocyanate** | **Catalyst** | **Polyols from the DMC-catalyzed reaction**<br>f = 2, MW = 8000, PO<br>f = 2, MW = 12000, PO<br>f = 2, MW = 18000, PO |
| P-MDI | TiPOSS 0,2% vs.<br>DBTL 0,2 % | ++ |

Tabelle 2:

| SPUR | Catalyst | activity |
|---|---|---|
| Silylated Polyurethane (non aromatic) | TiPOSS 0,2% vs. DBTL 0,2 % | + |

Abkürzungsverzeichnis:

Coatings, Adhesives, Sealants, Elastomers (CASE)
Diisononylphthalat (DINP)
Dibutylzinndilaurat (DBTDL oder DBTL)
Zinn(II)-2-ethylhexanoat (Zinnoctoat)
silylierten Polyurethane / silylierte Polyurethanharze (SPUR)
Heptaisobutyl POSS-Titanium(IV)-Ethoxid (TiPOSS)
Dimethylcyclosilaxan (DMC)
Polyurethan (PU)
Kaliumhydroxid (KOH)
FIPFG (engl. foamed in place foam gaskets - Dichtungsschäume)
Titan (Ti)
Polyhedral oligomeric silsesquioxane (POSS)

**Ausführungsformen, insbesondere zu den Beispielen IV**

1. Verfahren zur Herstellung von Prepolymeren durch Umsetzung einer Komponente A mit einer Komponente B in Gegenwart eines Katalysators in einem flüssigen Medium, wobei Komponente A ein Polyol und Komponente B eine quervernetzende Komponente (Quervernetzer) darstellen, dadurch gekennzeichnet, dass die Komponente A gegenüber der Komponente B im Unterschuss vorliegt, insbesondere Komponente A und Komponente B in einem Verhältnis von mindestens 1:1,05, vorzugsweise von 1:2,2 eingesetzt werden, und der Katalysator ausgewählt ist aus der Gruppe der zinnfreien polyedrischen, oligomeren Metallosilsesquinoxanen, vorzugsweise aus der Gruppe der Titan(IV)-Polyoctahedralsilsesquinoxane.

2. Verfahren zur Herstellung von Polyurethanen durch Zusammenbringen eines Zweikomponentensystems mit einer Komponente A und einer Komponente B in Gegenwart eines Katalysators in einem flüssigen Medium, wobei Komponente A ein Polyol und Komponente B eine quervernetzende Komponente (Quervernetzer) darstellen, dadurch gekennzeichnet, dass die Komponenten A und B getrennt vorliegen, und der Katalysator vorzugsweise mit der Komponente A formuliert ist, und die Komponente A und B in einem Verhältnis von 1,2:1,0 bis zu 1,0:1,2 vorliegen.

3. Verfahren zur Herstellung von Polyurethan-Systemen dadurch gekennzeichnet, dass die Prepolymere hergestellt oder herstellbar nach einem der Ausführungsformen 1 oder 2 unter Verwendung eines Katalysators ausgewählt ist aus der Gruppe der zinnfreien polyedrischen, oligomeren Metallosilsesquinoxanen, vorzugsweise aus der Gruppe der Titan(IV)-Polyoctahedralsilsesquinoxane.

4. Verfahren nach Ausführungsform 3, dadurch gekennzeichnet, dass die Prepolymere vor der Umsetzung mit Aminosilanen funktionalisiert werden.

5. Verfahren nach einer der vorherigen Ausführungsformen, dadurch gekennzeichnet, dass Hilfsstoffe zugegeben werden.

6. Verfahren nach Ausführungsform 5, dadurch gekennzeichnet, dass die Hilfsstoffe ausgewählt sind aus der Gruppe bestehend aus Wasser, Zellstabilisatoren, Aminkatalysatoren, Füllstoffen, Haftvermittlern, Feuchtigkeitsfängern, Weichmachern, UV-Stabilisatoren, Tixothropiermitteln, oder Kombinationen daraus bestehen, wobei vorzugsweise ein oder mehrere Additive ein bzw. mehrere Silane sind.

7. Verfahren nach Ausführungsform 6, dadurch gekennzeichnet, dass der Aminkatalysator N,N-Dimethylpiperazin und/oder N,N-Dimethylhexadecylamin oder eine Mischungen daraus sein kann.

8. Verfahren nach einer der vorherigen Ausführungsformen, dadurch gekennzeichnet, dass der Katalysator $R^1$-POSS-Titanium(IV)-Ethoxid (TiPOSS) ist, wobei $R^1$ ein Alkyl, Allyl- oder Arylrest ist oder Mischungen daraus, bevorzugt $R^1$ ein Heptaisobutyl-Rest ist.

9. Verfahren nach einer der vorherigen Ausführungsformen, dadurch gekennzeichnet, dass der Katalysatorgehalt zwischen 0,0001 und 5 Gew.-%, vorzugsweise zwischen 0,001 und 2 Gew.-% liegt, weiter bevorzugt zwischen 0,01 und 0,3 Gew.-% liegt, besonders bevorzugt bei 0,2 liegt, weiter besonders bevorzugt bei 0,03 liegt.

10. Verfahren nach einer der vorherigen Ausführungsform, dadurch gekennzeichnet, dass der Quervernetzer ein Isocyanat ist.

11. Verfahren nach Ausführungsform 10, dadurch gekennzeichnet, dass das Isocyanat aromatisch und/oder aliphatisch ist, bevorzugt Methylendiphenylisocyanate (MDI) und/oder Isophorondiisocyant (IPDI) und/oder ein Hexamethylendiisocyanat-Trimer (HDI-Trimer) oder eine Mischung daraus ist.

12. Verfahren nach einer der vorherigen Ausführungsformen, dadurch gekennzeichnet, dass das Polyol ein Polyoxypropylendiol ist, bevorzugt mit einem Molgewicht zwischen 2000 g/mol und 18000 g /mol ist, besonders bevorzugt mit einem Molgewicht zwischen 12000 g/mol und 18000 g/mol ist.

13. Verfahren nach einer der vorherigen Ausführungsformen 1 bis 11, dadurch gekennzeichnet, dass das Polyol ein ethoxyliertes Polyol ist, bevorzugt ein mit Ethoxygruppen getipptes Polyethertriol ist, besonders bevorzugt eine Molmasse zwischen 2000 g/mol und 4850 g/mol aufweist.

14. Verfahren nach einer der Ausführungsformen 1 bis 11, dadurch gekennzeichnet, dass das Polyol ein Polyesterpolyol ist, bevorzugt Desmophen 2200 B ist.

15. Verfahren nach einer der vorherigen Ausführungsformen, dadurch gekennzeichnet, dass das Polyol einer KOH- und/oder DMC-katalysierten Reaktion entstammt.

16. Verfahren nach einer der vorherigen Ausführungsformen, dadurch gekennzeichnet, dass das flüssige Medium ein organisches Lösungsmittel, bevorzugt Diisonoylphthalat (DINP), ist.

17. Verfahren nach einer der vorherigen Ausführungsformen, dadurch gekennzeichnet, dass es zinnfrei ist.

## Patentansprüche

1. Verwendung mindestens einer Metall-Siloxan-Silanol(-at)-Verbindung zur selektiven Katalyse der Gelreaktion in einem System für die Herstellung von Polyurethanen.

2. Verwendung mindestens einer Metall-Siloxan-Silanol(-at)-Verbindung für die Herstellung ungeschäumter Polyurethane, insbesondere von Elastomeren und/oder Vergussmassen.

3. Verwendung mindestens einer Metall-Siloxan-Silanol(-at)-Verbindung zur Herstellung von Weichschäumen, insbesondere Polyurethan-Weichschäumen.

4. Verwendung mindestens einer Metall-Siloxan-Silanol(-at)-Verbindung zur Herstellung von Hartschäumen, insbesondere Polyurethan-Hartschäumen.

**5.** Verwendung nach einem der vorstehenden Ansprüche, wobei das System ein Zwei-Komponenten (2K) System ist.

**6.** Verwendung nach Anspruch 5, **dadurch gekennzeichnet, dass** das Zwei-Komponenten (2K) System eine Komponente A und eine Komponente B umfasst, wobei die Metall-Siloxan-Silanol(-at)-Verbindung(en), vorzugsweise zusammen mit Komponente A umfassend mindestens ein hydroxyfunktionalisiertes Polymer oder mit Komponente B umfassend mindestens eine ein oder mehrere Isocyanat-Gruppen aufweisende Verbindung, formuliert vorliegt.

**7.** Verwendung nach Anspruch 1, 2, 5 oder 6, wobei das ungeschäumte Polyurethan eine Dichte im Bereich nach DIN EN ISO 845:2009-10 von 800 bis 1950 $kg/m^3$ aufweist, bevorzugt im Bereich von 950 bis 1750 $kg/m^3$, besonders bevorzugt im Bereich von 980 bis 1650 $kg/m^3$, ganz besonders bevorzugt im Bereich von 990 bis 1600 $kg/m^3$.

**8.** Verwendung nach Anspruch 1, 2, 5 bis 7, wobei das ungeschäumte Polyurethan eine ShoreA-Härte nach ASTM D2240-15 im Bereich von 0-100 aufweist, bevorzugt im Bereich von 5 bis 95, bevorzugt im Bereich von 10 bis 90, besonders bevorzugt im Bereich von 15 bis 85.

**9.** Verwendung nach Anspruch 1, 3, 5 oder 6, wobei der Weichschaum eine ShoreA-Härte nach ASTM D2240-15 im Bereich von 0-100 aufweist, bevorzugt im Bereich von 20 bis 95, bevorzugt im Bereich von 20 bis 60, besonders bevorzugt im Bereich von 20 bis 50.

**10.** Verwendung nach Anspruch 1, 3, 5, 6 oder 9, wobei der Weichschaum eine Zugfestigkeit nach DIN EN ISO 1798:2008-04 zwischen 180 und 400 kPa aufweist, bevorzugt zwischen 200 und 380 kPa, besonders bevorzugt zwischen 200 und 350 kPa.

**11.** Verwendung nach Anspruch 1, 4 bis 6, wobei der Hartschaum eine ShoreD-Härte nach ASTM D2240-15 im Bereich von 0 bis 100 aufweist, bevorzugt im Bereich von 15 bis 100, bevorzugt im Bereich von 20 bis 95, besonders bevorzugt im Bereich von 25 bis 90.

**12.** Verwendung nach Anspruch 1, 4 bis 6 oder 11, wobei der Hartschaum eine Zugfestigkeit nach ISO 1926:2009-12 zwischen 100 und 2500 kPa aufweist, bevorzugt zwischen 150 und 2250 kPa, besonders bevorzugt zwischen 200 und 2000 kPa.

**13.** Verwendung nach einem der Ansprüche nach einem der vorstehenden Ansprüche **dadurch gekennzeichnet, dass** das System einen Wasserfänger umfasst und der Anteil des Wasserfangers maximal 5,0 Gew.-%, bevorzugt maximal 3,5 Gew.-%, besonders bevorzugt maximal 2,5 Gew.-%, ganz bevorzugt maximal 1,5 Gew.-%, äußerst bevorzugt maximal 1 Gew.-% an der Gesamtzusammensetzung des Systems beträgt.

**14.** Verwendung nach einem der vorherigen Ansprüche, **dadurch gekennzeichnet, dass** die Metall-Siloxan-Silanol(-at)-Verbindung die allgemeine Formel $R^*_qSi_rO_sM_t$ aufweist, wobei jeder R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl,-OH und -O-(C1-bis C10-Alkyl), jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

**15.** Verwendung nach einem der vorherigen Ansprüche **dadurch gekennzeichnet, dass** die Metall-Siloxan-Silanol(-at)-Verbindung eine allgemeinen Struktur (I) aufweist,

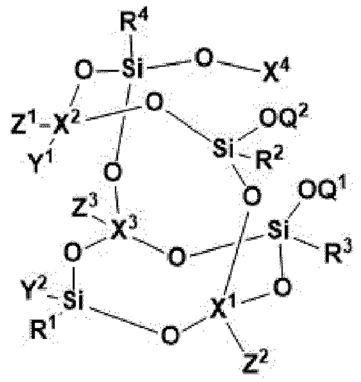

(I)

wobei

$X^1$, $X^2$ und $X^3$ unabhängig voneinander ausgewählt sind aus Si oder $M^1$, wobei $M^1$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi;
insbesondere bevorzugt aus der Gruppe bestehend aus Zn, Ti, Zr, Hf, V, Fe, Sn und Bi, $Z^1$, $Z^2$ und $Z^3$ unabhängig voneinander ausgewählt sind aus der Gruppe bestehend aus $L^2$, $R^5$, $R^6$ und $R^7$, wobei $L^2$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^2$ ausgewählt ist aus der Gruppe bestehend aus -OH, -O-Methyl, -O-Ethyl, -O-Propyl, -O-Butyl, -O-Octyl, -O-Isopropyl, und -O-Isobutyl;
$R^1$, $R^2$, $R^3$, $R^4$, $R^5$, $R^6$ und $R^7$ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
$Y^1$ und $Y^2$ unabhängig voneinander $-O-M^2-L^3_\Delta$ bedeuten, oder $Y^1$ und $Y^2$ zusammengenommen sind und zusammen $-O-M^2(L^3_\Delta)-O-$ oder -O- bedeuten, wobei $L^3$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^3$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^2$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
$X^4$ $-M^3L^1_\Delta$ oder $M^3$ bedeutet und $Q^1$ und $Q^2$ H oder jeweils eine Einfachbindung verknüpft mit $M^3$ bedeuten, wobei $L^1$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^1$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $M^3$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, oder
$X^4-M^3L^1_\Delta$, bedeutet und $Q^2$ H oder eine Einfachbindung verknüpft mit $M^3$ bedeutet und $Q^1$ H, $M^4L^4_\Delta$ oder $-SiR^8$ bedeutet, wobei $M^4$ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

und wobei $L^4$ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei $L^4$ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei $R^8$ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,

oder

$X^4$, $Q^1$ und $Q^2$ unabhängig voneinander $-M^3L^1_\Delta$ bedeuten,

oder

$X^4$ $-Si(R^8)-O-M^3L^1_\Delta$ bedeutet, $Q^2$ eine Einfachbindung verknüpft mit dem Si-Atom von $X^4$ bedeutet und $Q^1$ $-M^4L^4_\Delta$ bedeutet,

oder

$X^4$ $-Si(R^8)-O-M^3L^1_\Delta$ bedeutet, $Q^2$ eine Einfachbindung verknüpft mit dem Si-Atom von $X^4$ bedeutet und $Q^1$ eine Einfachbindung verknüpft mit dem $M^3$-Atom von $X^4$ bedeutet.

16. Verwendung nach einem der vorherigen Ansprüche **dadurch gekennzeichnet, dass** die Metall-Siloxan-Silanol(-at)-Verbindung die Strukturformel (II)

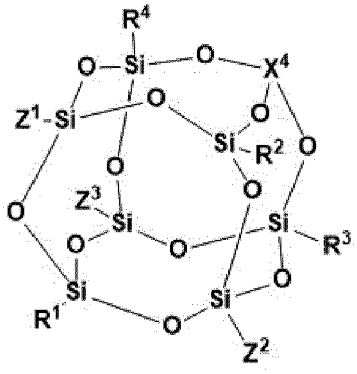

(II)

aufweist, wobei $X^4$, $R^1$, $R^2$, $R^3$, $R^4$, $Z^1$, $Z^2$ und $Z^3$ gemäß Anspruch 15 definiert sind.

17. Verwendung nach Anspruch 16 **dadurch gekennzeichnet, dass** die Metall-Siloxan-Silanol(-at)-Verbindung der Struktur (IV) ein Metall-Silsesquioxan ist,

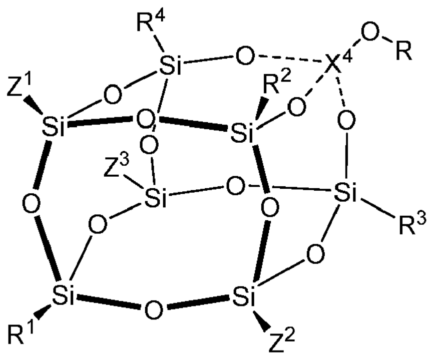

(IV)

wobei

- $X^4$ ausgewählt aus der Gruppe ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti

und Sn, ganz besonders bevorzugt Ti ist, und

- $X^4$ mit OR verknüpft ist, wobei R ausgewählt ist aus der Gruppe bestehend aus-H, -Methyl, -Ethyl, -Propyl, -Butyl, -Octyl, -Isopropyl, und -Isobutyl, $Z^1$, $Z^2$ und $Z^3$ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und $R^1$, $R^2$, $R^3$ und $R^4$ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

**18.** Verwendung nach Anspruch 17 **dadurch gekennzeichnet, dass** die Metall-Siloxan-Silanol(-at)-Verbindung ein Metall-Silsesquioxan der Struktur (IVb) ist,

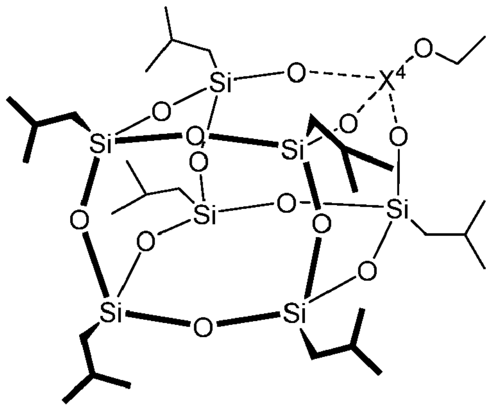

(IVb)

wobei

- $X^4$ ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti (ergo Heptaisobutyl POSS-Titanium(IV)-Ethoxid (TiPOSS) ist) und Sn (ergo Heptaisobutyl POSS-Zinn(IV)-Ethoxid (SnPOSS) ist), ganz besonders bevorzugt Ti (ergo Heptaisobutyl POSS-Titanium(IV)-Ethoxid (TiPOSS) ist) ist.

**19.** Verwendung nach einem der vorherigen Ansprüche **dadurch gekennzeichnet, dass** das hydroxyfunktionalisierte Polymer in Komponente A ausgewählt ist aus der Gruppe bestehend aus Polyoxyalkylendiole oder Polyoxyalkylentriole, insbesondere Polyoxyethylen- und Polyoxypropylendi- und -triole, Polyole höher Funktionalität wie Sorbitol, Pentaerythrit gestartete Polyole, Ethylenoxid (EO)-terminierte Polyoxypropylenpolyole, Polyesterpolyole, Styrol-Acrylnitril, Acryl-Methacrylat, (Poly)harnstoff gepfropfte oder enthaltende Polyetherpolyole, Polycarbonatpolyole, $CO_2$-Polyole, Polyhydroxyfunktionelle Fette und Öle, insbesondere Rizinusöl, Polykohlenwasserstoffpolyole wie Dihydroxypolybutadien, Polytetrahydrofuran basierte Polyether (PTMEG), OH-terminierte Prepolymere auf der Basis der Reaktion eines Polyether- oder Polyesterols mit einem Diisocyanat, Polyalkylendiole, Polyesterpolyole oder Mischungen daraus, bevorzugt Polyalkylendiole, Polyesterpolyole, oder Mischungen daraus.

**20.** Verwendung nach einem der vorherigen Ansprüche **dadurch gekennzeichnet, dass** die ein oder mehrere Isocyanat-Gruppen aufweisende Verbindung in Komponente B ausgewählt ist aus der Gruppe bestehend aus aromatischen und/oder aliphatischen Isocyanaten (Iso) der allgemeinen Struktur (VI) oder Mischungen daraus,

$$R^x\text{-}(N=C=O)_z \qquad (VI)$$

wobei

- $R^x$ eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte

C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine optional substituierte C4- bis C14-Cycloalkylgruppe oder eine optional substituierte C4-bis C14-Arylgruppe bedeutet, ganz besonders bevorzugt Diphenylmethan, Toluol, Dicylohexylmethan, Hexan oder Methyl-3,5,5-trimethylcyclohexyl bedeutet,
- z mindestens 1 ist, bevorzugt mindestens 2 oder 3 ist.

**21.** Verwendung nach Anspruch 20 **dadurch gekennzeichnet, dass** mindestens ein Isocyanat (Iso) der allgemeinen Struktur (VI) ausgewählt ist aus der Gruppe bestehend aus polymerem, oligomerem oder monomerem Methylendiphenylisocyanat (MDI), insbesondere von polymerem Methylendiphenylisocyanat (Poly-MDI), 4,4'-Methylendiphenylisocyanat (4,4'-MDI), 2,4'-Methylendiphenylisocyanat (2,4'-MDI), 2,2'-Methylendiphenylisocyanat (2,2'-MDI), 4,4'-Diisocyanatodicyclohexylmethan ($H_{12}$MDI), 2-Methylpentamethylen-1,5-diisocyanat, 1,12-Dodecamethylendiisocyanat, Lysin-und Lysinesterdiisocyanat, Cyclohexan-1,3-diisocyanat, Cyclohexan-1,4-diisocyanat, Perhydro-2,4'-diphenylmethandiisocyanat, Perhydro-4,4'-diphenylmethandiisocyanat, 1,4-Diisocyanato-2,2,6-trimethylcyclohexan (TMCDI), 3-Isocyanatmethyl-3,5,5-trimethylcyclohexylisocyanat (= Isophorondiisocyanat oder IPDI), 1,6-Hexamethylendiisocyanat (HDI) oder das Trimer daraus (HDI-Trimer), 2,2,4-Trimethyl-1,6-hexamethylendiisocyanat und/oder 2,4,4- 1,4-Bis-(isocyanat)cyclohexan, 1,4-Bis-(isocyanat)benzol (PPDI), 1,3- und/oder 1,4-Bis-(isocyanatomethyl)-cyclohexan, m- und/oder p-Xylylendiisocyanat (m- und/oder p-XDI), m- und/oder p-Tetramethyl-1,3-xylylendiisocyanat, m- und/oder p-Tetramethyl-1,4-xylylendiisocyanat, Bis-(1-Isocyanato-1-methylethyl)-naphthalin, 1,3-Bis(isocyanat-4-methyl-phenyl)-2,4-dioxo-1,3-diazetidin, Naphthalin-1,5-diisocyanat (NDI), 3,3'-Dimethyl-4,4'-diisocyanatodiphenyl (TODI), 2,4- und/oder 2,6-Toluylendiisocyanat (TDI), 1,3-Bis(isocyanatmethyl)benzol oder Mischungen davon, bevorzugt polymerem Methylendiphenylisocyanat (Poly-MDI), 4,4'-Methylendiphenylisocyanat (4,4'-MDI) oder Isophorondiisocyanat (IPDI), 1,6-Hexamethylendiisocyanat (HDI) oder das Trimer daraus (HDI-Trimer) oder Mischungen davon, ganz besonders bevorzugt polymerem Methylendiphenylisocyanat (Poly-MDI), 4,4'-Methylendiphenylisocyanat (4,4'-MDI) oder Isophorondiisocyanat (IPDI) oder Mischungen davon.

**22.** Verwendung nach einem der vorherigen Ansprüche **dadurch gekennzeichnet, dass** die Metall-Siloxan-Silanol(-at)-Verbindung eine Gel-/Blasreaktions-Selektivität von >1 aufweist, vorzugsweise >5, besonders bevorzugt >10, weiter bevorzugt >30, ganz besonders bevorzugt >40.

**23.** Verwendung nach einem der vorherigen Ansprüche **dadurch gekennzeichnet, dass** die Metall-Siloxan-Silanol(-at)-Verbindung mit einem Gewichtsanteil von 0,001 bis 7,5 %, bevorzugt im Bereich von 0,002 bis 1 %, besonders bevorzugt im Bereich von 0,003 bis 0,5 %, jeweils bezogen auf das Gesamtgewicht des Systems, vorliegt.

**24.** Verwendung nach einem der vorherigen Ansprüche, wobei das Treibmittel ausgewählt ist aus der Gruppe bestehend aus Wasser, Luft, Stickstoff, Kohlenstoffdioxid, Pentan, Cyclopentan, Fluorkohlenwasserstoffe oder Mischungen davon.

**25.** Zwei-Komponenten (2K) System definiert nach einem der vorherigen Ansprüche.

**26.** Verfahren zur Herstellung von ungeschäumtem Polyurethan umfassend die folgenden Schritte:

(i) Bereitstellung einer Komponente A umfassend mindestens ein hydroxyfunktionalisiertes Polymer nach einem der vorherigen Ansprüche,
(ii) Bereitstellung einer Komponente B umfassend mindestens eine ein oder mehrere Isocyanat-Gruppen aufweisende Verbindung nach einem der vorherigen Ansprüche,
(iii) zusetzen mindestens einer Metall-Siloxan-Silanol(-at)-Verbindung nach einem der vorherigen Ansprüche der Komponenten A oder B,
(iv) optional zusetzen eines Wasserfängers nach einem der vorherigen Ansprüche, mindestens einer der Komponenten A und/oder B,
(v) optional zusetzen mindestens eines Additives nach einem der vorherigen Ansprüche, mindestens einer der Komponenten A und/oder B,
(vi) zusammenbringen der Komponente A mit der Komponente B.

**27.** Verfahren zur Herstellung von Weichschäumen umfassend die folgenden Schritte:

(i) Bereitstellung einer Komponente A umfassend mindestens ein hydroxyfunktionalisiertes Polymer nach einem der vorherigen Ansprüche,

(ii) Bereitstellung einer Komponente B umfassend mindestens eine ein oder mehrere Isocyanat-Gruppen aufweisende Verbindung nach einem der vorherigen Ansprüche,
(iii) zusetzen mindestens einer Metall-Siloxan-Silanol(-at)-Verbindung nach einem der vorherigen Ansprüche der Komponenten A und/oder B,
(iv) optional zusetzen eines Wasserfängers nach einem der vorherigen Ansprüche, mindestens einer der Komponenten A und/oder B,
(v) optional zusetzen mindestens eines Additives nach einem der vorherigen Ansprüche, mindestens einer der Komponenten A und/oder B,
(vi) zusetzen eines Treibmittels mindestens einer der Komponenten A und/oder B nach einem der vorherigen Ansprüche,
(vii) zusammenbringen der Komponente A mit der Komponente B.

**28.** Verfahren zur Herstellung von Hartschäumen umfassend die folgenden Schritte:

(i) Bereitstellung einer Komponente A umfassend mindestens ein hydroxyfunktionalisiertes Polymer nach einem der vorherigen Ansprüche,
(ii) Bereitstellung einer Komponente B umfassend mindestens eine ein oder mehrere Isocyanat-Gruppen aufweisende Verbindung nach einem der vorherigen Ansprüche,
(iii) zusetzen mindestens einer Metall-Siloxan-Silanol(-at)-Verbindung nach einem der vorherigen Ansprüche der Komponenten A und/oder B,
(iv) optional zusetzen eines Wasserfängers nach einem der vorherigen Ansprüche, mindestens einer der Komponenten A und/oder B,
(v) optional zusetzen mindestens eines Additives nach einem der vorherigen Ansprüche, mindestens einer der Komponenten A und/oder B,
(vi) zusetzen eines Treibmittels mindestens einer der Komponenten A und/oder B nach einem der vorherigen Ansprüche,
(vii) zusammenbringen der Komponente A mit der Komponente B.

**29.** Ungeschäumte Polyurethane herstellbar durch ein Verfahren unter Verwendung mindestens einer Metall-Siloxan-Silanol(-at)-Verbindung nach einem oder mehreren der Ansprüche 14 bis 18.

**30.** Weichschäume herstellbar durch ein Verfahren unter Verwendung mindestens einer Metall-Siloxan-Silanol(-at)-Verbindung nach einem oder mehreren der Ansprüche 14 bis 18.

**31.** Hartschäume herstellbar durch ein Verfahren unter Verwendung mindestens einer Metall-Siloxan-Silanol(-at)-Verbindung nach einem oder mehreren der Ansprüche 14 bis 18.

**32.** Verwendung mindestens einer Metall-Siloxan-Silanol(-at)-Verbindung zur Herstellung von Weichschäumen zum Einsatz in CASE-Anwendungen (Beschichtungen, Klebstoffe, Dichtungen und Elastomere) und/oder elastomeren Materialien.

**33.** Verwendung mindestens einer Metall-Siloxan-Silanol(-at)-Verbindung zur Herstellung von Weichschäumen in Möbeln, Matratzen, Autositzen, Dichtungs- oder Akustikmaterialien.

**34.** Verwendung mindestens einer Metall-Siloxan-Silanol(-at)-Verbindung zur Herstellung von Hartschäumen in Dämmungen, Wärme- und oder Kälteisolationen oder in CASE-Anwendungen (Beschichtungen, Klebstoffe, Dichtungen und Elastomere).

Europäisches Patentamt
European Patent Office
Office européen des brevets

# EUROPÄISCHER RECHERCHENBERICHT

Nummer der Anmeldung
EP 19 20 6679

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/198084 A1 (HOLVOET SERVAAS [BE] ET AL) 13. Juli 2017 (2017-07-13)<br>* Seite 9; Beispiel 1 *<br>* Seite 8, Absatz [0133] *<br>* Seite 7, Absatz [0113] *<br>----- | 25,29 | INV.<br>C08G18/10<br>C08G18/16<br>C08G18/18<br>C08G18/20<br>C08G18/24<br>C08G18/28<br>C08G18/42<br>C08G18/48<br>C08G18/71<br>C08G18/75<br>C08G18/76<br>C08G18/79<br>C09J175/08<br><br>ADD.<br>C08G101/00 |
| X | US 2010/125123 A1 (LICHTENHAN JOSEPH D [US] ET AL) 20. Mai 2010 (2010-05-20)<br>* Seite 4; Beispiel 3 *<br>----- | 1-34 | |
| X | US 2016/046793 A1 (PHANOPOULOS CHRISTOPHER [BE] ET AL) 18. Februar 2016 (2016-02-18)<br>* Seite 13, Absatz [0166] *<br>* Formel 1;<br>Seite 13, Absatz [0168] - Absatz [0173] *<br>----- | 2-4, 7-12, 14-18, 22,23, 29,32-34 | |
| X | US 2016/264708 A1 (KLEIN RENE ALEXANDER [BE] ET AL)<br>15. September 2016 (2016-09-15)<br>* Seite 10; Beispiel 1 *<br>* Seite 10, Absatz [0127] - Absatz [0128]; Tabelle 1 *<br>----- | 1-34 | RECHERCHIERTE SACHGEBIETE (IPC)<br>C08G<br>C09J |
| X,D | US 7 737 228 B2 (HYBRID PLASTICS INC [US]) 15. Juni 2010 (2010-06-15)<br>* Seite 11; Beispiel 4 *<br>----- | 1-34 | |

Der vorliegende Recherchenbericht wurde für alle Patentansprüche erstellt

1

| Recherchenort | Abschlußdatum der Recherche | Prüfer |
|---|---|---|
| München | 14. Februar 2020 | Wohnhaas, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 19 20 6679

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2020

| Im Recherchenbericht angeführtes Patentdokument | Datum der Veröffentlichung | Mitglied(er) der Patentfamilie | Datum der Veröffentlichung |
|---|---|---|---|
| US 2017198084 A1 | 13-07-2017 | AU 2015276427 A1 | 10-11-2016 |
| | | CA 2950667 A1 | 23-12-2015 |
| | | CN 106459362 A | 22-02-2017 |
| | | EP 3157970 A1 | 26-04-2017 |
| | | JP 6615783 B2 | 04-12-2019 |
| | | JP 2017524747 A | 31-08-2017 |
| | | PL 3157970 T3 | 31-07-2019 |
| | | TR 201904143 T4 | 22-04-2019 |
| | | US 2017198084 A1 | 13-07-2017 |
| | | WO 2015193146 A1 | 23-12-2015 |
| US 2010125123 A1 | 20-05-2010 | KEINE | |
| US 2016046793 A1 | 18-02-2016 | BR 112015026706 A2 | 25-07-2017 |
| | | CA 2907816 A1 | 30-10-2014 |
| | | CN 105308109 A | 03-02-2016 |
| | | DK 2989155 T3 | 14-01-2019 |
| | | EP 2796493 A1 | 29-10-2014 |
| | | EP 2989155 A1 | 02-03-2016 |
| | | ES 2698567 T3 | 05-02-2019 |
| | | JP 6266752 B2 | 24-01-2018 |
| | | JP 2016516865 A | 09-06-2016 |
| | | MX 366504 B | 11-07-2019 |
| | | PL 2989155 T3 | 29-03-2019 |
| | | PT 2989155 T | 17-01-2019 |
| | | RU 2015150161 A | 26-05-2017 |
| | | SI 2989155 T1 | 31-12-2018 |
| | | TR 201819143 T4 | 21-01-2019 |
| | | US 2016046793 A1 | 18-02-2016 |
| | | WO 2014173638 A1 | 30-10-2014 |
| US 2016264708 A1 | 15-09-2016 | CA 2928771 A1 | 07-05-2015 |
| | | CN 105793327 A | 20-07-2016 |
| | | EP 2865704 A1 | 29-04-2015 |
| | | EP 3063209 A1 | 07-09-2016 |
| | | PL 3063209 T3 | 30-05-2018 |
| | | RU 2016120766 A | 01-12-2017 |
| | | US 2016264708 A1 | 15-09-2016 |
| | | WO 2015062759 A1 | 07-05-2015 |
| US 7737228 B2 | 15-06-2010 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2989155 B1
- EP 2796493 A1


### In der Beschreibung aufgeführte Nicht-Patentliteratur


- **A. FARKAS ; K. G. FLYNN.** *J. Am. Chem. Soc.,* 1960, vol. 82, 642
- **MARIS et al.** *J. Cel. Plastics,* 2005, vol. 41, 305-322